(19) **Europäisches Patentamt / European Patent Office / Office européen des brevets**

(11) **EP 1 789 925 B1**

(12) **EUROPÄISCHE PATENTSCHRIFT**

(45) Veröffentlichungstag und Bekanntmachung des Hinweises auf die Patenterteilung:
**13.02.2008 Patentblatt 2008/07**

(21) Anmeldenummer: **06792286.4**

(22) Anmeldetag: **27.09.2006**

(51) Int Cl.:
***G06T 7/60*** *(2006.01)*

(86) Internationale Anmeldenummer:
**PCT/EP2006/009387**

(87) Internationale Veröffentlichungsnummer:
**WO 2007/039202 (12.04.2007 Gazette 2007/15)**

(54) **VORRICHTUNG, VERFAHREN UND COMPUTERPROGRAMM ZUM ERMITTELN EINER INFORMATION ÜBER EINE FORM UND/ODER EINE LAGE EINER ELLIPSE IN EINEM GRAPHISCHEN BILD**

DEVICE, METHOD AND COMPUTER PROGRAM FOR DETERMINING AN ITEM OF INFORMATION CONCERNING A SHAPE AND/OR A POSITION OF AN ELLIPSE IN A GRAPHICAL IMAGE

DISPOSITIF, PROCEDE ET PROGRAMME INFORMATIQUE POUR DETERMINER DES INFORMATIONS RELATIVES A LA FORME ET/OU A L'EMPLACEMENT D'UNE ELLIPSE DANS UNE IMAGE GRAPHIQUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **30.09.2005 DE 102005047160**

(43) Veröffentlichungstag der Anmeldung:
**30.05.2007 Patentblatt 2007/22**

(73) Patentinhaber:
• **Fraunhofer-Gesellschaft zur Förderung der angewandten Forschung e.V.
80686 München (DE)**
• **Technische Universität Ilmenau
98693 Ilmenau (DE)**

(72) Erfinder:
• **KLEFENZ, Frank
68159
Mannheim (DE)**
• **KATZMANN, Johannes
99848
Watha-Farnroda (DE)**
• **HOLLAND-NELL, Christian
98587
Steinbach-Hallenberg (DE)**
• **HUSAR, Peter
66424
Homburg (DE)**

(74) Vertreter: **Zinkler, Franz et al
Schoppe, Zimmermann, Stöckeler & Zinkler
Postfach 246
82043 Pullach bei München (DE)**

(56) Entgegenhaltungen:
**DE-A1- 19 750 835**

• **GONEID A ET AL: "A method for the Hough transform detection of circles and ellipses using a 1-dimensional array" SYSTEMS, MAN, AND CYBERNETICS, 1997. COMPUTATIONAL CYBERNETICS AND SIMULATION., 1997 IEEE INTERNATIONAL CONFERENCE ON ORLANDO, FL, USA 12-15 OCT. 1997, NEW YORK, NY, USA, IEEE, US, Bd. 4, 12. Oktober 1997 (1997-10-12), Seiten 3154-3157, XP010249080 ISBN: 0-7803-4053-1**
• **HO C ET AL: "A fast ellipse/circle detector using geometric symmetry" PATTERN RECOGNITION, ELSEVIER, KIDLINGTON, GB, Bd. 28, Nr. 1, Januar 1995 (1995-01), Seiten 117-124, XP004014038 ISSN: 0031-3203**
• **WONG A K C ET AL: "Robotic vision: 3D object recognition and pose determination" INTELLIGENT ROBOTS AND SYSTEMS, 1998. PROCEEDINGS., 1998 IEEE/RSJ INTERNATIONAL CONFERENCE ON VICTORIA, BC, CANADA 13-17 OCT. 1998, NEW YORK, NY, USA,IEEE, US, Bd. 2, 13. Oktober 1998 (1998-10-13), Seiten 1202-1209, XP010311553 ISBN: 0-7803-4465-0**

- **KLEFENZ F., OBERLE M., MÄNNER R.: "VLSI Implementierung eines parallelen Hough-Transformations-Prozessors mit dynamisch nachladbaren Mustern" REIHE INFORMATIK, Bd. 22/95, 1995, XP002415048**

**Beschreibung**

Die vorliegende Erfindung bezieht sich im Allgemeinen auf eine Vorrichtung, ein Verfahren und ein Computerprogramm zum Ermitteln einer Information über eine Form und/oder eine Lage einer Ellipse in einem graphischen Bild, im Speziellen auf ein Konzept zur Echtzeit-Ellipsen-Erkennung.

Ellipsenerkennung ist überall da anwendbar, wo kreisförmige Objekte im Raum lokalisiert werden müssen, da k-reisförmige Objekte je nach Betrachtungswinkel als Ellipsen abgebildet werden. Beispielsweise wird in der Medizintechnik die Ellipsenerkennung zur Bestimmung der Blickrichtung eingesetzt. Aus einer exakten Position der ellipsenförmigen Abbildung der kreisförmigen Pupille kann auf die Position des Auges (eye-tracking) und daraus auf die Blickrichtung eines Menschen (oder Tieres) geschlussfolgert werden. In der Technik allgemein wird Ellipsen-Erkennung z.B. für Positionierungsaufgaben von Objekten oder zur Erkennung von Bohrlöchern, Tankstutzen, Lebensmitteln wie beispielsweise Obst oder Stückgütern wie Maschinenbauteilen oder Kaffeetassen benötigt.

Vor einer Erkennung einer Ellipse in einem Eingangsbild (auch als Ellipse-Fitting bezeichnet), wird das Eingangsbild über einen Schwellwert und einen Kantenoperator oder über einen Kantenoperator und einen Schwellwert zu einem binären Kantenbild transformiert. Das dadurch erhaltene Kantenbild enthält die durch Artefakte gestörte unvollständige Kontur der Ellipse.

Es wird darauf hingewiesen, dass gemäß dem Stand der Technik mehrere Verfahren zur Erkennung von Ellipsen bekannt sind. Beispielsweise kann zur Erkennung einer Ellipse eine direkte Anpassung, bei der eine quadratische Abweichung minimiert wird (auch als Direct Least-Square-Fitting bezeichnet), verwendet werden. Bei einer derartigen direkten Ellipsenanpassung bzw. bei einem derartigen direkten Ellipsenfitting nach Fitzgibbon werden alle Kantenpunkte des binären Kantenbildes für eine direkte Berechnung der Ellipsenparameter eingegeben. Nach der Anwendung der entsprechenden Rechenvorschrift werden Ellipsenparameter ausgegeben, die die Punktmenge (also alle Kantenpunkte des binären Kantenbildes bzw. zumindest eines Ausschnitts aus dem Kantenbild) am besten beschreiben. Dabei wird eine Summe von Abweichungsquadraten zwischen Punkten des binären Kantenbildes und einer angepassten bzw. gefitteten Ellipse minimiert.

Bei dem beschriebenen Verfahren hat jeder verwendete Punkt, also beispielsweise jeder im Kantenbild enthaltene Punkt, einen Einfluss auf die zu berechnenden Ellipsenparameter. Störpunkte, die nicht zu einer zu identifizierenden Ellipse gehören, verursachen durch ihren großen Abstand zu der zu identifizierenden Ellipse eine große Abweichung der Ellipsenparameter, da ein Abstandsquadrat der Störpunkte von der Ellipse (oder von dem Mittelpunkt der Ellipse) einen bestimmenden Einfluss auf die Größe der Abweichung der Ellipsenparameter hat. Ein Vorteil des beschriebenen Verfahrens ist eine hohe erzielbare Ausführungsgeschwindigkeit. Nachteile des beschriebenen Verfahrens bestehen darin, dass die zu identifizierende Ellipse vor der Verarbeitung aufwendig von Störkanten und/oder Artefakten in dem Kantenbild isoliert werden muss. Dazu müssen Störkanten und Artefakte von Ellipsen unterschieden werden können. Ein weiterer Nachteil des beschriebenen Verfahrens besteht darin, dass weder die Dauer der direkten Ellipsenanpassung bzw. des direkten. Ellipsenfittings noch die Dauer einer Vorverarbeitung unabhängig von einem Bildinhalt ist. Zur Echtzeit-Ellipsenerkennung aus Videodaten muss deshalb immer Zeit freigehalten werden, um auch aufwendige Bilder bearbeiten zu können. Nur so kann die Bearbeitung aller Bilder eines Video-Datenstroms garantiert werden.

Weiterhin wird darauf hingewiesen, dass von Paul V.C. Hough in dem Artikel "Machine Analysis of Bubble Chamber Pictures" (Proceedings of the International Conference on high-energy accelerators and instrumentation, L.Kowarski, editor, Geneva, 14th -19th September 1959) eine sog. Hough-Transformation, vorgestellt wurde. Die Hough-Transformation ist weiterhin auch in dem US-Patent US 3,069,654 mit dem Titel "Method and means for recognizing complex patterns" beschrieben.

Weiterhin beschreibt die Europäische Patentschrift EP 1 032 891 B1 ein Verfahren und eine Einrichtung zur Detektion und Koinzidenzbringung abschnittsweise in monotone und stetige Trajektorien wandelbarer Signalformen.

Bei der Anwendung der Hough-Transformation müssen die zu erkennenden Kurven in einer parameterabhängigen Form, also in Form einer parametrisierten (Kurven-) Gleichung beschrieben sein. Beispielsweise kann eine Gerade durch eine Geradengleichung der Form

$$y = mx + n;$$

x,y - Achsen;
m,n - Geradenparameter;

beschrieben werden. In ähnlicher Weise kann ein Kreis durch eine Kreisgleichung der Form

$$r^2 = (x - x_0)^2 + (y - y_0)^2 ;$$

x,y - Achsen;
$x_0$, $y_0$ - Koordinaten des Mittelpunktes;
r - Radius;
beschrieben werden.

Die Merkmale aus dem bereits beschriebenen Kantenbild, im einfachsten Fall die Bildpunkte (x, y), werden bei der Hough-Transformation in die Kurvengleichung eingesetzt, und es werden daraufhin diejenigen Parameterkombinationen bestimmt, die die jeweilige Gleichung bzw. Kurvengleichung lösen. Diese Lösungsmengen oder "Voten", die die möglichen Parameterkombinationen bezeichnen, werden in einen Akkumulator-Raum übereinander eingetragen. Liegen alle Punkte auf einer Kurve, die durch die bei der Hough-Transformation verwendete parameterabhängige Kurvengleichung (für bestimmte Parameterwerte) beschreibbar ist, so entspricht die Schnittmenge aller Lösungsmengen der Parameterkombination der gesuchten Kurve. Im allgemeinen beschreiben hohe Werte in dem Akkumulator häufige Parameterkombinationen. Deren Akkumulator-Koordinaten beschreiben somit Parameterkombinationen der gefundenen Kurven. Der verwendete Akkumulator besitzt hierbei so viele Dimensionen, wie die Kurvengleichung freie Parameter besitzt.

Im Folgenden wird das Verfahren der Standard-Hough-Transformation für die Identifizierung einer Ellipse bzw. für die Bestimmung der Ellipsenparameter einer Ellipse beschrieben. Es wird darauf hingewiesen, dass eine Ellipse mit fünf verschiedenen (skalaren und reellwertigen) Parametern beschrieben werden. Hierbei können zwei Mittelpunktkoordinaten der Ellipse, üblicherweise als $x_0$ und $y_0$ oder als $x_m$ und $y_m$ bezeichnet, zwei Halbachsenlängen, üblicherweise mit a und b bezeichnet, und der Drehwinkel der Ellipse, typischerweise mit $\alpha_{dreh}$ bezeichnet, verwendet werden. Dabei sind die Parameter üblicherweise auf ein (bevorzugt rechtwinkliges) Referenzkoordinatensystem bezogen.

Die zu einem gewählten Punkt des Kantenbildes gehörigen Voten bestehen bei der Anwendung der Standard-Hough-Transformation für eine Identifizierung von Ellipsen aus Kombinationen der fünf Parameter, die alle eine Ellipse durch den gerade gewählten Punkt des Kantenbildes beschreiben. Die Voten werden in einen fünfdimensionalen Akkumulator kumulativ addiert. Nach Bearbeitung aller Kantenpunkte in dem Kantenbild beschreibt das Maximum in dem Akkumulator die Ellipsenparameter einer in dem Kantenbild vorhandenen Ellipse. Die Vorteile des beschriebenen Verfahrens sind eine zuverlässige und robuste Erkennung der in dem Kantenbild vorhandenen Ellipsen und eine hohe Unabhängigkeit von Störungen in dem Kantenbild.

Ein Nachteil des beschriebenen Verfahrens gemäß der Standard-Hough-Transformation ist die extrem lange und vom Bildinhalt abhängige Berechnungszeit. Für jeden Kantenpunkt müssen nämlich alle Kombinationen von Werten aus fünf Wertebereichen berücksichtigt werden, wobei die fünf Wertebereiche die oben genannten Parameter der Ellipse beschreiben. Ein weiterer Nachteil des beschriebenen Verfahrens ist ein extrem hoher Speicherbedarf. Der verwendete fünfdimensionale Akkumulator besteht nämlich aus $n = n_{x0} \cdot n_{y0} \cdot n_a \cdot n_b \cdot n_{dreh}$ Elementen, wobei $n_x$ die Anzahl der untersuchten diskreten möglichen Werte der x-Koordinate des Ellipsenmittelpunkts beschreibt, und wobei $n_{y0}$, $n_a$, $n_b$ und $n_{dreh}$ weiterhin die Anzahl der möglichen diskreten Parameterwerte für die übrigen Ellipsenparameter angeben. Es sei ferner darauf hingewiesen, dass ein weiterer Nachteil der Verwendung der Standard-Hough-Transformation für die Erkennung von Ellipsen in der aufwändigen Implementierung mit wenigen Möglichkeiten zur Parallelisierung der Berechnung besteht.

Es sei hier darauf hingewiesen, dass im Hinblick auf die Anwendung der Hough-Transformation für die Identifizierung von Ellipsen Varianten existieren, bei denen der Parameterraum eingeschränkt wird. Die Wertebereiche der Parameter werden beispielsweise durch Wissen über die zu suchende Ellipse verkleinert. Ein solches Vorwissen kann aus der Auswertung von vorherigen Videobildern oder aus Wissen über die Abbildungsgeometrie und die abzubildenden Objekte abgeleitet werden. Ferner kann die Speicherung des fünfdimensionalen Akkumulators durch eine Teilung in zweidimensionale Schichten mit konstanten Parameterwerten (a, b, $\alpha_{dreh}$) umgangen werden. Die zweidimensionalen Schichten mit konstanten Parameterwerten (a, b, $\alpha_{dreh}$) können hierbei getrennt bearbeitet werden. Weiterhin ist es möglich, nicht alle Merkmale (bzw. Kanten-Punkte) zu benutzen. Es kann vielmehr ausreichend sein, eine zufällige Auswahl der Punkte durchzuführen. Dieses Vorgehen wird als eine randomisierte Hough-Transformation (randomised hough-transform) bezeichnet.

Weiterhin sind Verfahren zur Aufteilung des Parameterraums im Zusammenhang mit der Hough-Transformation bekannt. Ebenso existieren Gradienten-basierte Verfahren. Bei diesen Verfahren bestehen die Merkmale nicht mehr aus einzelnen Punkten bzw. Einzelpunkten, sondern aus Gruppen von zwei Punkten sowie zugehörigen Richtungen der Grauwertgradienten. Daher wird das Verfahren als Gradienten-basiertes Verfahren bezeichnet. Durch die genannten höherdimensionalen Merkmale vereinfacht sich der Akkumulator zu zwei zweidimensionalen Akkumulatoren (je Mittelpunkt und Rotation/Achsenverhältnis) und einem eindimensionalen Akkumulator (Ellipsengröße). Ein Vorteil des genannten Verfahrens ist eine drastische Verringerung der Bearbeitungszeit gegenüber der Standard-Hough-Transformation. Nachteile des Verfahrens bestehen darin, dass Gradientenoperatoren zusätzlich auf das Grauwertbild angewandt werden müssen, und dass nicht mehr nur eine lineare Abhängigkeit der Berechnungszeit von der Anzahl an Kantenpunkten gegeben ist, sondern eine quadratische, da bevorzugt alle Zweiergruppen von Punkten gebildet werden müssen. Dadurch sinkt die Effizienz bei einer Echtzeit-Bearbeitung. Ein weiterer Nachteil des beschriebenen Verfahrens besteht in der aufwändigen Implementierung. Ferner bestehen nur wenige Möglichkeiten der Parallelisierung der Berechnung.

Die Veröffentlichung "A method for a Hough-transform detection of circles and ellipses using a one-dimensional array" von A. Goneid, S. El-Gindi und A. Sewisy (Veröffentlicht: 1997 International Conference on Computational Cybernetics and Simulation; Orlando, Florida; 12-15 October 1997) beschreibt ein Verfahren zur Detektion von Kreisen und Ellipsen in Binärbildern unter Verwendung einer Hough-Transformation und eines ein-dimensionalen Akkumulator-Felds. Das Verfahren schreitet in zweite Stufen voran: eine erste Stufe detektiert N Kantenpunkte in einem Bild der Größe M x M, sowohl in horizontalen und vertikalen Durchläufen, um symmetrische Achsen unter Verwendung zweier eindimensionaler Felder zu konstruieren. Ein Schnittpunkt der Achsen bestimmt einen Mittelpunkt des Objekts. Eine zweite Stufe bestimmt verbleibende Objektparameter unter Verwendung einer Fitting-Prozedur.

Die Veröffentlichung "A fast ellipse/circle detector using geometric symmetry" von C. T. Ho und L. H. Chen (Veröffentlicht: Pattern Recognition, Elsevier, Kidlington, GB Band 28, Nr. 1, Januar 1995) beschreibt einen Ellipsen-Erkenner unter Verwendung einer geometrischen Symmetrie. Das beschriebene Verfahren identifiziert zunächst Kandidaten von Mittelpunkten von Ellipsen und Kreisen. In der Zwischenzeit werden gemäß diesen Kandidaten-Mittelpunkten alle Merkmalspunkte in einem Eingangsbild in mehrere Unterbilder gruppiert. Dann werden durch nochmalige Anwendung geometrischer Symmetrie alle Ellipsen und Kreise für jedes Unterbild erhalten.

In Anbetracht des oben beschriebenen Standes der Technik ist es daher die Aufgabe der vorliegenden Erfindung, ein Konzept zum Ermitteln einer Information über eine Form und/oder eine Lage einer Ellipse in einem graphischen Bild zu schaffen, das eine schnelle Ermittlung mindestens eines Ellipsenparameters einer in dem graphischen Bild vorhandenen Ellipse erlaubt.

Diese Aufgabe wird durch eine Vorrichtung zum Ermitteln einer Information über eine Form und/oder eine Lage einer Ellipse in einem graphischen Bild gemäß Anspruch 1, ein Verfahren gemäß Anspruch 33 und ein Computerprogramm gemäß Anspruch 35 gelöst.

Die vorliegende Erfindung schafft eine Vorrichtung zum Ermitteln einer Information über eine Form und/oder eine Lage einer Ellipse in einem graphischen Bild, wobei das Bild eine erste Richtung und eine zweite Richtung aufweist, mit einer Koordinatenbestimmungseinrichtung zum Ermitteln von zwei Koordinaten eines ersten Ellipsenpunktes, der einen am weitesten in der ersten Richtung gelegenen Punkt der Ellipse darstellt, und zum Ermitteln von zwei Koordinaten eines zweiten Ellipsenpunktes, der einen am weitesten in einer der ersten Richtung entgegengesetzten Richtung gelegenen Punkt der Ellipse darstellt. Die Koordinatenbestimmungseinrichtung ist ferner ausgelegt, um mindestens einen Parameter eines ersten gebogenen Liniensegments, das die Ellipse an dem ersten Ellipsenpunkt oder in einer Umgebung des ersten Ellipsenpunktes annähert, zu bestimmen, und um basierend auf dem mindestens einem Parameter des ersten gebogenen Liniensegments die Koordinaten des ersten Ellipsenpunktes zu bestimmen. Die Koordinatenbestimmungseinrichtung ist ferner ausgelegt, um mindestens einen Parameter eines zweiten gebogenen Liniensegments, das die Ellipse an dem zweiten Ellipsenpunkt oder in einer Umgebung des zweiten Ellipsenpunktes annähert, zu bestimmen, und um basierend auf dem mindestens einen Parameter des zweiten gebogenen Liniensegments die Koordinaten des zweiten Ellipsenpunktes zu bestimmen. Ferner umfasst die erfindungsgemäße Vorrichtung eine Ellipsenberechnungseinrichtung zum Berechnen mindestens eines Ellipsenparameters der Ellipse, basierend auf den zwei Koordinaten des ersten Ellipsenpunktes und den zwei Koordinaten des zweiten Ellipsenpunktes. Der mindestens eine Ellipsenparameter stellt hierbei die Information über die Form und/oder die Lage der Ellipse dar. Der Parameter eines gebogenen Liniensegments beschreibt hierbei die Lage und/oder die Form des gebogenen Liniensegments.

Es ist der Kerngedanke der vorliegenden Erfindung, dass es vorteilhaft ist, die Bestimmung von Parametern einer in einem graphischen Bild vorhandenen Ellipse in mehrere Schritte aufzuteilen, die sowohl die Identifizierung von ausgezeichneten Ellipsenpunkten in dem graphischen Bild durch die Koordinatenbestimmungseinrichtung als auch die Durchführung von analytischen Berechnungen durch die Ellipsenberechnungseinrichtung umfassen. Die vorliegende Erfindung beruht hierbei auf der Erkenntnis, dass Parameter einer Ellipse bestimmt werden können, wenn die Koordinaten von zwei zu der Ellipse gehörigen Punkten, die die am weitesten in einer ersten Richtung und einer der ersten Richtung entgegengesetzten Richtung gelegenen Punkte der Ellipse darstellen, bekannt sind. Der erste Ellipsenpunkt und der zweite Ellipsenpunkt stellen damit ausgezeichnete Punkte in dem vorgegebenen Koordinatensystem, das durch die erste Richtung und die zweite Richtung festgelegt ist, dar und können auch als "Extrempunkte" bezeichnet werden, da ihnen ja die Eigenschaft zugeordnet ist, am weitesten in der ersten Richtung, der der ersten Richtung entgegengesetzten Richtung gelegen zu sein. Ferner wurde erkannt, dass eine zu identifizierende Ellipse in der Umgebung des ersten Ellipsenpunktes und des zweiten Ellipsenpunktes, allgemein also in der Umgebung der Extrempunkte, jeweils durch ein entsprechendes gebogenes Liniensegment angenähert werden kann, dem Parameter hinsichtlich der Lage und/oder Krümmung zugeordnet werden können. Ferner hat es sich gezeigt, dass es vorteilhaft ist, mindestens einen Parameter des ersten gebogenen Liniensegments, das die Ellipse an dem ersten Ellipsenpunkt oder in einer Umgebung des ersten Ellipsenpunktes annähert, zu bestimmen, und um basierend auf dem mindestens einen Parameter des ersten gebogenen Liniensegments, die Koordinaten des ersten Ellipsenpunktes zu bestimmen. Dies ist insoweit vorteilhaft, als bei dem Bestimmen des Parameters des ersten gebogenen Liniensegments eben nach einem Kurvenverlauf gesucht wird, der die Ellipse an dem ersten Punkt annähern kann. Somit ist sichergestellt, dass der erste Ellipsenpunkt zuverlässig identifiziert werden kann, da der erste Ellipsenpunkt durch ein gebogenes Liniensegment, das die Ellipse an dem ersten Ellipsenpunkt annähert, und eben nicht durch einen einzelnen Punkt identifiziert wird. Dadurch ist sichergestellt, dass Störungen in dem graphischen Bild (beispielsweise zusätzliche Kanten oder sonstige Artefakte) die Erkennung des ersten Ellipsenpunktes nicht beeinträchtigen. In ähnlicher Weise können auch die Koordinaten des zweiten Ellipsenpunktes besonders zuverlässig dadurch identifiziert werden, dass der zweite Ellipsenpunkt durch ein gebogenes Liniensegment, das die Ellipse an dem zweiten Ellipsenpunkt oder in einer Umgebung des zweiten Ellipsenpunktes annähert, definiert wird. Die Parameter der gebogenen Liniensegmente, die beispielsweise eine Lage und/oder eine Krümmung der gebogenen Liniensegmente angeben, können hierbei für einen Rückschluss auf Koordinaten des ersten Ellipsenpunktes und des zweiten Ellipsenpunktes genutzt werden. Somit kann schließlich in einem analytischen Berechnungsschritt, basierend auf den bestimmten Koordinaten des ersten Ellipsenpunktes und des zweiten Ellipsenpunktes mindestens ein Parameter der Ellipse berechnet werden, wobei ein sehr geringer Rechenaufwand anfällt.

Das erfindungsgemäße Konzept zum Ermitteln einer Information über die Form und/oder die Lage einer Ellipse in dem graphischen Bild verbindet somit die Vorteile eines mustererkennenden Verfahrens, bei dem Parameter von gebogenen Liniensegmenten, die die Ellipse an dem ersten Ellipsenpunkt oder an dem zweiten Ellipsenpunkt annähern, bestimmt werden, mit den Geschwindigkeitsvorteilen einer analytischen Berechnung.

Durch die Bestimmung von Parametern eines gebogenen Liniensegments, das die Ellipse an dem ersten Ellipsenpunkt oder an dem zweiten Ellipsenpunkt annähert, kann hierbei sichergestellt werden, dass der erste Ellipsenpunkt und der zweite Ellipsenpunkt sehr zuverlässig erkannt werden. Einzelne Störpunkte werden hierbei unterdrückt, da diese sich bei der Bestimmung von Parametern eines gebogenen Liniensegments, also bei der Bestimmung von Parametern eines geometrisch wohldefinierten Objekts, nicht bzw. nicht wesentlich auswirken.

Ferner sei darauf hingewiesen, dass ein gebogenes Liniensegment durch eine geringe Anzahl von Parametern, beispielsweise durch zwei skalare Lage-Parameter und einen Form-Parameter, der beispielsweise die Krümmung beschreibt, beschrieben werden kann, während hingegen zur Beschreibung der gesamten Ellipse fünf Parameter erforderlich sind. Somit können Parameter der Liniensegmente, die der Ellipse an dem ersten Ellipsenpunkt und an dem zweiten Ellipsenpunkt annähern, mit wesentlich geringerem Rechenaufwand bestimmt werden als die Parameter der Ellipse selbst. Mit anderen Worten, das Problem der Erkennung einer geometrischen Figur mit fünf Parametern (nämlich einer Ellipse) wird auf das Problem der Erkennung von zumindest zwei gebogenen Liniensegmenten mit höchstens zwei oder drei unbekannten Parametern, gefolgt von einer analytischen Berechnung reduziert. Eine Identifizierung eines gebogenen Linienverlaufs (bzw. eines gebogenen Liniensegments), der durch zwei oder drei Parameter gekennzeichnet ist, weist allerdings eine wesentlich geringere Komplexität auf als die Identifizierung eines Kurvenverlaufs, der durch fünf Parameter charakterisiert ist. Daher ist das erfindungsgemäße Verfahren wesentlich schneller und mit geringerem Aufwand realisierbar als herkömmliche Verfahren.

Ferner ist das erfindungsgemäße Verfahren durch die Identifizierung von gebogenen Liniensegmenten wenig empfindlich gegenüber einzelnen störenden Punkten in dem graphischen Bild oder gegenüber in dem graphischen Bild zusätzlich zu gesuchten Ellipse enthaltenen geraden Linienzügen. Es wird darauf hingewiesen, dass sich das erfindungsgemäße Verfahren somit für eine echtzeitfähige Ellipsenerkennung eignet.

Ferner wird darauf hingewiesen, dass die Identifizierung von Parametern von gebogenen Linienzügen, die die zu identifizierende Ellipse annähern, sehr effizient in Hardware realisierbar ist, wobei ein großes Potential zur Parallelisierung besteht. Die Ellipsenberechnungseinrichtung hingegen muss eine im Vergleich mit der konventionellen Lösung geringere Datenmenge verarbeiten und kann damit mit geringerem Aufwand realisiert werden.

Schließlich eignet sich das erfindungsgemäße Konzept zum Ermitteln einer Information über die Form und/oder Lage einer Ellipse in einem graphischen Bild auch ganz allgemein sehr gut für eine Parallelisierung, da eine große Anzahl von Berechnungen gleichzeitig ausgeführt werden können.

Bei einem weiteren bevorzugten Ausführungsbeispiel ist die Koordinatenbestimmungseinrichtung ausgelegt, um weiterhin mindestens eine Koordinate eines dritten Ellipsenpunktes, der einen am weitesten in der zweiten Richtung gelegenen Punkt der Ellipse darstellt, zu berechnen. Die Koordinatenbestimmungseinrichtung ist in diesem Fall bevorzugt ausgelegt, um mindestens einen Parameter eines dritten gebogenen Liniensegments, das die Ellipse an dem dritten Ellipsenpunkt oder in einer Umgebung des dritten Ellipsenpunktes annähert, zu bestimmen, und um basierend auf dem mindestens einen Parameter des dritten gebogenen Liniensegments eine Koordinate des dritten Ellipsenpunktes zu bestimmen. Ferner ist die Ellipsenberechnungseinrichtung in diesem Fall bevorzugt ausgelegt, um mindestens einen Ellipsenparameter der Ellipse, basierend auf den zwei Koordinaten des ersten Ellipsenpunktes, den zwei Koordinaten des zweiten Ellipsenpunktes und der einen Koordinate des dritten Ellipsenpunktes zu berechnen.

Es hat sich nämlich gezeigt, dass bei Kenntnis von zwei Koordinaten des ersten Ellipsenpunktes, von zwei Koordinaten des zweiten Ellipsenpunktes und von mindestens einer Koordinate des dritten Ellipsenpunktes alle Parameter der Ellipse berechnet werden können. Somit sind neben den Mittelpunktkoordinaten der Ellipse, die schon aus dem ersten Ellipsenpunkt und dem zweiten Ellipsenpunkt alleine bestimmbar sind, auch eine Länge einer ersten Halbachse, eine Länge einer zweiten Halbachse sowie eine Drehung (bzw. Rotationswinkel) der Ellipse berechenbar. Die Verwendung von mindestens einer Koordinate des dritten Ellipsenpunktes ermöglicht somit eine vollständige Charakterisierung der Ellipse.

Bei dem weiteren bevorzugten Ausführungsbeispiel ist das Bild ein Rasterbild, das eine Mehrzahl von Bildpunkten umfasst, die in einer Mehrzahl von Rasterzeilen und/oder in einer Mehrzahl von Rasterspalten angeordnet sind. Die Ellipse ist hierbei durch eine Mehrzahl von Bildpunkten, die Ellipsenpunkte bilden, beschrieben. Das erste gebogene Liniensegment, das zweite gebogene Liniensegment und/oder das dritte gebogene Liniensegment ist hierbei durch eine Mehrzahl benachbarter Bildpunkte beschreibbar. Ferner wird bevorzugt davon ausgegangen, dass ein gebogenes Liniensegment durch mindestens drei, besser aber mindestens vier benachbarte Bildpunkte beschrieben ist. Die Beschreibung eines Liniensegments durch mehrere Bildpunkte erlaubt eine besonders vorteilhafte Durchführung einer Mustererkennung, um das erste Liniensegment, das zweite Liniensegment oder das dritte Liniensegment zu identifizieren und die Parameter desselben zu bestimmen.

Ferner wird es bevorzugt, dass die Koordinatenbestimmungseinrrchtung ausgelegt ist, um unter Verwendung der Rasterzeilen und/oder der Rasterspalten des Bildes eine Mustererkennung durchzuführen, um in einem durch eine Mehrzahl von Rasterzeilen und/oder Rasterspalten gebildeten zu analysierenden Bildausschnitten des Bildes einen Kurvenverlauf zu identifizieren, der das erste gebogene Liniensegment bildet. Es ist hierbei anzumerken, dass es sich bei dem zu analysierenden Bildausschnitt des Bildes auch um das gesamte Bild handeln kann. Ferner ist anzumerken, dass bevorzugter Weise die Koordinatenbestimmungseinrichtung ausgelegt ist, um in dem zu analysierenden Bildausschnitt weiterhin einen Kurvenverlauf oder zwei Kurvenverläufe zu identifizieren, der/die das zweite gebogene Liniensegment und/oder das dritte gebogene Liniensegment bildet/bilden.

Ferner ist die Koordinatenbestimmungseinrichtung bevorzugt ausgebildet, um mindestens einen Parameter, beispielsweise einen Lageparameter (beispielsweise x-Koordinate und/oder y-Koordinate) und/oder einen Formparameter (beispielsweise einen Krümmungsradius) des identifizierten Kurvenverlaufs zu bestimmen. Es hat sich nämlich gezeigt, dass in einem rasterisierten Bild besonders vorteilhafter Weise ein Kurvenverlauf identifiziert werden kann, der das erste gebogene Liniensegment oder das zweite gebogene Liniensegment oder das dritte gebogene Liniensegment bildet. Es ist nämlich in einem rasterisierten Bild durch Konfiguration einer Mustererkennungseinrichtung auf die Erkennung von vorgegebenen rasterisierten Vergleichsmustern besonders leicht möglich, gebogene Kurvenverläufe zu beschreiben, die eine Ellipse an dem ersten Ellipsenpunkt, dem zweiten Ellipsenpunkt und/oder dem dritten Ellipsenpunkt annähern.

Weiterhin wird es bevorzugt, dass die Koordinatenbestimmungseinrichtung ausgelegt ist, um unter Verwendung der Rasterzeilen und/oder der Rasterspalten in dem durch eine Mehrzahl von Rasterzeilen und/oder Rasterspalten gebildet zu analysierenden Bildausschnitt des Bildes den Kurvenverlauf zu identifizieren, der das erste gebogene Liniensegment bildet, indem überprüft wird, ob der zu analysierende Bildausschnitt einen Kurvenverlauf enthält; der zu einem Referenzkurvenverlauf aus einer Menge von möglichen Referenzkurvenverläufen bezüglich eines vorgegebenen Ähnlichkeitsmaßes hinreichend ähnlich ist, wobei die Menge von Referenzkurvenverläufen zulässige Verläufe des ersten gebogenen Liniensegments für verschiedene Parameter des ersten Liniensegments beschreiben. In ähnlicher Weise kann die Koordinatenbestimmungseinrichtung bevorzugt ausgelegt sein, um in einem zu analysierenden Bildausschnitt des Bildes Kurvenverläufe zu identifizieren, die das zweite gebogene Liniensegment und/oder das dritte gebogene Liniensegment bilden. Das vorgegebene Ähnlichkeitsmaß kann beispielsweise vorschreiben, dass mindestens eine vorgegebene Anzahl von Bildpunkten eines in dem zu analysierenden Bildausschnitt vorhandenen Kurvenverlaufs mit zu dem jeweiligen Referenzkurvenverlauf gehörigen Bildpunkten übereinstimmen. In ähnlicher Weise kann festgelegt sein, dass der in dem zu analysierenden Bildausschnitt enthaltene Kurvenverlauf zu dem betrachteten Referenzkurvenverlauf hinreichend ähnlich ist, wenn festgestellt wird, dass Abstände zwischen Bildpunkten des in dem zu analysierenden Bildausschnitt enthaltenen Kurvenverlaufs von Bildpunkten des betrachteten Referenzkurvenverlaufs kleiner als eine vorgegebene Schwelle sind. Es kann allerdings auch jedes andere Ähnlichkeitsmaß herangezogen werden, das im Rahmen einer Mustererkennung eingesetzt werden kann. Beispielsweise kann ein in dem zu analysierenden Bildausschnitt enthaltener Kurvenverlauf als (bzgl. Des Ähnlichkeitsmaßes) hinreichend ähnlich zu einem betrachteten Referenzkurvenverlauf betrachtet werden, wenn ein bei Anwendung eines Operators auf den in dem Bildausschnitt enthaltenen Kurvenverlauf entstehender Kurvenverlauf hinreichend ähnlich zu einem Vergleichs-Kurvenverlauf ist. Bei dem Operator kann es sich beispielsweise um einen Verbiegungs-Operator handeln, und der Vergleichs-Kurvenverlauf kann beispielsweise eine gerade Linie sein.

Ferner wird es bevorzugt, dass die Koordinatenbestimmungseinrichtung ausgelegt ist, um eine Mustererkennung auf eine Mehrzahl von zu analysierenden Bildausschnitten des Bildes anzuwenden, um einen Kurvenverlauf zu identifizieren, der das erste gebogene Liniensegment bildet, und um basierend darauf, in welchem der Bildausschnitte des Bildes das erste gebogene Liniensegment identifiziert wird, den Lage-Parameter des ersten gebogenen Liniensegments zu ermitteln. Mit anderen Worten, es wird bevorzugt, ein gesamtes zu untersuchendes Bild in einer Mehrzahl zu analysierenden Bildausschnitten des Bildes aufzuteilen, und dann eine Mustererkennung separat auf die mehreren zu analysierenden Bildausschnitte anzuwenden. Es hat sich nämlich gezeigt, dass es zur Bestimmung der Parameter von gebogenen Liniensegmenten, die die Ellipse an dem ersten Ellipsenpunkt, an dem zweiten Ellipsenpunkt oder an dem dritten Ellipsenpunkt annähern, ausreichend ist, einen kleinen Ausschnitt des Bildes zu betrachten. Hierbei ist zu berücksichtigen, dass die Ellipse nur in einer begrenzten Umgebung des ersten Ellipsenpunktes, des zweiten Ellipsenpunktes oder des dritten Ellipsenpunktes hinreichend gut ein vorher bekanntes gebogenes Liniensegment (ggf. aus einer Menge von Referenzkurvenverläufen) angenähert werden kann. Daher ist eben die Analyse eines kleinen Bildausschnitts besonders vorteilhaft und verschlechtert nicht die Qualität bei der Identifizierung der Koordinaten des ersten Ellipsenpunktes, des zweiten Ellipsenpunktes und des dritten Ellipsenpunktes. Ferner ist die Verwendung zu einer Mehrzahl zu analysierenden Bildausschnitten besonders vorteilhaft, da dadurch ein Lage-Parameter des zu identifizierenden Kurvenverlaufs im Rahmen der eigentlichen Mustererkennung unberücksichtigt bleiben kann. In anderen Worten, die möglichen Referenzkurvenverläufe können bezüglich eines Lage-Parameters alle identisch sein, da ja mehrere Bildausschnitte verwendet werden, die sich in Bezug auf eben diesen Lageparameter unterscheiden. Somit kann für die Analyse eines jeden Bildausschnitts der Mahrzahl von Bildausschnitten ein wenig aufwendiges Mustererkennungsverfahren eingesetzt werden, wobei ein Lage-Parameter des zu identifizierenden gebogenen Liniensegments dadurch bestimmt wird, dass der zu analysierende Bildausschnitt verschoben wird, dass also ein gegenüber dem zuvor analysierten Bildausschnitt verschobener weiterer Bildausschnitt analysiert wird.

Es wird weiterhin bevorzugt, dass die Koordinatenbestimmungseinrichtung ausgelegt ist, um die Mustererkennung auf eine Mehrzahl von zu analysierenden Bildausschnitten des Bildes anzuwenden, wobei sich mindestens zwei Bildausschnitte aus der Mehrzahl von zu analysierenden Bildausschnitten überlappen. Die Überlappung von zu analysierenden Bildausschnitten führt dazu, dass ein Lage-Parameter (beispielsweise eine x-Koordinate oder eine y-Koordinate) des zu identifizierenden Kurvenverlaufs allein durch die Verwendung von überlappenden zu analysierenden Bildausschnitten bestimmt werden kann. Beispielsweise können die zu analysierenden Bildausschnitte jeweils nur um ein oder zwei Bildpunkte bzw. Rasterzeilen oder Rasterspalten gegeneinander verschoben sein.

Es wird ferner bevorzugt, dass die Mehrzahl von möglichen Referenzkurvenverläufen Kurvenverläufe beschreibt, die sich bezüglich der Lage und/oder Form unterscheiden, wobei den Kurvenverläufe aus der Mehrzahl von möglichen Referenzkurvenverläufen mindestens ein Parameter, der die Lage und/oder Position kennzeichnet, zugeordnet ist, und wobei die Koordinatenbestimmungseinrichtung ferner ausgelegt ist, um den Parameter des gebogenen Liniensegments, das eine zu identifizierende Ellipse an dem ersten Ellipsenpunkt, dem zweiten Ellipsenpunkt oder dem dritten Ellipsenpunkt annähert, davon abzuleiten, welcher der Kurvenverläufe aus der Mehrzahl von möglichen Referenzkurvenverläufen dem in dem zu analysierenden Bildausschnitt enthaltenen Kurvenverlauf bezüglich des Ähnlichkeitsmaßes hinreichend ähnlich ist. Somit können im Rahmen der Mustererkennung Parameter eines gebogenen Liniensegments nicht nur davon abgeleitet werden, in welchem Bildausschnitt ein Referenz-Kurvenverlauf identifiziert werden kann, sondern auch davon, welcher von mehreren möglichen Referenz-Kurvenverläufen in dem zu analysierenden Bildausschnitt identifiziert werden kann.

Dies kann unter Umständen zu einer Vereinfachung bzw. Beschleunigung der Mustererkennung führen. Auch eine Parallelisierung der Mustererkennung kann hierdurch verbessert werden.

Weiterhin wird es bevorzugt, dass die Kurvenverläufe aus der Mehrzahl von möglichen Referenzkurvenverläufen so gewählt sind, dass sie Ellipsen unterschiedlicher Form und/oder Lage an dem ersten Ellipsenpunkt und/oder dem zweiten Ellipsenpunkt und/oder dem dritten Ellipsenpunkt annähern. Die Kurvenverläufe aus der Mehrzahl von möglichen Kurvenverläufen können somit beispielsweise auch unsymmetrisch sein, da die Ellipse an dem ersten Ellipsenpunkt, dem zweiten Ellipsenpunkt oder dem dritten Ellipsenpunkt im Allgemeinen durch einen unsymmetrischen gebogenen Linienverlauf bzw. durch ein unsymmetrisch gebogenes Liniensegment angenähert wird.

Bei einem anderen bevorzugten Ausführungsbeispiel wird es allerdings bevorzugt, dass die Kurvenverläufe aus der Mehrzahl von möglichen Referenzkurvenverläufen so gewählt sind, dass sie Ausschnitte aus kreisförmigen Linien unterschiedlicher Lage und/oder unterschiedlichen Radius beschreiben. Es hat sich nämlich gezeigt, dass Ellipsen beliebiger Lage an dem ersten Ellipsenpunkt, dem zweiten Ellipsenpunkt oder dem dritten Ellipsenpunkt bzw. in einer hinreichend kleinen Umgebung des ersten Ellipsenpunktes, des zweiten Ellipsenpunktes oder des dritten Ellipsenpunktes, durch einen Ausschnitt aus einer kreisförmigen Kurve im Allgemeinen hinreichend gut angenähert werden können. Ebenso hat sich gezeigt, dass eine vergleichsweise kleine Anzahl von Ausschnitten von kreisförmigen Kurven unterschiedlicher Lage und/oder unterschiedlichen Radius ausreichend ist, um Ellipsen von stark unterschiedlichem Achsenverhältnis und mit unterschiedlichen Rotationswinkeln hinreichend gut anzunähern. Ferner eignen sich Ausschnitte aus kreisförmigen Kurven aufgrund der Symmetrie besonders gut für den Einsatz in einer Mustererkennungseinrichtung.

Mit anderen Worten, es wird bevorzugt, dass das erste gebogene Liniensegment ein Ausschnitt einer zumindest näherungsweise kreisförmigen Linie, die die Ellipse an dem ersten Ellipsenpunkt oder in einer Umgebung des ersten Ellipsenpunktes annähert, ist, und/oder dass das zweite gebogene Liniensegment ein Ausschnitt aus einer zumindest näherungsweise kreisförmigen Linie, die die Ellipse an dem zweiten Ellipsenpunkt oder in einer Umgebung des zweiten Ellipsenpunktes annähert, ist, und/oder dass das dritte gebogene Liniensegment ein Ausschnitt aus einer zumindest näherungsweise kreisförmigen Linie, die die Ellipse an dem dritten Ellipsenpunkt oder in einer Umgebung des dritten Ellipsenpunktes annähert, ist.

Bei einem weiteren bevorzugten Ausführungsbeispiel ist die Koordinatenbestimmungseinrichtung festgelegt, um ferner als zusätzliche Koordinate zumindest eine weitere Koordinate des dritten Ellipsenpunktes oder mindestens eine Koordinate eines vierten Ellipsenpunktes, der einen am weitesten in einer der zweiten Richtung entgegengesetzten Richtung gelegen Punkt der Ellipse darstellt, zu ermitteln, wobei die Ellipsenberechnungseinrichtung ausgelegt ist, um einen ersten Satz von Ellipsenparametern, der zumindest einen Ellipsenparameter umfasst, basierend auf den zwei Koordinaten des ersten Ellipsenpunktes, den zwei Koordinaten des zweiten Ellipsenpunktes und der ersten Koordinate des dritten Ellipsenpunktes zu berechnen, sowie einen zweiten Satz von Ellipsenparametern, der zumindest einen Ellipsenparameter umfasst, basierend auf den zwei Koordinaten des ersten Ellipsenpunktes, den zwei Koordinaten des zweiten Ellipsenpunktes und der zusätzlichen Koordinate zu berechnen, und um einen Ergebnis-Satz von Ellipsenparametern durch Mittelwertbildung unter Verwendung des ersten Satzes von Ellipsenparametern und des zweiten Satzes von Ellipsenparametern zu berechnen. Der Ergebnis-Satz von Ellipsenparametern stellt dabei die Information über die Form und/oder die Lage der Ellipse in dem graphischen Bild dar. In anderen Worten, durch eine Berechnung der zusätzlichen Koordinate, die typischerweise einfach möglich ist, können zwei Sätze von Ellipsenparametern berechnet werden. Durch eine Mittelwertbildung kann hierbei die Genauigkeit bei der Berechnung der Ellipsenparameter verbessert werden. Im übrigen ist es möglich, festzustellen, ob eine Abweichung zwischen dem ersten Satz von Ellipsenparametern und dem zweiten Satz von Ellipsenparametern größer als eine vorgegebene Abweichung ist. Zu diesem Zweck kann eine beliebige mathematische Norm oder ein anderes Kriterium zur Bestimmung einer Abweichung verwendet werden. Wird eine übermäßig große absolute Abweichung oder relative Abweichung zwischen dem ersten Satz von Ellipsenparametern und dem zweiten Satz von Ellipsenparametern festgestellt, so kann weiterhin eine Fehlermeldung ausgegeben werden, die anzeigt, dass die Berechnung der Ellipsenparameter ungenau ist. Die Ungenauigkeit kann beispielsweise aus einer ungenauen Ermittlung des ersten Ellipsenpunktes, des zweiten Ellipsenpunktes, des dritten Ellipsenpunktes oder des vierten Ellipsenpunktes resultieren. Eine erhebliche Ungenauigkeit kann sich auch dann ergeben, wenn die drei oder vier Ellipsenpunkte nicht zu der gleichen Ellipse gehören. Im Falle einer übermäßigen Abweichung zwischen dem ersten Satz von Ellipsenparametern und dem zweiten Satz von Ellipsenparametern, falls also die Abweichung größer als eine vorgegebene Schranke ist, kann somit signalisiert werden, dass eine fehlerhafte Erkennung oder Zuordnung der Ellipsenpunkte vorliegt.

Bei einem weiteren bevorzugten Ausführungsbeispiel ist die Koordinatenbestimmungseinrichtung ausgelegt, um zwei Koordinaten des dritten Ellipsenbildes, der einen am weitesten in der zweiten Richtung gelegene Punkt der Ellipse darstellt, und zwei Koordinaten des vierten Ellipsenpunktes, der einen am weitesten in einer der zweiten Richtung entgegengesetzten Richtung gelegenen Punkt der Ellipse darstellt, zu bestimmen. Ferner kann die Ellipsenberechnungseinrichtung ausgelegt sein, um eine Mehrzahl von verschiedenen Sätzen von drei Ellipsenpunkten aus dem ersten Ellipsenpunkt, dem zweiten Ellipsenpunkt, dem dritten Ellipsenpunkt und dem vierten Ellipsenpunkt auszuwählen, um für die mehreren ausgewählten Sätze von Ellipsenpunkten zugehörige Sätze von Ellipsenparametern zu bestimmen, und um als Information über die Form und/oder Lage der Ellipse einen gemittelten Satz von Ellipsenparametern durch Mittelung der zu den Sätzen von Ellipsenpunkten gehörigen Sätze von Ellipsenparametern zu berechnen. Die beschriebene Auslegung der Vorrichtung zum Ermitteln einer Information über eine Form und/oder eine Lage einer Ellipse in einem graphischen Bild, basiert auf der Erkenntnis, dass ein minimaler Fehler der Ellipsenparameter dann erreicht werden kann, wenn mehrere Sätze von Ellipsenpunkten ausgewertet werden. Gerade bei einer Ellipse, bei der sich das Verhältnis der Längen der Halbachsen stark von eins unterscheidet, weisen nämlich die beispielsweise die Koordinaten des ersten Ellipsenpunktes und des zweiten Ellipsenpunktes einen deutlich größeren oder deutlich kleineren Fehler auf als die Koordinaten des dritten Ellipsenpunktes und des vierten Ellipsenpunktes. Somit kann durch Verwendung von mehreren Sätzen von Ellipsenpunkten für die Berechnung der Ellipsenparameter erreicht werden, das ein Fehler unabhängig von der Lage der Ellipse näherungsweise gleich bleibt. Im Übrigen wird darauf hingewiesen, dass erkannt wurde, dass die Verwendung des ersten Ellipsenpunktes und des zweiten Ellipsenpunktes einer Verwendung des dritten Ellipsenpunktes und des vierten Ellipsenpunktes gleichwertig ist. Eine gleichzeitige Verwendung aller vier Ellipsenpunkte bei einer Berechnung der Ellipsenparameter ist allerdings typischerweise nicht empfehlenswert, da dies zu einer Überstimmung des Gleichungssystems führen würde. Es hat sich vielmehr gezeigt, dass die mehrfache Verwendung der Ellipsenparameter jeweils unter Verwendung von fünf Koordinaten in Verbindung mit einer anschließenden Mittlung hinreichend gute Ergebnisse liefert, ohne dass ein komplexes Optimierungsverfahren, dessen Ausführungszeit unbekannt ist bzw. variieren kann, verwendet werden muss.

Bei einem weiteren bevorzugten Ausführungsbeispiel ist die Koordinatenbestimmungseinrichtung ausgelegt, um zwei Koordinaten des dritten Ellipsenpunktes, der einen am weitesten in der zweiten Richtung gelegenen Punktes der Ellipse darstellt, zu ermitteln. Die Ellipsenberechnungseinrichtung ist dabei bevorzugt ausgelegt, um aus den zwei Koordinaten des ersten Ellipsenpunktes und den zwei Koordinaten des zweiten Ellipsenpunktes Mittelpunktkoordinaten der Ellipse zu berechnen. Ferner ist die Ellipsenberechnungseinrichtung bevorzugt ausgelegt, um eine Koordinatentransformation der Koordinaten des ersten Ellipsenpunktes, des zweiten Ellipsenpunktes und des dritten Ellipsenpunktes durchzuführen, um transformierte Koordinaten des ersten Ellipsenpunktes, des zweiten Ellipsenpunktes und des dritten Ellipsenpunktes zu erhalten. Die Koordinatentransformation ist bevorzugt ausgelegt, um einen durch die Mittelpunktkoordinaten beschriebenen Mittelpunkt der Ellipse in einen Koordinatenursprung zu verschieben. Daraufhin kann eine geschätzte transformierte zweite Koordinate $y_y$ des dritten Ellipsenpunktes unter Verwendung der Bestimmungsgleichung eine

$$1 = \frac{y_y}{y_x} \cdot \frac{x_y}{x_x}$$

zu berechnen.

Dabei ist $x_x$ die transformierte erste Koordinate des ersten Ellipsenpunktes, $x_y$ die transformierte zweite Koordinate des ersten Ellipsenpunktes und $x_y$ die transformierte erste Koordinate des dritten Ellipsenpunktes. Daraufhin kann basierend auf einer Abweichung zwischen der geschätzten transformierten zweiten Koordinate $y_y$ und der bei der Koordinatentransformation direkt ermittelten transformierten zweiten Koordinate des dritten Ellipsenpunktes entschieden werden, ob der bei den genannten Berechnungen verwendete dritte Ellipsenpunkt zu der durch den ersten und den zweiten Ellipsenpunkt beschriebenen Ellipse gehört. Hierbei kann beispielsweise ausgewertet werden, ob eine absolute Abweichung oder eine relative Abweichung zwischen der geschätzten transformierten zweiten Koordinate des dritten Ellipsenpunktes und der bei der Koordinatentransformation direkt ermitteln transformierten zweiten Koordinate des dritten Ellipsenpunktes größer oder kleiner als eine vorgegebene Schranke ist. Ferner kann die Vorrichtung zum Ermitteln einer Information über eine Form und/oder eine Lage einer Ellipse ausgelegt sein, um zu signalisieren, wenn der dritte Ellipsenpunkt nicht zu der durch den ersten Ellipsenpunkt und den zweiten Ellipsenpunkt verlaufenden Ellipse gehört. Beispielsweise kann die Vorrichtung also eine Fehlermeldung ausgeben, die darauf hindeutet, dass in dem zu analysierenden graphischen Bild keine Ellipse vorhanden ist, oder dass in dem zu analysierenden graphischen Bild mehrere Ellipsen vorhanden sind. Somit ist es möglich, die Zuverlässigkeit der erfindungsgemäßen Vorrichtung zum Ermitteln einer Information über eine Form und/oder eine Lage einer Ellipse weiter zu verbessern.

Bei einem weiteren bevorzugten Ausführungsbeispiel weist die Koordinatenbestimmungseinrichtung eine Mustererkennungseinrichtung auf, die ausgelegt ist, um eine Mehrzahl von zu analysierenden Rasterzeilen und/oder zu analysierenden Rasterspalten in Form einer Mehrzahl von parallelen Signalen nacheinander zu empfangen, und um die empfangenen Signale unterschiedlich schnell parallel durch eine Mehrzahl von hintereinander geschalteten Stufen weiterzuleiten, wobei mindestens eine vorbestimmte Stufe eine Summiereinrichtung umfasst, die aus der vorbestimmten Stufe auslaufende Signale summiert, um eine Spaltensumme zu bilden. Die Mustererkennungseinrichtung ist ferner bevorzugt ausgelegt, um die Spaltensumme auszuwerten, um eine Information über ein in der von der Mustererkennungseinrichtung empfangenen Rasterzeile oder Rasterspalte enthaltendes gebogenes Liniensegment zu bestimmen, wobei die Information mindestens einen Parameter des in der empfangenen Rasterzeile oder Rasterspalte enthaltenen gebogenen Liniensegments umfasst. Es hat sich nämlich gezeigt, dass Parameter eines in einem durch Rasterzeilen und/oder Rasterspalten gebildeten Bild bzw. Bildausschnitt enthaltenen Kurvenverlaufs besonders vorteilhaft bestimmt werden können, indem das Bild bzw. der Bildausschnitt durch eine Mehrzahl von parallelen Zeitsignalen dargestellt wird. Die Zeitsignale entsprechen hierbei Abtastwerten in dem Bild entlang einer Rasterzeile oder Rasterspalte. Werden mehrere, bevorzugt nebeneinander liegende, Rasterzeilen oder Rasterspalten abgetastet und somit in Zeitsignale umgewandelt, so beschreiben die gebildeten Zeitsignale den Bildinhalt des entsprechenden Bildausschnittes oder des gesamten Bildes. Eine Linie in dem Bild wird dabei typischerweise durch auf den einzelnen Signalen auftretende Impulse repräsentiert. Eine gebogene Linie in dem Bild (auch als gebogenes Liniensegment oder gebogener Kurvenverlauf bezeichnet) spiegelt sich darin wieder, dass die Impulse auf den mehreren Signalen nicht gleichzeitig, sondern zeitlich versetzt auftreten, wobei die Zeitpunkte, zu denen die Impulse auftreten, wesentlich durch die Krümmung der gebogenen Linie bestimmt werden. Werden nunmehr die Signale unterschiedlich schnell parallel durch eine Mehrzahl von hintereinander geschalteten Stufen weitergeleitet, so kann dadurch der Zeitversatz der einzelnen Signale sukzessive bzw. schrittweise ausgeglichen werden. Das heißt, in einer bestimmten Stufe kommen dann verschiedene Signale, die einer gekrümmten Linie in dem Bild zu geordnet sind, näherungsweise gleichzeitig an. Ein gleichzeitiges Eintreffen mehrere Signale in einer Stufe kann durch die zu der bestimmten Stufe gehörige Summierstufe detektiert werden, da diese bevorzugt die aus der bestimmten Stufe auslaufenden Signale summiert. Liegen in einer Stufe (z.B. also in der bestimmten Stufe) mehrere Signale gleichzeitig an, so wird das Summationsergebnis besonders groß. Somit kann basierend auf dem Summationsergebnis eine Information über ein in den von der Mustererkennungseinrichtung empfangenen Rasterzeilen und/oder Rasterspalten enthaltenes gebogenes Liniensegment abgeleitet werden. Der Zeitpunkt, zu dem eine besonders große Spaltensumme auftritt, trägt dabei eine Information über eine Lage-Parameter des gebogenen Liniensegments. Die Stufe, in der ein besonders großes Summationsergebnis auftritt, gibt dabei typischerweise eine Aussage über die Form, z.B. die Krümmung, des gebogenen Liniensegments.

Es wird ferner darauf hingewiesen, dass eine beschriebene parallele Verarbeitung von Signalen, die durch ihren zeitlichen Verlauf eine Rasterzeile oder Rasterspalte des graphischen Bildes beschreiben, eine besonders effiziente Möglichkeit zur Erkennung von gebogenen Kurven darstellt. Die beschriebene Mustererkennungseinrichtung kann parallel in Hardware realisiert werden. Mit Hilfe der beschriebenen Mustererkennungseinrichtung kann das gesamte graphische Bild oder Bildausschnitt aus dem graphischen Bild untersucht werden, wobei das Vorkommen eines gebogenen Liniensegments erkannt werden kann.

Bei einem weiteren bevorzugten Ausführungsbeispiel weist die vorbestimmte Stufe ferner eine Schwellwerterkennungseinrichtung auf, die ausgelegt ist, um die Spaltensumme einer vorbestimmten Stufe zu empfangen, und um zu erkennen, wenn mindestens eine vorgegebene Anzahl von Signalen in der vorbestimmten Stufe gleichzeitig aktiv sind. Hierbei ist die Mustererkennungseinrichtung ferner bevorzugt ausgelegt, um das Ausgangssignal der Schwellwerterkennungseinrichtung auszuwerten, um die Information über das in der von der Mustererkennungseinrichtung empfangenen Rasterzeile oder Rasterspalte enthaltene gebogene Liniensegment zu bestimmen.

Es wird darauf hingewiesen, dass bevorzugter Weise die Mustererkennungseinrichtung freilich eine Mehrzahl von Stufen und von zu den Stufen gehörigen Summiereinrichtungen und/oder Schwellwerterkennungseinrichtungen aufweist, die jeweils Signale am Eingang und/oder Ausgang der Stufen der Mustererkennungseinrichtung, durch die die Signale parallel weitergeleitet werden, auswerten. Damit können dann verschiedenartig gebogene Liniensegmente erkannt werden, wobei die Form der Biegung bzw. der Krümmungsradius der gebogenen Liniensegmente daraus abgeleitet werden kann, am Ausgang von welcher Stufe eine maximale Spaltensumme auftritt.

Weiterhin wird es bevorzugt, dass die Mustererkennungseinrichtung ausgelegt ist, um einen gekrümmten Kurvenverlauf und/oder ein gebogenes Liniensegment, der bzw. das durch die von der Mustererkennungseinrichtung empfangene Signale beschrieben wird, beim Durchlaufen der hintereinander geschalteten Stufen aufgrund einer unterschiedlich schnellen Ausbreitung der Signale schrittweise zeitlich zu verzerren, um eine zeitlich verzerrte Beschreibung des gekrümmten Kurvenverlaufs zu erhalten, und um zu erkennen, wenn durch die verzerrte Beschreibung eine näherungsweise gerade Linie beschrieben wird, die durch eine Mehrzahl oder durch eine vorgegebene Mindest-Anzahl von gleichzeitig aktiven Signalen in einer bestimmten Stufe dargestellt wird.

Weiterhin wird es bevorzugt, dass mindestens eine Stufe der Mustererkennungseinrichtung ausgelegt ist, um mehrere Signale bei der Weiterleitung durch die Stufe unterschiedlich stark zu verzögern. Durch die Einbringung von verschieden großen Verzögerungen in den einzelnen Stufen kann es erreicht werden, dass die Signale unterschiedlich schnell parallel durch eine Mehrzahl von hintereinander geschalteten Stufen weitergeleitet werden können. Eine Stufe kann beispielsweise ausgelegt sein, um auf jedes Signal genau eine von zwei möglichen Verzögerungen anzuwenden, wobei eine der Verzögerungen durch eine minimal mögliche Laufzeit durch die Stufe festgelegt sein kann. Mit anderen Worten, die Stufe kann ausgelegt sein, um ein Signal mit minimalst möglicher Verzögerung weiterzuleiten oder um eine definierte Verzögerung einzuschalten. Freilich ist es allerdings auch möglich, dass eine Stufe ausgelegt ist, um auf mehrere Signale drei oder mehr mögliche Verzögerungen anzuwenden. Im übrigen kann eine Stufe fest für eine bestimmte Verzögerung verdrahtet sein, oder die Stufe kann während des Betriebs auf eine gewünschte Verzögerung eingestellt werden. Ferner sei darauf hingewiesen, dass durch die Verwendung von verschieden großen Verzögerungen eine unterschiedlich schnelle Ausbreitung der mehreren Signale in vorteilhafter Weise erreicht werden kann.

Einem weiteren bevorzugten Ausführungsbeispiel kann also die Mustererkennungseinrichtung durch Festlegen von unterschiedlichen Verzögerungen bei der Weiterleitung der Signale durch die Stufe so ausgelegt sein, dass ein kreisförmig gebogenes Liniensegment, das in den von der Mustererkennungseinrichtung empfangenen Rasterzeilen oder Rasterspalten enthalten ist, und das durch die in die Mustererkennungseinrichtung einlaufenden Signale dargestellt wird, nach Durchlaufen einer Anzahl von Stufen näherungsweise zu einer geraden Linie deformiert wird. Hierbei ist die Mustererkennungseinrichtung bevorzugt ausgelegt ist, um das Vorhandensein der geraden Linie zu erkennen, und um festzustellen, nach Durchlaufen von wie vielen Stufen die gerade Linie vorliegt. Dabei ist die Mustererkennungseinrichtung ferner bevorzugt ausgelegt, um aus dem Zeitpunkt, zu dem ein Vorhandensein einer geraden Linie erkannt wird, und/oder aus der Anzahl der durchlaufenen Stufen, nach deren Durchlaufen ein Vorhandensein einer geraden Linie erkannt wird, mindestens einen Parameter des von der Mustererkennungseinrichtung empfangenen kreisförmig gebogenen Liniensegments abzuleiten, beispielsweise also einen Lage-Parameter oder eine Information über den Krümmungsradius des kreisförmig gebogenen Liniensegments. Die Einstellung der Verzögerung der Signale in einer Stufe ermöglicht es nämlich, dass die erfindungsgemäße Mustererkennungseinrichtung kreisförmig gebogene Liniensegmente erkennen kann. Es sei hierbei allerdings darauf hingewiesen, dass die Mustererkennungseinrichtung bevorzugt ausgelegt ist, um nur die Lage des erkannten kreisförmig gebogenen Liniensegments auszuwerten.

Ferner wird es bevorzugt, dass die Koordinatenbestimmungseinrichtung ausgelegt ist, um der Mustererkennungseinrichtung das Bild in Form von nacheinander übertragenen zu analysierenden Rasterzeilen zweimal zuzuführen. Hierbei ist die Koordinatenbestimmungseinrichtung bevorzugt ausgelegt, um der Mustererkennungseinrichtung das Bild für eine Ermittelung der zwei Koordinaten des ersten Ellipsenpunktes beginnend mit einer an einem ersten Rand des

**EP 1 789 925 B1**

Bildes gelegenen Rasterzeile des Bildes zuzuführen, und um der Mustererkennungseinrichtung das Bild für eine Ermittelung der zwei Koordinaten des zweiten Ellipsenpunktes beginnend mit einer an dem zweiten Rand des Bildes gelegenen Rasterzeile zuzuführen, wobei der zweite Rand des Bildes dem ersten Rand des Bildes gegenüberliegt. Die Mustererkennungseinrichtung ist dabei bevorzugt ausgelegt, um nur gebogene Liniensegmente einer vorgegebenen Krümmungsrichtung zu erkennen. Wird also ein Bild oder ein Bildausschnitt der Mustererkennungseinrichtung in zwei Richtungen zugeführt, so kann die Koordinatenbestimmungseinrichtung Parameter von gekrümmten Liniensegmenten mit der ersten Krümmungsrichtung und von gekrümmten Liniensegmenten mit einer entgegengesetzten zweiten Krümmungsrichtung erkennen, selbst wenn die Mustererkennungseinrichtung lediglich ausgelegt ist, um gebogene Liniensegmente mit der ersten Krümmungsrichtung zu erkennen. Somit kann also durch die zweimalige Zuführung eines Bildes oder Bildausschnitts zu der gleichen Mustererkennungseinrichtung in unterschiedlichen Richtungen darauf verzichtet werden, die Mustererkennungseinri-chtung für eine Erkennung von gebogenen Liniensegmenten mit beiden möglichen Krümmungsrichtungen zu konfigurieren. Es hat sich nämlich gezeigt, dass eine Mustererkennungseinrichtung, die Liniensegmente mit einer Krümmung sowohl in die erste Krümmungsrichtung als auch in die zweite Krümmungsrichtung identifizieren kann, wesentlich aufwändiger ist als eine Mustererkennungseinrichtung, die nur Liniensegmente mit der ersten Krümmungsrichtung erkennen kann. Damit ermöglicht es die beschriebene Maßnahme, die Komplexität der erfindungsgemäßen Vorrichtung zu verringern, wobei gleichzeitig die Leistungsfähigkeit nicht wesentlich verringert wird.

Bei einem anderen Ausführungsbeispiel wird es bevorzugt, dass die Koordinatenbestimmungseinrichtung eine erste Mustererkennungseinrichtung und eine zweite Mustererkennungseinrichtung umfasst, wobei die erste Mustererkennungseinrichtung ausgelegt ist, um gebogene Liniensegmente mit einer ersten vorgegebenen Krümmungsrichtung zu erkennen, und wobei die zweite Mustererkennungseinrichtung ausgelegt ist, um gebogene Liniensegmente mit einer der ersten vorgegebenen Krümmungsrichtung entgegengesetzten zweiten Krümmungsrichtung zu erkennen. Die Koordinatenbestimmungseinrichtung ist dabei bevorzugt ausgelegt, um der ersten Mustererkennungseinrichtung das Bild für eine Ermittlung der zwei Koordinaten des ersten Ellipsenpunktes beginnend mit einer an dem ersten Rand des Bildes gelegenen Rasterzeile zuzuführen, und um der zweiten Mustererkennungseinrichtung das Bild für eine Ermittelung der zwei Koordinaten des zweiten Ellipsenpunktes ebenso beginnend mit einer am ersten Rand des Bildes gelegenen Rasterzeile zuzuführen. Mit anderen Worten, ist eine besonders hohe Erkennungsgeschwindigkeit bei der Ellipseerkennung erforderlich ist, können gebogene Liniensegmente mit beiden möglichen Krümmungsrichtungen parallel verarbeitet werden, um die Koordinaten des ersten Ellipsenpunktes und des zweiten Ellipsenpunktes zu ermitteln. Hierdurch kann einerseits die Geschwindigkeit der Erkennung erhöht werden, und es vereinfacht sich andererseits die Struktur der erfindungsgemäßen Einrichtung gegenüber dem vorher beschriebenen Ausführungsbeispiel, da das Bild jeweils beginnend mit einer an dem ersten Rand des Bildes gelegenen Rasterzeile ausgelesen wird. Es muss daher keine Einrichtung vorgesehen werden, um das Bild beginnend mit einer an dem zweiten Rand des Bildes gelegenen Rasterzeile der Mustererkennungseinrichtung zuzuführen. Eine solche Zuführung, die das Bild in zwei Richtungen verarbeiten kann, könnte nämlich ggf. einen erhöhten Aufwand hinischtlich einer Auslegung einer Speicherzugriffs-Steuerung mit sich bringen.

Weiterhin wird es bevorzugt, dass die erste Richtung orthogonal zu der zweiten Richtung ist. Damit bilden nämlich die erste Richtung und die zweite Richtung ein kartesisches Koordinatensystem, das sich besonders gut für eine Durchführung von Berechnungen eignet. Eine Verzerrung der Ellipse ist dann nicht gegeben. Im übrigen wird darauf hingewiesen, dass ferner Rasterbilder typischerweise zueinander senkrechte Rasterzeilen und Rasterspalten aufweisen. Damit können die erste Richtung und die zweite Richtung mit den bevorzugten Richtungen des Rasterbildes, die durch die Rasterzeilen und die Rasterspalten definiert sind, zusammenfallen.

Weiterhin wird es bevorzugt, dass die Vorrichtung zum Ermitteln einer Information über eine Form und/oder eine Lage einer Ellipse ausgelegt ist, um das graphische Bild von Videodaten einer Videodatenquelle, beispielsweise einer Kamera, einem Video-Medien-Wiedergabegerät, einem terrestrischen oder satellitengestützten Videodatenempfänger oder einem Computer, abzuleiten. Es hat sich nämlich gezeigt, dass die Erkennung einer Ellipse bzw. die Bestimmung der zugehörigen Ellipsenparameter im Zusammenhang mit Videodaten besonders vorteilhaft verwendet werden kann, um dynamische technische Vorgänge nachzuvollziehen.

Ferner kann die erfindungsgemäße Vorrichtung eine Datenschnittstelle umfassen, die ausgelegt ist, um die Information über die Form und/oder die Lage der Ellipse auszugeben. Die Information über die Form und/oder Lage der Ellipse kann allerdings auch durch eine Anzeigevorrichtung dargestellt werden. Ausgabe und/oder Anzeige kann hierbei jeweils in analoger und/oder digitaler Form erfolgen. Es wird hierbei eine elektrische oder optische Schnittstelle bevorzugt, die die Daten unter Verwendung eines seriellen oder parallelen Schnittstellenprotokolls für eine Weiterverarbeitung zur Verfügung stellt. Auch eine Bus-Schnittstelle, die zum Anschluss von mehreren elektrischen Geräten geeignet ist, kann verwendet werden. Als Anzeigevorrichtung kann beispielsweise eine LED-Anzeige, eine LCD-Anzeige oder ein Bildschirm verwendet werden.

Ferner kann die Vorrichtung zum Ermitteln einer Information über die Form und/oder die Lage der Ellipse ausgelegt sein, um das graphische Bild durch eine Schwellwert-Binarisierung, bei der jedem Bildpunkt des graphischen Bildes in Abhängigkeit von einem Ergebnis eines Vergleichs eines Farbwerts des betreffenden Bildpunktes und/oder einer Helligkeit des betreffenden Bildpunktes mit einem Schwellwert einen Hellwert oder einen Dunkelwert zugeordnet wird, vorzuverarbeiten, um ein binarisiertes Bild zu erhalten. Eine Vorverarbeitung kann ferner ausgelegt sein, um eine Kantendetektion auf das binarisierte Bild anzuwenden, wobei die Kantendetektion bevorzugt ausgelegt ist, um ein Kantenbild zu erzeugen, in dem kantenförmige Übergänge in dem binarisierten Bild von dem Hellwert zu dem Dunkelwert als eine linienförmige Kante gekennzeichnet sind. Die Koordinatenbestimmungseinrichtung ist ferner bevorzugt ausgelegt, um das Kantenbild zu verarbeiten. Es hat sich nämlich gezeigt, dass von der erfindungsgemäßen Vorrichtung Kantenbilder besonders gut verarbeitet werden können, da die erfindungsgemäße Vorrichtung ausgelegt ist, um gebogene Liniensegmente auszuwerten. Die von der erfindungsgemäßen Vorrichtung ausgewerteten gebogenen Liniensegmente beschreiben aber bevorzugt den Umriss einer Ellipse, selbst wenn die Ellipse in dem graphischen Bild als ein ausgefülltes Objekt erscheint. Ferner sei darauf hingewiesen, dass sich auch die erfindungsgemäße Mustererkennungseinrichtung besonders gut für eine Verarbeitung eines Kantenbildes eignet.

Um die Kanten besser extrahieren zu können, wird das graphische Bild, das typischerweise als ein Farbbild oder Graustufenbild vorliegt, bevorzugt zunächst der Schwellwert-Binarisierung zugeführt, wodurch das graphische Bild in ein binarisiertes Bild bzw. in ein S.chwarz/Weiß-Bild umgewandelt wird. Bei einem Schwarz/Weiß-Bild kann mit geringerem Aufwand eine Kantenerkennung durchgeführt werden als bei einem Farbbild, da bei einem Schwarz/Weiß-Bild harte übergänge zwischen einem Hellwert (Weiß) und einem Dunkelwert (Schwarz) existieren, die somit als Kanten erkannt werden können.

Weiterhin wird es bevorzugt, dass die erfindungsgemäße Vorrichtung ausgelegt ist, um das graphische Bild von einer Kamera zu empfangen, die angeordnet ist, um eine Pupille des menschlichen Auges zu erfassen, wobei die Information über die Form und/oder die Lage der Ellipse in dem graphischen Bild dabei eine Information über eine Form und/oder Position der Pupille des menschlichen Auges darstellt. Damit kann also die Position der Pupille erfasst werden, woraus auf eine Blickrichtung des menschlichen Auges geschlossen werden kann. Die Blickrichtung des Menschen kann dann für die Steuerung von weiteren Geräten, beispielsweise von Medizintechnischen Geräten, verwendet werden.

Bei einem weiteren bevorzugten Ausführungsbeispiel weist die erfindungsgemäße Vorrichtung eine Schnittstelle auf, die ausgelegt ist, um eine Kommunikation mit einer Positioniereinrichtung herzustellen, wobei die Positioniereinrichtung-ausgelegt ist, um abhängig von der Form und/oder der Lage einer Ellipse in dem graphischen Bild eine mechanische Bewegung herbeizuführen. Somit kann die erfindungsgemäße Vorrichtungverwendet werden, um eine mechanische Positioniereinrichtung zu steuern.

Die vorliegende Erfindung umfasst ferner ein Verfahren und ein Computerprogramm zum Ermitteln einer Information über eine Form und/oder eine Lage einer Ellipse.

Bevorzugte Ausführungsbeispiele der vorliegenden Erfindung werden nachfolgend Bezug nehmend auf die beiliegenden Zeichnungen näher erläutert. Es zeigen:

Fig. 1        ein Blockschaltbild einer erfindungsgemäßen Vorrichtung zum Ermitteln einer Information über eine Form und/oder eine Lage einer Ellipse in einem graphischen Bild gemäß dem ersten Ausführungsbeispiel der vorliegenden Erfindung;

Fig. 2a       eine graphische Darstellung einer Ellipse sowie der Koordinaten eines ersten Ellipsenpunktes, eines zweiten Ellipsenpunktes, eines dritten Ellipsenpunktes, eines vierten Ellipsenpunktes sowie eines Mittelpunktes der Ellipse;

Fig. 2b       eine graphische Darstellung einer in den Ursprung verschobenen Ellipse sowie von transformierten Koordinaten von zwei Ellipsenpunkten;

Fig. 3        eine graphische Darstellung eines beispielhaften Rasterbildes sowie von nacheinander verarbeiteten Bildausschnitten;

Fig. 4a       ein Blockschaltbild einer erfindungsgemäßen Vorrichtung zum Ermitteln Koordinaten eines Ellipsenpunktes gemäß einem zweiten Ausführungsbeispiel der vorliegenden Erfindung;

Fig. 4b       eine graphische Darstellung von drei beispielhaften Referenzkurven zur Verwendung in einer erfindungsgemäßen Mustererkennungseinrichtung;

Fig. 5a       eine erste graphische Darstellung eines beispielhaften Rasterbildes mit darin markierten erkannten gebogenen Liniensegmenten;

Fig. 5b       eine zweite graphische Darstellung eines beispielhaften Rasterbildes mit darin gekennzeichneten erkannten gebogenen Liniensegmenten;

Fig. 6    ein Blockschaltbild einer Mustererkennungseinrichtung zur Verwendung in einer erfindungsgemäßen Vorrichtung zum Ermitteln einer Information über eine Form und/oder eine Lage einer Ellipse in einem graphischen Bild;

Fig. 7a    eine graphische Darstellung einer Vorgehensweise zum Durchschieben eines graphischen Bildes durch die Mustererkennungseinrichtung gemäß Fig. 6;

Fig. 7b    eine graphische Darstellung von Zeitsignale, die bei der Umwandlung eines Rasterbildes in parallele Zeitsignale entstehen;

Fig. 8    ein Blockschaltbild einer erfindungsgemäßen Vorrichtung zum Ermitteln einer Information über eine Form und/oder einer Lage einer Ellipse in einem graphischen Bild gemäß einem dritten Ausführungsbeispiel der vorliegenden Erfindung;

Fig. 9    einen Ausschnitt aus einem Blockschaltbild einer erfindungsgemäßen Vorrichtung zum Ermitteln einer Information über eine Form und/oder eine Lage einer Ellipse in einem graphischen Bild gemäß einem vierten Ausführungsbeispiel der vorliegenden Erfindung.

Fig. 10    ein Blockschaltbild einer beispielhaften Architektur eines Feldprogrammierbaren Gatterfeldes (field programmable gate array = FPGA) zur implementierung einer Erfindungsgemäßen Vorrichtung;

Fig. 11    ein Blockschaltbild einer erfindungsgemäßen Schaltungs-Architektur zur Realisierung in einem FPGA, gemäß einem vierten Ausführungsbeispiel der vorliegenden Erfindung.

Fig. 12    ein Blockschaltbild einer erfindungsgemäßen Hough-Transformationseinrichtung gemäß einem fünften Ausführungsbeispiel der vorliegenden Erfindung;

Fig. 13    eine grafische Darstellung eines durch eine erfindungsgemäße Hough-Transformationseinrichtung zu verarbeitenden Bildes;

Fig. 14    eine graphische Darstellung von Kurvenverläufen, die sich beim Durchlaufen einer erfindungsgemäßen Hough-Transformationseinrichtung ergeben;

Fig. 15    eine schematische Darstellung einer beispielhaften Struktur einer erfindungsgemäßen Hough-Transformationseinrichtung;

Fig. 16a    eine grafische Darstellung eines durch eine erfindungsgemäße Hough-Transformationseinrichtung verarbeiteten Bildes eines Kreises mit einem erkannten Extrempunkt;

Fig. 16b    eine grafische Darstellung durch eine erfindungsgemäße Hough-Transformationseinrichtung verarbeiteten Bildes eines Kreises mit vier erkannten Extrempunkten; und

Fig. 17    ein Flussdiagramm eines erfindungsgemäßen Verfahrens zum Ermitteln einer Information über eine Form und/oder eine Lage einer Elllipse in einem graphischen Bild.

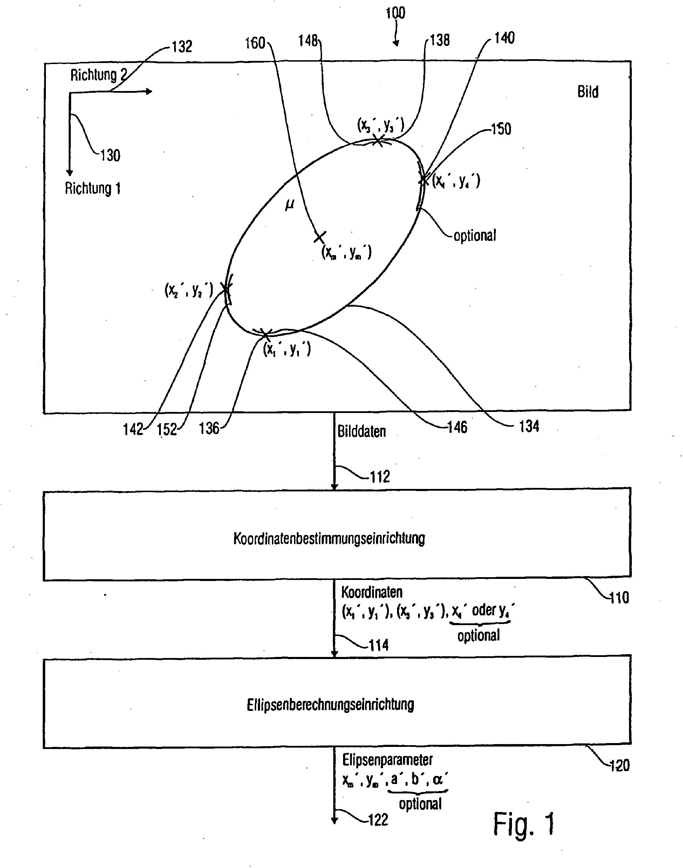

Fig. 1 zeigt ein Blockschaltbild einer erfindungsgemäßen Vorrichtung zum Ermitteln einer Information über eine Form und/oder eine Lage einer Ellipse in einem graphischen Bild gemäß einem ersten Ausführungsbeispiel der vorliegenden Erfindung. Das Blockschaltbild der Fig. 1 ist in seiner Gesamtheit mit 100 bezeichnet. Die erfindungsgemäße Vorrichtung 100 umfasst im Wesentlichen eine Koordinatenbestimmungseinrichtung 110, die ausgelegt ist, um Bilddaten 112 zu empfangen. Koordinatenbestimmungseinrichtung 110 ist ausgelegt, um Koordinaten 114 von ausgezeichneten Ellipsenpunkten einer in den Bilddaten 112 enthaltenen Ellipse zu extrahieren und diese Koordinaten 114 sodann einer Ellipsenberechnungseinrichtung 120 zur Verfügung zu stellen. Die Ellipsenberechnungseinrichtung 120 ist hierbei ausgelegt, um aus den von der Koordinatenbestimmungseinrichtung 110 gelieferten Koordinaten 114 Ellipsenparameter 122 zu berechnen, und die Ellipsenparameter 122 für eine weitere Verarbeitung auszugeben.

Basierend auf der obigen strukturellen Beschreibung wird im Folgenden die Funktionsweise der erfindungsgemäßen Vorrichtung näher erläutert. Es wird hierbei davon ausgegangen, dass die Bilddaten 112, die ein graphisches Bild beschreiben, eine Ellipse enthalten. Ferner wird davon ausgegangen, dass in den Bilddaten 112 eine erste Richtung 130 sowie eine zweite Richtung 132 definiert ist. Eine in den Bilddaten 112 enthaltende Ellipse 134 weist dabei einen ersten Ellipsenpunkt 136 mit zugehörigen Koordinaten $(x_1', y_1')$ auf, wobei der erste Ellipsenpunkt 136 den am weitesten in der ersten Richtung gelegenen Ellipsenpunkt darstellt. Die Lage ist hierbei beispielsweise durch ein rechtwinkliges oder schiefes Koordinatensystem definiert, das die erste Richtung 130 und die zweite Richtung 132 als bevorzugte Richtungen bzw. als Koordinatenachsen aufweist. Ferner weist die Ellipse 134 einen zweiten Ellipsenpunkt 138 mit zugehörigen Koordinaten $(x_3', y_3')$ auf, der einen am weitesten in einer der ersten Richtung 130 entgegengesetzten Richtung gelegenen Punkt der Ellipse darstellt. Ferner weist die Ellipse einen dritten Ellipsenpunkt 140 mit zugehörigen Koordinaten $(x_4', y_4')$ auf, der einen am weitesten in der zweiten Richtung 132 gelegenen Punkt der Ellipse darstellt. Schließlich weist die Ellipse 134 auch noch einen vierten Ellipsenpunkt 142 mit zugehörigen Koordinaten $(x_2', y_2')$ auf, der einen am weitesten in einer der zweiten Richtung 132 entgegengesetzten Richtung gelegenen Punkt der Ellipse darstellt.

Weiterhin wird darauf hingewiesen, dass die Ellipse 134 an den vier vorher beschriebenen ausgezeichneten Ellipsenpunkten 136, 138, 140, 142 jeweils durch gebogene Liniensegmente 146, 148, 150, 152 angenähert werden kann. Die gebogenen Liniensegmente 146, 148, 150, 152 können jeweils durch eine Mehrzahl von Parametern beschrieben werden. So kann beispielsweise das erste Liniensegment 146 durch zwei skalare Lage-Parameter, beispielsweise eine x-Koordinate und eine y-Koordinate, und einen Krümmungsparameter, beispielsweise einen Krümmungsradius, beschrieben werden. Ferner kann das erste Liniensegment 146 beispielsweise die Ellipse in dem ersten Ellipsenpunkt 136 berühren. Es ist allerdings auch möglich, dass das erste Liniensegment 136 die Ellipse 134 an dem ersten Ellipsenpunkt 136 schneidet, wobei allerdings bevorzugt die Ellipse 134 und das erste gebogene Liniensegment 146 an dem ersten Ellipsenpunkt 136 eine gemeinsame Tangente aufweisen. Die gemeinsame Tangente kann dabei durch eine Linie gegeben sein, die so beschaffen ist, dass ihre Punkte in der ersten Richtung eine konstante Koordinate aufweisen. Dies entspricht der Definition des ersten Ellipsenpunktes als dem am weitesten in der ersten Richtung gelegenen Punkt der Ellipse. Weiterhin wird darauf hingewiesen, dass das erste Liniensegment 146 bevorzugt zu einer Schar von parametrisierten gebogenen Liniensegmenten gehört, wobei die Parameter beispielsweise die Lage und/ oder die Krümmung der einzelnen Liniensegmente der Schar beschreiben.

Die Parameter des ersten Liniensegments 146, also die Lage und/oder Krümmung des ersten Liniensegments 146, hängen somit mit der Lage und/oder der Form der Ellipse 134 eng zusammen.

Zusammenfassend wird darauf hingewiesen, dass ein Liniensegment dann als das erste Liniensegment 146 angesehen wird, das die Ellipse 134 an dem ersten Ellipsenpunkt 136 annähert, wenn es der Ellipse in einer Umgebung des ersten Ellipsenpunktes bezüglich eines Abstandsmaßes hinreichend ähnlich ist. Zusätzlich kann verlangt sein, dass weitere Kriterien erfüllt sind, dass also beispielsweise ein Liniensegment nur dann als das erste Liniensegment 146 identifiziert wird, wenn es eine gemeinsame Tangente mit der Linie der Ellipse 134 an dem ersten Ellipsenpunkt 136 aufweist.

In analoger Weise sind das zweite gebogene Liniensegment 148, das dritte gebogene Liniensegment 150 und das vierte gebogene Liniensegment 152 definiert, wobei das zweite gebogene Liniensegment 148 ein gebogenes Liniensegment ist, das die Ellipse an dem zweiten Ellipsenpunkt 138 annähert, wobei das dritte gebogene Liniensegment 140 ein gebogenes Liniensegment ist, das die Ellipse an dem dritten Ellipsenpunkt 150 annähert, und wobei das vierte gebogene Liniensegment ein gebogenes Liniensegment ist, das die Ellipse 134 an dem vierten Ellipsenpunkt 142 annähert.

Die Koordinatenbestimmungseinrichtung 110 ist weiterhin ausgelegt, um mindestens einen Parameter des ersten gebogenen Liniensegments 146 zu bestimmen, und um basierend auf dem mindestens einen bestimmten Parameter des ersten gebogenen Liniensegments 146 die Koordinaten $(x_1', y_1')$ des ersten Ellipsenpunktes 136 zu bestimmen. Ferner ist die Koordinatenbestimmungseinrichtung 110 auch noch ausgelegt, um mindestens einen Parameter des zweiten gebogenen Liniensegments 148 zu bestimmen, und um basierend auf dem mindestens einen Parameter des zweiten gebogenen Liniensegments 248 die Koordinaten $(x_3', y_3')$ des zweiten Ellipsenpunktes 138 zu bestimmen.

Gehört beispielsweise das erste gebogene Liniensegment 146 zu einer parametrisierten Schar von gebogenen Liniensegmenten, so entspricht die Bestimmung der Parameter des ersten gebogenen Liniensegments dem Identifizieren eines gebogenen Liniensegments aus der Schar von gebogenen Liniensegmenten, das die Ellipse 134 an dem ersten Ellipsenpunkt 136 hinreichend gut und/oder bestmöglich annähert. Eine Güte der Annäherung kann hierbei beispielsweise durch ein mathematisches Abstandsmaß bestimmt sein, und es kann ein Schwellwert für das Abstandsmaß festgelegt sein, wobei bei einem Überschreiten oder Unterschreiten des Schwellwerts davon ausgegangen wird, dass ein gebogenes Liniensegment aus der parametrisierten Schar von gebogenen Liniensegmenten die Ellipse 134 an dem ersten Ellipsenpunkt 136 hinreichend gut annähert.

In vergleichbarer Weise kann die Koordinatenbestimmungseinrichtung 110 die Parameter des zweiten gebogenen Liniensegments 148, das die Ellipse 134 in einer Umgebung des zweiten Ellipsenpunktes 138 annähert, bestimmen. Eine parametrisierte Schar von gebogenen Liniensegmenten, die beispielsweise bei der Bestimmung der Parameter des zweiten gebogenen Liniensegments 148 verwendet wird, kann hierbei gleich der parametrisierten Scharr von Liniensegmenten, die für eine Bestimmung der Parameter des ersten gebogenen Liniensegments 146 verwendet wird, sein, oder sich davon, beispielsweise hinsichtlich der Krümmungsrichtung, unterscheiden.

Hat die Koordinatenbestimmungseinrichtung 110 den mindestens einen Parameter des ersten gebogenen Liniensegments 146 und den mindestens einen Parameter des zweiten gebogenen Liniensegments 148 bestimmt, so kann die Koordinatenbestimmungseinrichtung 110 davon die Koordinaten $(x_1', y_1')$ des ersten Ellipsenpunktes 136 sowie die Koordinaten $(x_3', y_3')$ des zweiten Ellipsenpunktes 138 ableiten. Die Koordinatenbestimmungseinrichtung 110 leitet daraufhin die Koordinaten $(x_1', y_1')$ des ersten Ellipsenpunktes 136 sowie die Koordinaten $(x_3', y_3')$ des zweiten Ellipsenpunktes 138 an die Ellipsenberechnungseinrichtung 120 weiter.

Die Ellipsenberechnungseinrichtung 120 kann dann, basierend auf den Koordinaten $(x_1', y_1')$ des ersten Ellipsenpunktes 136 und den Koordinaten $(x_3', y_3')$ des zweiten Ellipsenpunktes 138 zumindest die Mittelpunktkoordinaten $(x_m', y_m')$ der Ellipse 134 berechnen. Damit ist ein Mittelpunkt 160 der Ellipse 134 bekannt.

Die Koordinatenbestimmungseinrichtung 110 kann ferner bevorzugt ausgelegt sein, um weiterhin mindestens einen Parameter des dritten gebogenen Liniensegments 150, das die Ellipse aus dem dritten Ellipsenpunkt 140 annähert, zu ermitteln. Hierbei kann wiederum bestimmt werden, welches gebogene Liniensegment aus einer Schar von gebogenen Liniensegmenten die Ellipse 134 an dem dritten Ellipsenpunkt 140 am besten annähert. Der zugehörige Scharparameter stellt dann beispielsweise wiederum den Parameter des identifizierten dritten Liniensegments 150 dar, und kann von der Koordinatenbestimmungseinrichtung verwendet werden, um mindestens eine Koordinate $x_4'$ oder $y_4'$ des dritten Ellipsenpunktes 140 zu ermitteln. Die Koordinatenbestimmungseinrichtung 110 kann diese Koordinate $x_4'$ oder $y_4'$ dann wiederum an die Ellipsenberechnungseinrichtung 120 weitergeben, wodurch es der Ellipsenberechnungseinrichtung 120 ermöglicht wird, in Verbindung mit den Koordinaten $(x_1', y_1')$ und $(x_3', y_3')$ des ersten Ellipsenpunktes 136 und des zweiten Ellipsenpunktes 138 sämtliche Parameter der Ellipse, also die beiden Koordinaten $(x_m', y_m')$ des Ellipsenmittelpunktes 160, die Längen a', b' der beiden Halbachsen der Ellipse 134 sowie einen Rotationswinkel $\alpha'$ zu bestimmen bzw. unter Verwendung von analytischen Formeln zu berechnen.

Es sei hier noch einmal explizit darauf hingewiesen, dass für die Bestimmung der Parameter des ersten Liniensegments 146 a-prio-Wissen über die Gestalt des ersten Liniensegments 146 verwendet werden kann. Es ist nämlich von vorneherein bekannt, dass das erste Liniensegment 146 die Ellipse 134 an dem ersten Ellipsenpunkt 136 annähern muss, dass also das erste Liniensegment 146 die gleiche Krümmungseigenschaft oder zumindest die gleiche Krümmungsrichtung aufweisen muss, die die Ellipse 134 an dem ersten Ellipsenpunkt 136 aufweist. Ferner ist das erste Liniensegment 146 bevorzugt dadurch definiert, dass es die Ellipse an dem ersten Ellipsenpunkt 136 tangiert oder zumindest eine gemeinsame Tangente mit der Ellipse 134 an dem ersten Ellipsenpunkt 136 aufweist. Somit ist die Koordinatenbestimmungseinrichtung allgemein bevorzugt ausgelegt, um in dem graphischen Bild einen Kurvenverlauf als das erste gebogene Liniensegment zu identifizieren, der obige die genannten Bedingungen (Krümmungseigenschaft, Tangentenrichtung) erfüllt. Die Verwendung einer parametrisierten Kurvenschar ist hier lediglich als Beispiel zu sehen, es können aber vielmehr alle Mustererkennungsalgorithmen verwendet werden, die in der Lage sind, Parameter eines gebogenen Liniensegments mit vorgegebener Krümmungsrichtung und vorgegebener TangentenRichtung zu identifizieren und durch zumindest einen Lage-Parameter zu beschreiben.

Analoge Definitionen gelten auch für das zweite gebogene Liniensegment 148, das dritte gebogene Liniensegment 150 und das optional zusätzlich verwendete vierte gebogene Liniensegment 152. Entsprechende Algorithmen wie für die Identifizierung des ersten gebogenen Liniensegments können verwendet werden, wobei die Algorithmen lediglich bezüglich der Krümmungsrichtung und der Tangentenrichtung angepasst werden müssen.

Ein wesentlicher Vorteil einer erfindungsgemäßen Vorrichtung zum Ermitteln einer Information über eine Form und/oder eine Lage einer Ellipse besteht darin, dass "Extrempunkte" der zu identifizierenden Ellipse, das heißt Punkte der Ellipse, die am weitesten in mehreren vorgegebenen Richtungen liegen, bestimmt werden. Der erste Ellipsenpunkt 136, der zweite Ellipsenpunkt 138, der dritte Ellipsenpunkt 140 und der vierte Ellipsenpunkt 143 können nämlich gemäß obiger Definition als Extrempunkte aufgefasst werden. Die Extrempunkte werden hierbei durch ein Identifizieren eines gebogenen Liniensegments, das die Ellipse an dem jeweiligen Extrempunkt annähert, bestimmt. Hierbei kann das a-priori-Wissen über die Krümmung der Ellipse an dem jeweiligen Extrempunkt verwendet werden, sowie ferner a-priori-Wissen über eine Richtung einer Tangente an die Ellipse an dem jeweiligen Extrempunkt. Es werden also bevorzugt nicht beliebige Bildpunkte des graphischen Bildes bzw. der Bilddaten 112 für die Bestimmung der Extrempunkte herangezogen, sondern nur solche Bildpunkte, die eine gebogene Linie (bzw. ein gebogenes Liniensegment) darstellen, welche eine Ellipse an dem jeweiligen Drehpunkt annähern kann.

Durch das a-priori-Wissen, also durch ein Wissen über die Krümmung eines derartigen gebogenen Liniensegments und die Richtung der Tangente eines derartigen gebogenen Liniensegments an dem Punkt, an dem es die Ellipse 134 berührt (bzw. zumindest eine gemeinsame Tangente mit der Ellipse aufweist), kann hierbei ein geeignetes gebogenes Liniensegment, das die Ellipse 134 an einem der Extrempunkte annähert, in einer sehr effizienten Weise gefunden werden. Sind einmal zwei gegenüberliegende Extrempunkte der Ellipse, also zum Beispiel der erste Ellipsenpunkt 136 und der zweite Ellipsenpunkt 138, bekannt, so kann in einem zweiten Schritt durch die Ellipsenberechnungseinrichtung 120 zumindest der Mittelpunkt 160 der Ellipse in einer rechnerisch sehr effizienten Weisen bestimmt werden.

Ferner ist lediglich die Bestimmung von zwei Koordinaten $(x_1', y_1')$ des ersten Ellipsenpunktes 136, von zwei Koordinaten $(x_3', y_3')$ des zweiten Ellipsenpunktes 138 und von nur einer Koordinate $(x_4', y_4')$ des dritten Ellipsenpunktes

140 ausreichend, um sämtliche Ellipsenparameter ($(x_m', y_m')$, a', b', $\alpha'$ zu berechnen.

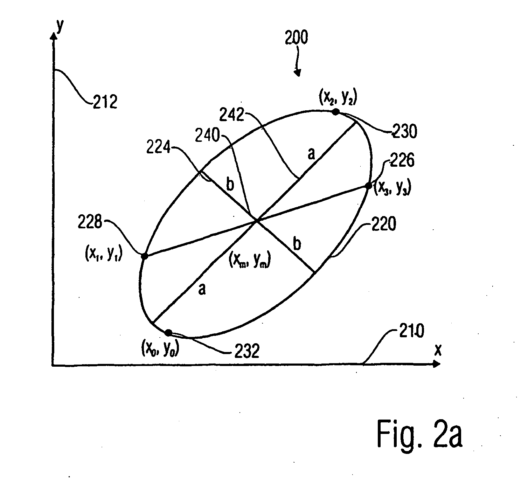

Um ein Verständnis der folgenden Ausführungen zu erleichtern, werden nachstehend die verwendeten Definitionen der Ellipsenparameter dargestellt. Fig. 2a zeigt daher eine graphische Darstellung einer Ellipse sowie der Koordinaten eines ersten Ellipsenpunktes, eines zweiten Ellipsenpunktes, eines dritten Ellipsenpunktes, eines vierten Ellipsenpunktes und eines Mittelpunkts der Ellipse. Die graphische Darstellung der Fig. 2a ist in ihrere Gesamtheit mit 200 bezeichnet. Die graphische Darstellung 200 zeigt ein kartesisches Koordinatensystem mit einer x-Achse 210 sowie einer y-Achse 212, wobei die x-Achse 210 und die y-Achse 212 zueinander senkrecht sind. In dem durch die x-Achse 210 und die y-Achse 212 gebildeten Koordinatensystem ist eine Ellipse 220 angeordnet. Die Ellipse 220 weist einen ersten Ellipsenpunkt 226 mit zugehörigen Koordinaten $(x_3, y_3)$ auf. Der erste Ellipsenpunkt 226 stellt hierbei den am weitesten in der durch die x-Achse 210 definierten x-Richtung gelegenen Punkte der Ellipse 220 dar. Ein zweiter Ellipsenpunkt 228 mit zugehörigen Koordinaten $(x_1, y_1)$ bildet den am weitesten in negativer x-Richtung gelegenen Punkt der Ellipse 220. Ein dritter Ellipsenpunkt 230 mit zugehörigen Koordinaten $(x_2, y_2)$ stellt ferner den am weitesten in der durch die y-Achse 212 definierten y-Richtung gelegenen Punkt der Ellipse 220 dar, und ein vierter Punkt 232 mit zugehörigen Koordinaten $(x_0, y_0)$ bildet einen am weitesten in negativer y-Richtung gelegen Punkt der Ellipse 220. Ein Mittelpunkt 240 der Ellipse weist ferner Mittelpunktkoordinaten $(x_m, y_m)$ auf. Die graphische Darstellung 200 zeigt ferner eine erste Halbachse 242 der Ellipse, die in dem gezeigten Fall die große Halbachse der Ellipse darstellt, und deren Länge durch den Parameter a beschrieben wird. Eine zweite Halbachse 244 der Ellipse 220 bildet in dem gezeigten Fall eine kleine Halbachse der Ellipse 220. Die Länge der zweiten Halbachse 244 der Ellipse ist durch den Parameter b beschrieben.

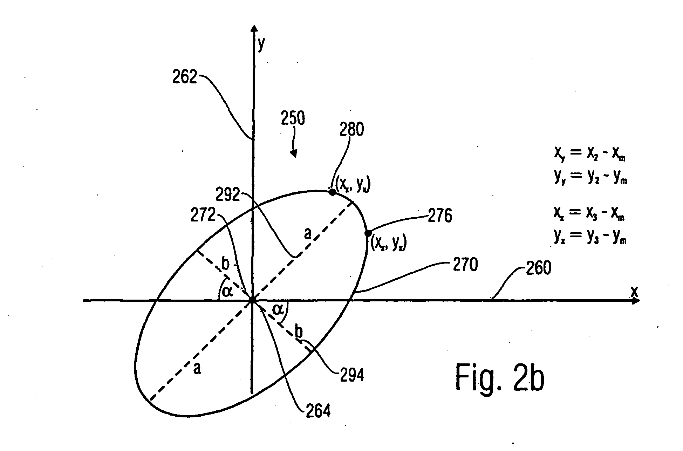

Ferner zeigt 2b eine graphische Darstellung einer in den Ursprung verschobenen Ellipse zusammen mit transformierten Koordinaten von charakteristischen Ellipsenpunkten. Die graphische Darstellung der Fig. 2b in ihrer Gesamtheit mit 250 bezeichnet. Die graphische Darstellung 250 zeigt wiederum eine x-Achse 260 sowie eine y-Achse 262, die sich in einem Ursprung 264 orthogonal schneiden. Die graphische Darstellung 250 zeigt ferner eine in den Ursprung verschobene Ellipse 270, deren Mittelpunkt 272 mit dem Ursprung 264 zusammenfällt. Gezeigt ist ferner ein transformierter erster Ellipsenpunkt 276 mit zugehörigen Koordinaten $(x_x, y_x)$ . Der transformierte erste Ellipsenpunkt 276 bildet wiederum den am weitesten in der durch die x-Achse 260 festgelegten x-Richtung gelegenen Punkt der Ellipse 270. Im übrigen sei darauf hingewiesen, dass der transformierte erste Ellipsenpunkt 276 aus dem ersten Ellipsenpunkt 226 durch eine Verschiebung hervorgeht, wobei gilt:

$$x_x = x_3 - x_m; \qquad y_x = y_3 - y_m.$$

Die graphische Darstellung 250 weist ferner einen transformierten dritten Ellipsenpunkt 280 mit zugehörigen Koordinaten $(x_y, y_y)$ auf. Der transformierte dritte Ellipsenpunkt 280 bildet einen am weitesten in der durch die y-Achse 262 bestimmten y-Richtung gelegenen Punkt der Ellipse 270. Der transformierte dritte Ellipsenpunkt 280 geht ferner durch eine Verschiebung aus dem dritten Ellipsenpunkt 230 hervor, wobei gilt:

$$x_y = x_2 - x_m; \qquad y_y = y_2 - y_m.$$

Die graphische Darstellung 250 zeigt ferner eine erste Halbachse 292 der Ellipse 270, die in dem gezeigten Beispiel eine große Halbachse darstellt, und deren Länge mit a bezeichnet ist, sowie eine zweite Halbachse 294 der Ellipse 270, die in dem gezeigten Beispiel eine kleine Halbachse darstellt, und deren Länge wiederum mit b bezeichnet ist. Gezeigt ist ferner ein Rotationswinkel $\alpha$. Der Rotationswinkel $\alpha$ ist hier also als ein spitzer Winkel zwischen der x-Achse 260 und der zweiten Halbachse 294 der Ellipse 270 gezeigt.

Die graphische Darstellung 250 zeigt also transformierte Extrempunkte 276, 280 der in den Ursprung verschobenen (d.h. transformierten) Ellipse 270 sowie zugehörige Ellipsenparameter a, b und $\alpha$.

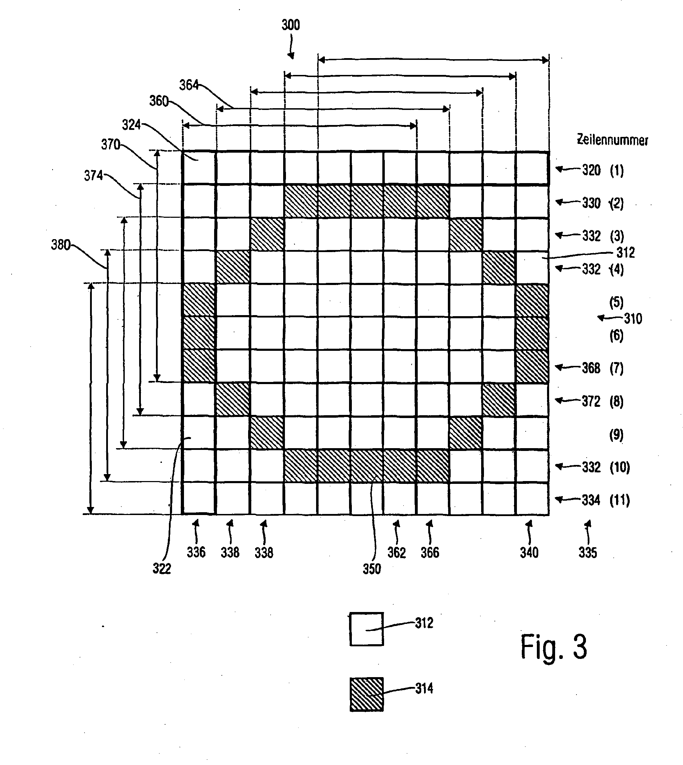

Fig. 3 zeigt eine graphische Darstellung eines beispielhaften Rasterbildes einer Ellipse. Die graphische Darstellung der Fig. 3 ist in ihrer Gesamtheit mit 300 bezeichnet. Gezeigt ist hierbei ein Rasterbild 310 mit einer Mehrzahl von Rasterpunkten 312. Ein Rasterpunkt kann hierbei inaktiv oder weiß sein, wie bei dem Rasterpunkt 312 gezeigt. Ein Rasterpunkt kann ferner aktiv oder schwarz sein, wie dies beispielsweise bei dem Rasterpunkt 314 durch Schraffur angedeutet ist. Es wird ferner darauf hingewiesen, dass das Rasterbild 310 eine Mehrzahl von Rasterzeilen sowie eine Mehrzahl von Rasterspalten umfasst. Eine Rasterzeile fasst hierbei eine Mehrzahl von Rasterpunkten zusammen, wie dies beispielsweise durch den dick umrandeten Bereich 320, der eine Rasterzeile beschreibt, dargestellt ist. Eine Rastespalte beschreibt ebenso eine Zusammenfassung von mehreren Rasterpunkten. Ein Beispiel für eine Rasterspalte ist durch den dick umrandeten Bereich 322, der eine Rasterspalte darstellt, gezeigt. Rasterzeilen und Rasterspalten sind hierbei bevorzugt orthogonal zueinander. Ferner wird darauf hingewiesen, dass sich Rasterzeilen und Rasterspalten freilich überschneiden können. So weisen beispielsweise die Rasterzeile 320 und die Rasterspalte 322 einen gemeinsamen Bildpunkt auf, der mit 324 bezeichnet ist. Es sei ferner darauf hingewiesen, dass ein Bild oder Bildausschnitt sowohl durch eine Mehrzahl von Rasterzeilen als auch durch eine Mehrzahl von Rasterspalten vollständig beschrieben werden kann, da ja jeder gerasterte Bereich sowohl durch Rasterzeilen als auch durch Rasterspalten beschreibbar ist. Ferner sei darauf hingewiesen, dass das Rasterbild 310 per Definition eine erste Rasterzeile, die Rasterzeile 320, eine zweite Rasterzeile 330, mehrere weitere Rasterzeilen 332, die bevorzugt fortlaufend nummeriert sind, sowie eine letzte Rasterzeile 334 aufweist. Entsprechende Zeilennummern sind mit 335 bezeichnet. In ähnlicher Weise umfasst das Rasterbild 310 eine erste Rasterspalte 322, eine zweite Rasterspalte 336, weitere Rasterspalten 338, die bevorzugt fortlaufend nummeriert sind, sowie eine letzte Rasterspalte 340.

Die graphische Darstellung 300 zeigt ferner eine Ellipse 350, die durch das Rasterbild 310 in Form von aktiven oder schwarzen Rasterpunkten (bzw. Bildpunkten) dargestellt ist, wobei die aktiven Rasterpunkte durch Schraffur gekennzeichnet sind.

Die graphische Darstellung 300 zeigt ferner eine erste Gruppe von Rasterspalten, die mit 360 bezeichnet ist. Die erste Gruppe von Rasterspalten umfasst dabei die erste Rasterspalte 322, die zweite Rasterspalte 336 sowie alle folgenden Rasterspalten bis einschließlich zur siebten Rasterspalte 362. Die erste Gruppe 360 von Rasterspalten beschreibt somit einen Ausschnitt aus dem Rasterbild 310.

Der genannte Ausschnitt aus dem Rasterbild umfasst hierbei weiterhin eine Mehrzahl von Rasterzeilen, die gegenüber den ursprünglichen Rasterzeilen durch die Einschränkung der Anzahl an Spalten verkürzt sind. Auch die verkürzten Rasterzeilen, die durch die Auswahl eines Bildausschnitts entstehen können, werden im Folgenden kurz als Rasterzeilen bezeichnet.

Die zweite Gruppe von Rasterspalten, die mit 364 bezeichnet ist, umfasst ferner die zweite Rasterspalte 336 sowie die folgenden Rasterspalten bis hin zu einer achten Rasterspalte 366. In anderen Worten, jeweils sieben nebeneinander liegende Rasterspalten sind zu einer Gruppe von Rasterspalten, die für eine gemeinsame Verarbeitung vorgesehen sind, zusammengefasst.

Eine ähnliche Gruppierung kann für die Rasterzeilen erfolgen, wobei beispielsweise die erste Rasterzeile 320, die zweite Rasterzeile 330 sowie alle folgenden Rasterzeilen bis hin zur siebten Ratserzeile 368 zu einer ersten Gruppe 370 von Rasterzeilen zusammengefasst sind. In ähnlicher Weise umfasst eine zweite Gruppe von Rasterzeilen die zweite Rasterzeile 330 bis hin zur achten Rasterzeile 372, wobei die zweite Gruppe von Rasterzeilen mit 374 bezeichnet ist.

Hierbei sei freilich darauf hingewiesen, dass eine Gruppe von Rasterzeilen eine beliebige Anzahl von Rasterzeilen umfassen kann, beispielsweise fünf Rasterzeilen, 16 Rasterzeilen, 32 Rasterzeilen oder 64 Rasterzeilen. Es wird hierbei lediglich bevorzugt, dass die Anzahl der Rasterzeilen, die zu einer Gruppe von Rasterzeilen zusammengefasst werden, größer als 2 ist. Analoge Überlegungen gelten auch für eine Gruppe von Rasterspalten.

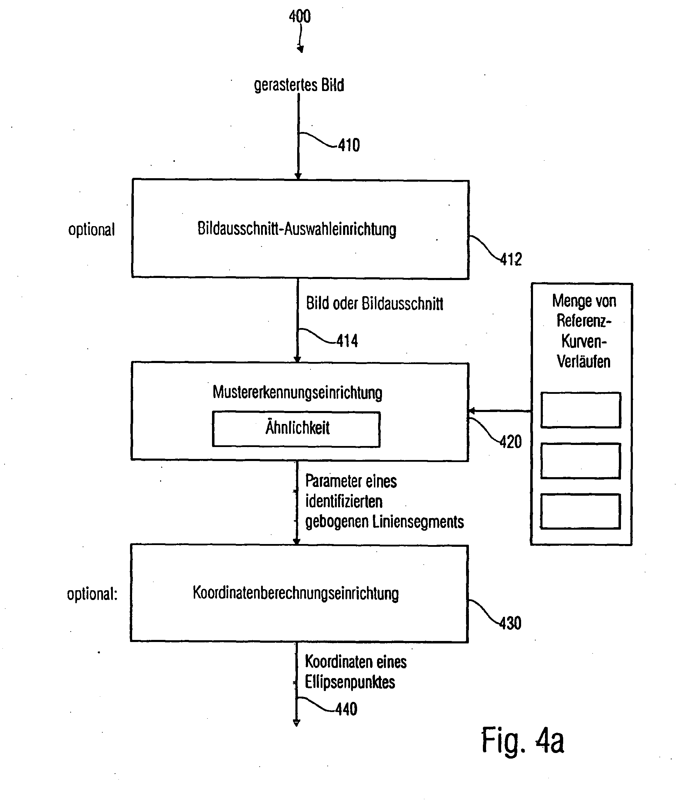

Fig. 4a zeigt ein Blockschaltbild einer erfindungsgemäßen Vorrichtung zum Ermitteln von Koordinaten eines Ellipsenpunktes in einem graphischen Bild gemäß einem zweiten Ausführungsbeispiel der vorliegenden Erfindung. Die Vorrichtung gemäß der Fig. 4a ist in ihrer Gesamtheit mit 400 bezeichnet. Die Vorrichtung 400 ist besonders gut geeignet, um ein Rasterbild 310, wie es in der Fig. 3 gezeigt ist, zu verarbeiten, wie im Folgenden ausgeführt wird.

Die Vorrichtung 400 ist ausgelegt, um ein gerastertes Bild 410 zu empfangen. Weiterhin ist die Vorrichtung 400 optional ausgelegt, um aus dem gerasterten Bild 410 mit Hilfe einer optionalen Bildausschnitt-Auswahleinrichtung 412 einen Bildausschnitt 414 auszuwählen. Ein ausgewählter Bildausschnitt 414 kann beispielsweise durch eine Mehrzahl von Rasterzeilen und/oder eine Mehrzahl von Rasterspalten definiert sein, beispielsweise durch eine Gruppe von Rasterzeilen oder eine Gruppe von Rasterspalten wie dies mit Bezug auf Fig. 3 beschrieben wurde. Die erfindungsgemäße Vorrichtung 400 umfasst ferner eine Mustererkennungseinrichtung 420, die ausgelegt ist, um das gerasterte Bild oder den gerasterten Bildausschnitt 414 zu empfangen. Ferner ist die Mustererkennungseinrichtung 420 ausgelegt, um festzustellen, ob in dem gerasterten Bild oder Bildausschnitt 414 ein Kurvenverlauf bzw. ein gebogenes Liniensegment aus einer Menge von Referenz-Kurvenverläufen enthalten ist.

Die Kurvenverläufe der Menge von Referenzkurvenverläufen können hierbei für eine Bestimmung der Ähnlichkeit zwischen in dem gerasterten Bild oder Bildausschnitt 414 enthaltenen Kurvenverläufen und den Referenzkurvenverläufen beispielsweise in einem Speicher abgelegt sein. Ebenso ist es allerdings möglich, dass die Struktur der Mustererkennungseinrichtung ausgelegt ist, um zu erkennen, ob in dem gerasterten Bild oder Bildausschnitt 414 ein Kurvenverlauf enthalten ist, der einem Referenz-Kurvenverlauf aus der Menge von Referenzkurvenverläufen hinreichend ähnlich ist. Als Referenz-Kurvenverläufe werden hierbei bevorzugt solche Kurvenverläufe verwendet, die eine Ellipse an dem ersten Ellipsenpunkt, dem zweiten Ellipsenpunkt, dem dritten Ellipsenpunkt oder dem vierten Ellipsenpunkt annähern. Somit ist folglich die Mustererkennungseinrichtung allgemein ausgelegt, um zu erkennen, ob in dem gerasterten Bild oder Bildausschnitt 414 ein Kurvenverlauf enthalten ist, der eine Ellipse an dem ersten Ellipsenpunkt, an dem zweiten Ellipsenpunkt, an dem dritten Ellipsenpunkt oder an dem vierten Ellipsenpunkt annähert.

Die Mustererkennungseinrichtung 420 ist weiterhin bevorzugt ausgelegt, um einen Kurvenverlauf aus der Menge von Referenzkurvenverläufen, der einem in dem gerasterten Bild oder Bildausschnitt 414 enthaltenen Kurvenverlauf hinreichend ähnlich ist, als das erste gebogene Liniensegment, das zweite gebogene Liniensegment, das dritte gebogene Liniensegment oder das vierte gebogene Liniensegment zu identifizieren, je nach dem an welchem des ersten Ellipsenpunktes, des zweiten Ellipsenpunktes, des dritten Ellipsenpunktes oder des vierten Ellipsenpunktes der Referenzkurvenverlauf aus der Menge der Referenzkurvenverläufe die Ellipse annähert.

Ferner ist die Mustererkennungseinrichtung 420 ausgelegt, um mindestens einen Lageparameter, bevorzugt aber zwei Lageparameter sowie optional einen weiteren Parameter, der eine Kurvenform beschreibt, des ersten Liniensegments, des zweiten Liniensegments, des dritten Liniensegments oder des vierten Liniensegments zu bestimmen. Aus der Lage des identifizierten ersten gebogenen Liniensegments, des zweiten gebogenen Liniensegments, des dritte gebogenen Liniensegments oder vierten gebogenen Liniensegments kann dann eine optionale Koordinatenberechnungseinrichtung 430 die Koordinaten des ersten Ellipsenpunktes, des zweiten Ellipsenpunktes, und des dritten Ellipsenpunktes oder des vierten Ellipsenpunktes berechnen. Die Koordinatenberechnungseinrichtung 430 kann allerdings entfallen, wenn beispielsweise die von der Mustererkennungseinrichtung 420 bestimmten Lageparameter der gebogenen Liniensegmente bereits derart definiert sind, dass die Lageparameter direkt Koordinaten des ersten Ellipsenpunktes, des zweiten Ellipsenpunktes und des dritten Ellipsenpunktes oder des vierten Ellipsenpunktes angeben, an denen ja bevorzugter Weise die gebogenen Liniensegmente durch die ausgezeichneten Ellipsenpunkte verlaufen.

Es sei hier weiterhin darauf hingewiesen, dass als Referenz-Kurvenverläufe bevorzugt solche Kurvenläufe verwendet werden, die eine Ellipse an dem ersten Ellipsenpunkt, an dem zweiten Ellipsenpunkt, dem dritten Ellipsenpunkt oder dem vierten Ellipsenpunkt (bzw. in einer Umgebung der jeweiligen Ellipsenpunkte) annähern. Als Referenzkurvenverläufe werden bevorzugt symmetrische gebogene Kurvenverläufe verwendet. Im übrigen wird es bevorzugt, als Referenzkurvenverläufe beispielsweise Ausschnitte aus kreisförmigen Kurven zu verwenden, da kreisförmige Kurven eine Ellipse an dem ersten Ellipsenpunkt, an dem zweiten Ellipsenpunkt, an dem dritten Ellipsenpunkt oder an dem vierten Ellipsenpunkt besonders gut annähern.

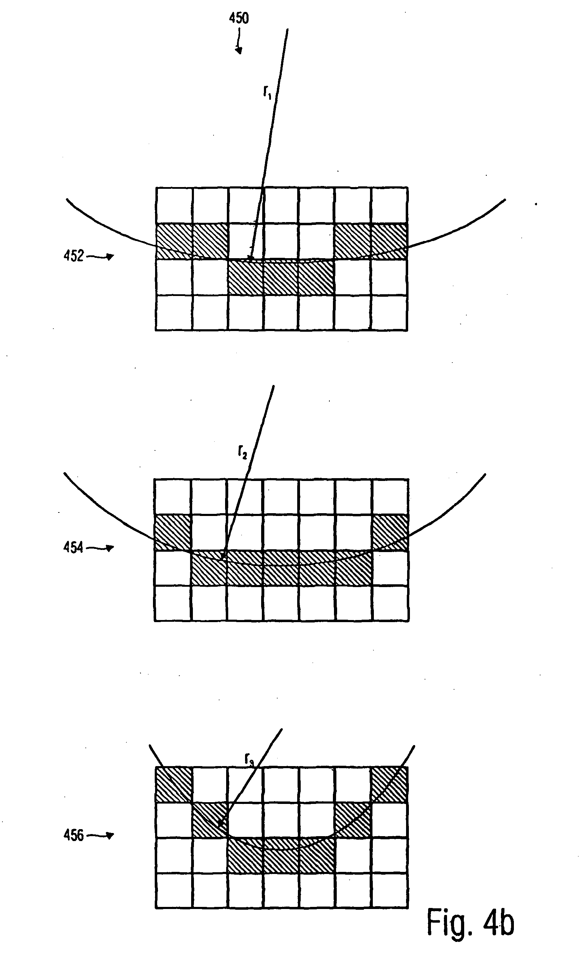

Fig. 4b ist eine graphische Darstellung von zwei Beispielen für Referenzkurvenverläufe zur Verwendung in einer erfindungsgemäßen Mustererkennungseinrichtung. Die graphische Darstellung der Fig. 4b ist in ihrer Gesamtheit mit 450 bezeichnet. Eine erste graphische Darstellung 452 beschreibt dabei in Form eines Rasterbildes einen ersten Referenzkurvenverlauf, der einen Ausschnitt aus einer kreisförmigen Kurve mit einem ersten Krümmungsradius $r_1$ annähert. Eine zweite graphische Darstellung 454 beschreibt in Form eines Rasterbildes einen zweiten Referenzkurvenverlauf, der einen Ausschnitt aus einer kreisförmigen Linie mit einem zweiten Krümmungsradius $r_2$ annähert, wobei der zweite Krümmungsradius $r_2$ größer ist als der erste Krümmungsradius $r_1$. Eine dritte graphische Darstellung 456 zeigt ferner in Form eines Rasterbildes einen dritten Referenzkurvenverlauf, der ebenso einen Ausschnitt aus einer kreisförmigen Linie mit einem dritten Krümmungsradius $r_3$ beschreibt. Der dritte Krümmungsradius $r_3$ ist hierbei kleiner als der erste Krümmungsradius $r_1$. Die drei graphischen Darstellungen 452, 454, 456 der Fig. 4b beschreiben also drei mögliche Referenzkurvenverläufe zur Verwendung in der Mustererkennungseinrichtung 420. In anderen Worten, die Mustererkennungseinrichtung 420 kann beispielsweise allgemein ausgelegt sein, um die drei in den graphischen Darstellungen 452, 454, 456 der Fig. 4b gezeigten Referenzkurvenverläufe in dem gerasterten Bild oder Bildausschnitt 414 zu erkennen und beispielsweise als ein erstes gebogenes Liniensegment, das die zu identifizierende Ellipse an dem ersten Ellipsenpunkt annähert, zu identifizieren. Ferner ist die Mustererkennungseinrichtung 420 bevorzugt ausgelegt, um die Lage eines in dem gerasterten Bild oder Bildausschnitts 414 erkannten Referenzkurvenverlauf durch Lageparameter zu beschreiben, und diese Lageparameter der Koordinatenberechnungseinrichtung 430 zur Verfügung zu stellen, sofern die genannten Lageparameter nicht direkt die Koordinaten eines ersten Ellipsenpunktes, an dem der bekannte Referenzkurvenverlauf die zu identifizierende Ellipse annähert, darstellen.

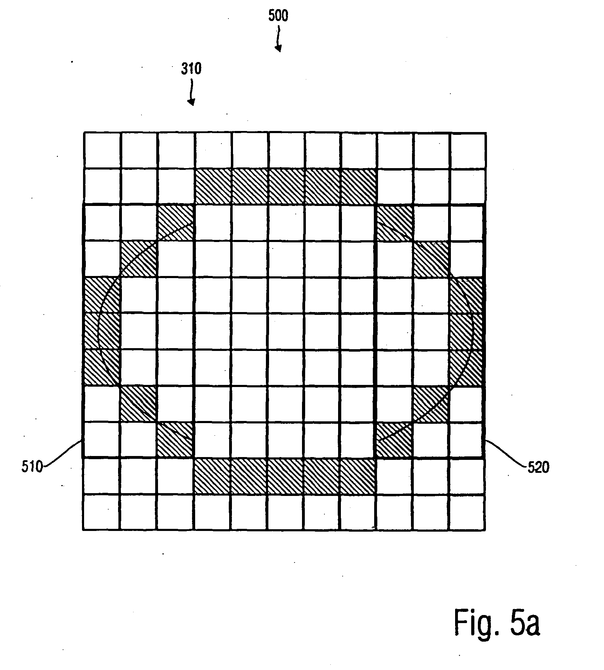

Die Fig. 5a zeigt eine erste graphische Darstellung eines beispielhaften Rasterbildes mit darin gekennzeichneten erkannten gebogenen Liniensegmenten. Es wird hierbei davon ausgegangen, dass die Mustererkennungseinrichtung 420 der Vorrichtung 400 gemäß Fig. 4a beispielsweise in der Lage ist, die in der ersten graphischen Darstellung 452, der zweiten graphischen Darstellung 454 sowie der dritten graphischen Darstellung 456 gezeigten Referenzkurvenverläufe in einem Bild oder Bildausschnitt zu erkennen. Ferner wird davon ausgegangen, dass das beispielhafte Rasterbild 310 der Fig. 3a der Mustererkennungseinrichtung 420 als gerastertes Bild 414. zugeführt wird. Es wird weiterhin beispielhaft davon ausgegangen, dass das Rasterbild 310 der Mustererkennungseinrichtung entweder Zeilenweise oder Spaltenweise zugeführt wird. Unter der Annahme, dass das Rasterbild 310 der Mustererkennungseinrichtung 420 Spaltenweise beginnend mit der ersten Rasterspalte 322 zugeführt wird, kann die Mustererkennungseinrichtung 420 beispielsweise den dritten Referenzkurvenverlauf der graphischen Darstellung 456 in dem gerasterten Bild erkennen. In der graphischen Darstellung 500 der Fig. 5a ist der dabei erkannte Kurvenverlauf mit 510 gekennzeichnet. Wird das Rasterbild 310 der Mustererkennungseinrichtung 420 hingegen spaltenweise beginnend mit der letzten Rasterspalte 340 zugeführt, so kann die Mustererkennungseinrichtung beispielsweise einen weiteren Kurvenverlauf erkennen, der in der graphischen Darstellung 500 mit 520 bezeichnet ist.

Es sei hierbei ferner darauf hingewiesen, dass der Mustererkennungseinrichtung 420 beispielsweise nur ein von der Bildausschnitt-Auswahleinrichtung 412 ausgewählter Bildausschnitt zugeführt werden kann. Beispielsweise kann der Mustererkennungseinrichtung 420 in einem ersten Verarbeitungsschritt nur ein begrenzter Bildausschnitt zugeführt werden, der die erste Gruppe 370 von Rasterzeilen umfasst. In anderen Worten, ein Bildausschnitt, der die erste Rasterzelle 320 sowie die benachbarten Rasterzeilen bis hin zur siebten Rasterzeile 368 umfasst, kann in dem ersten Verarbeitungsschritt der Mustererkennungseinrichtung 420 zugeführt werden. In diesem Bildausschnitt befindet sich beispielsweise kein Kurvenverlauf, der mit einer der in den graphischen Darstellungen 452, 454 und 456 gezeigten Referenzkurvenverläufe übereinstimmt. In dem zweiten Verarbeitungsschritt kann daraufhin der Mustererkennungseinrichtung 420 ein Bildausschnitt zugeführt werden, der die zweite Gruppe 374 von Rasterzeilen umfasst. Mit anderen Worten, der Mustererkennungseinrichtung 420 werden beispielsweise Spaltenweise, (das heißt Spalte für Spalte nacheinander) die Bildinhalte zwischen einschließlich der zweiten Rasterzeile 330 und der achten Rasterzeile 372 zugeführt.

Auch in diesem Bildausschnitt befindet sich kein Kurvenverlauf, der den drei Referenzkurvenverläufen der graphischen Darstellung 452, 454, 456 entspricht. In einem dritten Verarbeitungsschritt kann dann ferner der Bildinhalt einer dritten Gruppe von Rasterzeilen der Mustererkennungseinrichtung 420 zugeführt werden. Die dritte Gruppe von Rasterzeilen ist hier mit 380 bezeichnet und umfasst die Rasterzeilen 3 bis 9. Die Mustererkennungseinrichtung 420 kann in diesem Bildausschnitt einen Kurvenverlauf identifizieren, der dem dritten Referenzkurvenverlauf der graphischen Darstellung 456 entspricht. Der identifizierte Kurvenverlauf ist daher in der graphischen Darstellung 500 mit 510 bezeichnet. Es wird weiterhin darauf hingewiesen, dass sich zur Verbesserung der Auflösung benachbarte Gruppen 370, 374, 380 von Rasterzeilen überlappen, das heißt gemeinsame Rasterzeilen aufweisen. Es wird hierbei bevorzugt, dass sich benachbarte Gruppen von Rasterzeilen nur um eine einzige Rasterzeile unterscheiden, dass also benachbarte Gruppen von Rasterzeilen um genau eine Rasterzeile gegeneinander verschoben sind, wie dies beispielsweise in der Fig. 3 gezeigt ist.

In anderen Worten, die Vorrichtung 400 kann ausgelegt sein, um verschiedene Bildausschnitte, die verschiedene Gruppen von Rasterzeilen umfassen, nacheinander zu verarbeiten und einer Mustererkennung zu unterziehen. Somit muss die Mustererkennung jeweils nur einen kleinen Bildausschnitt verarbeiten, wodurch sich die Komplexität der Mustererkennung stark reduziert. Ferner kann dadurch die Anzahl von verwendeten Referenzkurvenverläufen gering gehalten werden. Es wird ferner darauf hingewiesen, dass aus der Information, in welchem der Bildausschnitte, also unter Verwendung welcher Gruppe 370, 374, 380 von Rasterzeilen, der Referenzkurvenverlauf identifiziert werden kann, eine Information über eine Lage des gebogenen Liniensegments, das eine Ellipse an dem ersten Ellipsenpunkt, dem zweiten Ellipsenpunkt, dem dritten Ellipsenpunkt oder dem vierten Ellipsenpunkt annähert, abgeleitet werden kann. Mit anderen Worten, die Information, in welchem der Bildausschnitte der Referenzkurvenverlauf identifiziert wird, stellt einen Lageparameter des gebogenen Liniensegments dar, und kann somit dazu verwendet werden, um zumindest eine Koordinate des ersten Ellipsenpunktes, des zweiten Ellipsenpunktes, des dritten Ellipsenpunktes oder des vierten Ellipsenpunktes zu ermitteln.

In ähnlicher Weise kann ferner das erste Bild 310 der Mustererkennungseinrichtung 420 auch Zeilenweise, das heißt, Zeile für Zeile nacheinander, zugeführt werden. Hierbei können mehrere Bildausschnitte, die verschiedene Gruppen 360, 364 von Rasterspalten umfassen, nacheinander verarbeitet werden. Die Ausführungen, die im Bezug auf die spaltenweise Verarbeitung einer Gruppe von Rasterzeilen gemacht wurden, gelten hierbei analog.

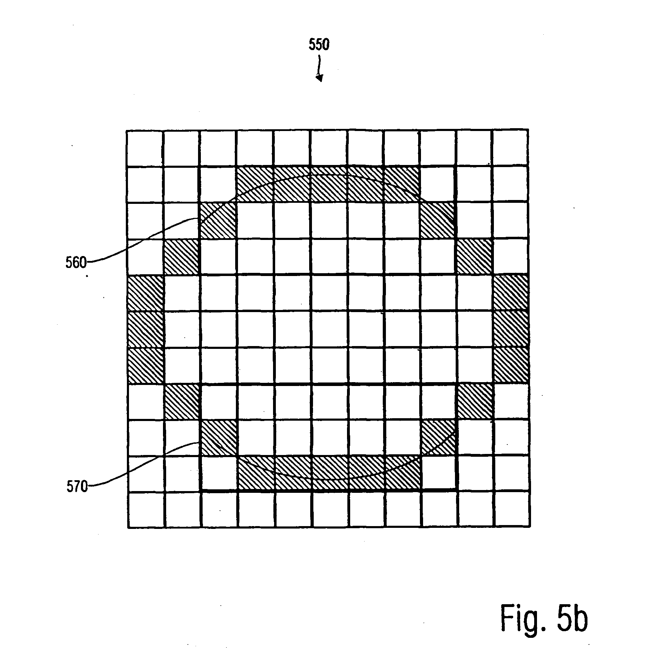

Es wird ferner darauf hingewiesen, dass Fig. 5b eine zweite graphische Darstellung eines beispielhaften Rasterbildes mit darin gekennzeichneten erkannten gebogenen Liniensegmenten zeigt. Die erkannten gebogenen Liniensegmente, die in der graphischen Darstellung 550 der Fig. 5b mit 560 und 570 gekennzeichnet sind, entsprechen hierbei dem in der graphischen Darstellung 454 gezeigten Referenzkurvenverlauf.

Es wird ferner darauf hingewiesen, dass es vorteilhaft ist, ein Rasterbild 310 der Mustererkennungseinrichtung 420 ein erstes Mal spaltenweise beginnend mit der ersten Rasterspalte 322 zuzuführen, und der Mustererkennungseinrichtung 420 das Rasterbild 310 ein zweites Mal Spaltenweise beginnend mit der letzten Rasterspalte 340 zuzuführen. Dabei können in dem ersten Durchlauf, der mit der ersten Rasterspalte 322 beginnt, Kurvenverläufe einer ersten Krümmungsrichtung erkannt werden, während in dem zweiten Durchlauf, der mit der letzten Rasterspalte 340 beginnt, Kurvenverläufe mit einer dazu entgegengesetzten Krümmungsrichtung erkannt werden. In gleicher Weise kann auch das zeilenweise Verarbeiten des Rasterbildes 310 einmal beginnend mit der ersten Rasterzeile 320 und einmal beginnend mit der letzten Rasterzeile 334 erfolgen, um wiederum Kurvenverläufe mit unterschiedlichem Krümmungsverhalten mit Hilfe einer Mustererkennungseinrichtung, die nur für die Erkennung von Kurvenverläufen mit einem einzigen Krümmungsverhalten bzw. mit einer einzigen Krümmungsrichtung ausgelegt ist, identifizieren zu können.

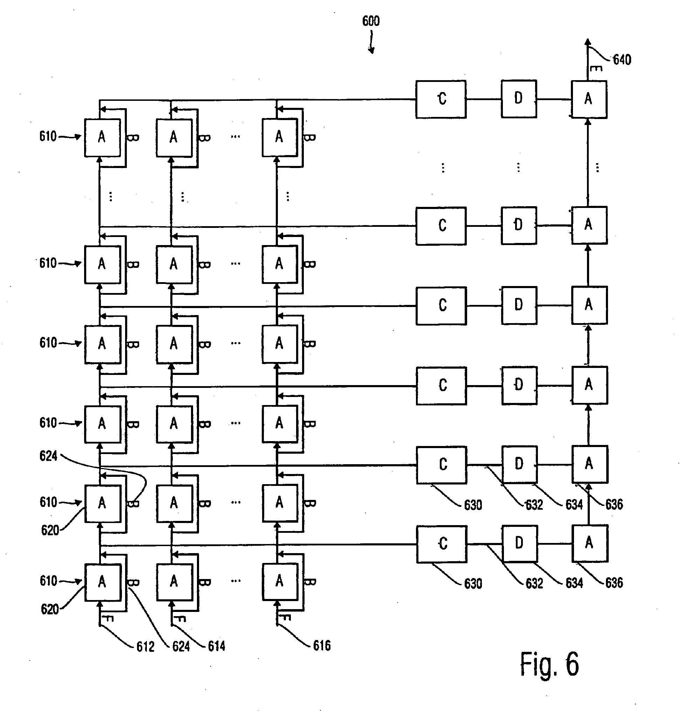

Fig. 6 zeigt ein Blockschaltbild einer Mustererkennungseinrichtung zur Verwendung in einer erfindungsgemäßen Vorrichtung 400. Die Schaltung der Fig. 6 ist in ihrer Gesamtheit mit 600 bezeichnet und beschreibt ein sog. "Hough-Array" zur Durchführung einer Hough-Transformation. Die Mustererkennungseinrichtung 400, die die Koordinatenbestimmungseinrichtung 110 realisiert, kann bevorzugt eine Suche nach Kreiskurven unterschiedlicher Radien durchführen, die eine zu identifizierende Ellipse um die Extrempunkte, also um den ersten Ellipsenpunkt, den zweiten Ellipsenpunkt, den dritten Ellipsenpunkt oder den vierten Ellipsenpunkt herum, in ausreichender Näherung beschreiben. Dies kann in besonders vorteilhafter Weise durch eine parallele systolische Hough-Transformation erfolgen. Die Hough-Transformation kann für Kreiskurven kofiguriert werden, und kann dabei für die Extremwertsuche, also für die Identifizierung von am weitesten in einer bestimmten Richtung gelegenen Punkten, angepasst sein.

Die Fig. 6 zeigt eine besonders vorteilhafte Einrichtung zur Durchführung einer Hough-Transformation. Die Einrichtung 600 zur Hough-Transformation umfasst hierbei eine Mehrzahl von hintereinander geschalteten Stufen 610, durch die mehrere Signale 612, 614, 616 parallel weitergeleitet werden. Eine Stufe enthält dabei für jedes Signal entweder ein Verzögerungselement 620, das auch mit A bezeichnet ist, oder einen Bypass 624, der auch mit B bezeichnet ist. Ferner werden die Signale an dem Ausgang einer Stufe einem Summierglied 630 zugeführt, das auch mit C bezeichnet ist. Das Summierglied ist hierbei bevorzugt ausgelegt, um festzustellen, wie viele Signale an dem Ausgang der betreffenden Stufe gleichzeitig aktiv sind. An einem Ausgang 632 eines Summiergliedes 630 liegt somit eine sog. Zeilensumme an, die angibt, wie viele Signale an dem Ausgang der betreffenden Stufe gleichzeitig aktiv sind. Die Zeilensumme 632 kann dann einem Komparator 634 zugeführt werden, der die Zeilensumme 632 mit einem vorgegeben Schwellwert vergleicht. überschreitet die Zeilensumme 632 den vorgegeben Schwellwert, so bedeutet dies, dass in der jeweiligen Stufe mindestens eine vorgegebene Anzahl von Signalen aktiv sind. Mit anderen Worten, in der jeweiligen Stufe liegt, zumindest näherungsweise, eine "gerade Linie" vor, die dadurch gekennzeichnet ist, dass mindestes eine vorgegebene Anzahl von Signalen der jeweiligen Stufe gleichzeitig aktiv sind. Ein Ausgangssignal des Komparators 634 wird darauf einem Verzögerungselement 636 zugeführt. Mehrere Verzögerungselemente 636, die jeweils mit einem Ausgang eines Komparators 634 einer Stufe 610 verbunden sind, sind hierbei in einer Kette derart verschaltet, dass das Ausgangssignal eines Verzögerungselements 636 dem Eingang eines darauffolgenden Verzögerungselements 636 zugeführt wird.

Es sei ferner darauf hingewiesen, dass die Verzögerungselemente 620, 636, getaktet arbeiten, so dass sowohl die Signale 612, 614, 616 als auch die Ausgangssignale der Komparatoren 634 getaktet weitergeleitet werden. Die Signale 612, 614, 616 und die Ausgangssignale der Komparatoren 634 werden von der Struktur her parallel und in gleicher Richtung weitergeleitet, wobei jedoch die Signale 612, 614, 616 in den einzelnen Stufen unterschiedlich stark verzögert werden, je nach dem, ob bei der Weiterleitung des Signals 612, 614, 616 in einer Stufe 610 ein Verzögerungselement 620 oder ein Bypass 624 verwendet wird. Es wird allerdings bevorzugt, das ein zentrales Signal der Mehrzahl von Signalen 612, 614, 616 genauso schnell durch die Mehrzahl von Stufen weitergeleitet wird wie die Signale von den Ausgängen der Komparatoren 634. Das zentrale Signal wird dabei bevorzugt in jeder der Stufen gleich verzögert, und auch die Ausgangssignale der Komparatoren 634 werden bevorzugt mit konstanter Verzögerung durch die Stufen weitergeleitet. Das zentrale Signal befindet sich dabei bevorzugt näherungsweise in der Mitte zwischen dem ersten Signal 612 und dem letzten Signal 614, beschreibt als einen Rasterzeile in der Mitte des der Hough-Transformationseinrichtung 600 zugeführten Bildausschnitts, oder ist von der Mitte des Bildausschnitts höchstens höchstens 25% einer Breite des Bildausschnitts entfernt. Die Breite des Bildausschnitts ist hierbei durch die Anzahl an Rasterzeilen oder Rasterspalten definiert, die der Hough-Transformationseinrichtung 600 gleichzeitig zugeführt werden.

Basierend auf der strukturellen Beschreibung wird im Folgenden die Funktionsweise der Mustererkennungseinrichtung 600 näher beschrieben. Es wird dabei davon ausgegangen, dass ein Bildausschnitt in Form von parallelen Zeitsignalen 612, 614, 616 der Hough-Transformationseinrichtung 600 zugeführt wird. Die Verzögerungselemente 620 oder die Bypässe 624 sind dabei so konfiguriert, dass verschiedene Zeitsignale 612, 614, 616 bei einem Durchlaufen der einzelnen Stufen verschieden stark verzögert werden. Die Verzögerungen sind durch Einschalten von Verzögerungselementen 620 oder Bypässen 624 so eingestellt, dass ein gebogener Kurvenverlauf (bevorzugt ein kreisförmiger gebogener Kurvenverlauf) nach Durchlaufen von einer Stufe oder von mehreren Stufen 610 gerade gebogen wird. Mit anderen Worten, ein gebogener Kurvenverlauf in dem von der Hough-Transformationseinrichtung verarbeiteten Bildausschnitts resultiert darin, dass die einzelnen Signale 612, 614, 616 zu unterschiedlichen Zeitpunkten aktiv sind. Durch eine geeignete Einstellung der Verzögerungselemente 620 bzw. der Bypässe 624 kann allerdings erreicht werden, dass Signale 612, 614, 616 die einzelnen Stufen unterschiedlich schnell durchlaufen, so dass nach dem Durchlaufen einer bestimmten Anzahl von Stufen 610 idealer Weise alle auf den Signalen 612, 614, 616 beruhenden weitergeleiteten Signale an dem Ausgang einer Stufe gleichzeitig aktiv sind. In diesem Fall tritt in der bestimmten Stufe eine besonders große Zeilensumme auf, die von der entsprechenden Summiereinrichtung 630 berechnet wird. Ein Auftreten einer derartig großen Zeilensumme kann dann dazu führen, dass der Komparator 634 der betreffenden Stufe ein aktives Signal ausgibt, das wiederum über die Kette von Verzögerungselementen 636 zu dem Ausgang 640 der Hough-Transformationseinrichtung weitergeleitet wird. Aus einer zeitlichen Lage einer Aktivität auf dem Ausgangssignal an dem Ausgang 640 der Hough-Transformationseinrichtung 600 kann damit auf eine Lage eines Kurvenverlaufs in dem in Form von Zeitsignalen 612, 614, 616 an die Hough-Transformationseinrichtung 600 eingegebenen Bildausschnitt geschlossen werden.

Es wird ferner darauf hingewiesen, dass es bevorzugt wird, dass ein vorbestimmtes Signal (auch als zentrales Signal bezeichnet) aus den Signalen 612, 614, 616 die Stufen 610 der Hough-Transformationseinrichtung 600 genauso schnell durchläuft, wie ein Ausgangssignal von den Ausgängen der Komparatoren 634, das von der Kette von Verzögerungselementen 636 weitergeleitet wird. In anderen Worten, zumindest eines der Eingangssignale 612, 614, 616 breitet sich parallel und in gleicher Geschwindigkeit wie die Ausgangssignale der Komparatoren 634 aus. Dadurch kann erzielt werden, dass das an dem Ausgang 640 der Hough-Transformationseinrichtung 600 anliegende Ausgangssignal, das auf den in der Kette von Verzögerungselementen 636 weitergeleiteten Signalen der Komparatoren 634 basiert, eine direkte Aussage über den Zeitpunkt des Auftretens eines gebogenen Liniensegments in den Eingangssignalen 612, 614, 616 trägt. Hierbei gibt der Zeitpunkt des Auftretens einer Aktivität auf dem Ausgangssignal an dem Ausgang 640 der Hough-Transformationseinrichtung 600 eine Aussage darüber, zu welchem Zeitpunkt ein gebogener Linienverlauf in Form von Eingangssignalen 612, 614, 616 in die Hough-Transformationseinrichtung eingegeben wurde. Der Zeitpunkt des Vorliegens eines gebogenen Probenverlaufs in den Signalen 612, 614, 616 erlaubt dabei freilich einen direkten Rückschluss auf eine räumliche Lage des gebogenen Kurvenverlaufs in dem Rasterbild, das den Signalen 612, 614, 616 zugrunde liegt.

Weiterhin wird darauf hingewiesen, dass bei der angegebenen Auslegung, bei der sich mindestens eines der Signale 612, 614, 616 genauso schnell durch die Stufen 610 ausbreitet, wie die Ausgangssignale der Komparatoren 634, die genaue Form der Krümmung, beispielsweise also der Krümmungsradius, in einer gebogenen Kurve, lediglich einen Einfluss darauf hat, in welcher der Stufen 610, ein Komparator 634 aktiv wird. Die genaue Form des gebogenen Kurvenverlaufs hat bei der gezeigten Auslegung allerdings keinen Einfluss auf den Zeitpunkt, an dem eine Aktivität an dem Ausgang 640 der Hough-Transformationseinrichtung 600 auftritt.

Es kann somit festgehalten werden, dass die in Fig. 6 gezeigte Hough-Transformationseinrichtung 600 geeignet ist, um in einer sehr effizienten Weise die Lage eines gebogenen Kurvenverlaufs in einem Rasterbild festzustellen, indem das Rasterbild (oder ein Ausschnitt daraus) in eine Mehrzahl von parallelen Signalen umgewandelt wird, die dann mehrere Stufen der Hough-Transformationseinrichtung 600 mit unterschiedlicher Geschwindigkeit durchlaufen. Durch die Bildung einer Spaltensumme an dem Ausgängen der Stufen 610 kann erkannt werden, wenn mindestens eine vorgegebene Anzahl von Signalen an den Ausgängen der Stufen gleichzeitig aktiv sind, was wiederum darauf hinweist, dass der ursprünglich verlaufende Kurvenverlauf "gerade gebogen" worden ist.

Bevorzugter Weise ist die Hough-Transformationseinrichtung 600 durch geeignete Auswahl von Verzögerungselementen 620 oder Bypässen 624 ausgelegt, um durch Signale 612, 614, 616 beschriebene Kurvenverläufe gerade zu biegen, die die Ellipse an dem ersten Ellipsenpunkt, dem zweiten Ellipsenpunkt, dem dritten Ellipsenpunkt oder dem vierten Ellipsenpunkt annähern können. Ferner werden bevorzugter Weise eben nur solche Kurvenverläufe, die eine Ellipse an dem ersten Ellipsenpunkt, dem zweiten Ellipsenpunkt, dem dritten Ellipsenpunkt oder dem vierten Ellipsenpunkt annähern können, gerade gebogen. Damit ist die Hough-Transformationseinrichtung 600 gemäß Fig. 6 geeignet, um das erste gebogene Liniensegment, das zweite gebogene Liniensegment, das dritte gebogene Liniensegment oder das vierte gebogene Liniensegment zu identifizieren. Der Zeitpunkt, zu dem ein Ausgangssignal an dem Ausgang 640 der Hough-Transformationseinrichtung 600 anliegt, beschreibt dabei eine Lage des identifizierten Kurvenverlaufs in dem Rasterbild, auf dem die Signale 612, 614, 616 basieren, also einen Parameter des ersten gebogenen Liniensegments, des zweiten gebogenen Liniensegments, des dritten gebogenen Liniensegments oder des vierten gebogenen Liniensegments.

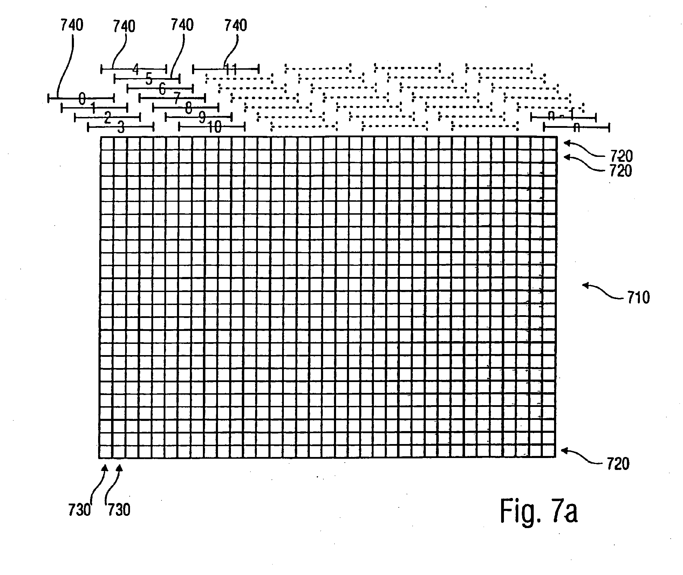

Fig. 7a zeigt eine graphische Darstellung einer Vorgehensweise zum Durchschieben eines graphischen Bildes durch eine Mustererkennungseinrichtung. Im Speziellen zeigt die Fig. 7a ein spaltenweises Durchschieben eines Bildes bzw. Rasterbildes durch die in Fig. 6 gezeigte Hough-Transformationseinrichtung 600 (auch als Hough-Feld oder Hough-Array bezeichnet).

Die Fig. 7a zeigt hierbei ein Rasterbild 710, bestehend aus einer Mehrzahl von Rasterzeilen 720 sowie eine Mehrzahl von Rasterspalten 730. Gezeigt sind ferner Gruppen 740 von jeweils bevorzugter Weise fünf Rasterspalten 730, wobei davon ausgegangen wird, dass jeweils fünf Rasterspalten gleichzeitig der Hough-Transformationseinrichtung 600 parallel in Form von Signalen 612, 614, 616 zugeführt werden. Für weitere Einzelheiten wird hierbei auch auf die graphische Darstellung 300 der Fig. 3 verwiesen.

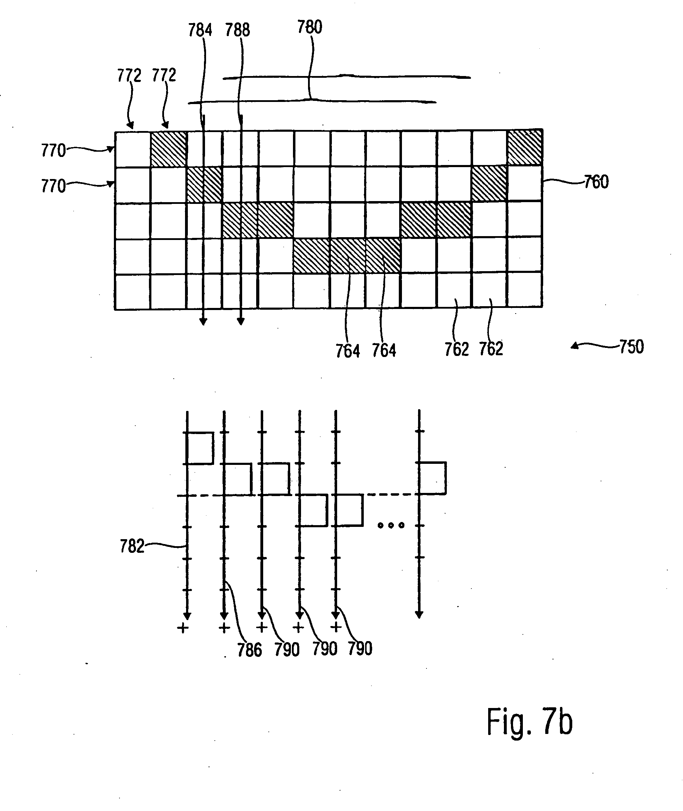

Fig. 7b zeigt eine graphische Darstellung von bei einer Umwandlung eines Rasterbildes in parallele Zeitsignale entstehenden Zeitsignalen. Die graphische Darstellung der Fig. 7b ist in ihrer Gesamtheit gemäß 750 bezeichnet. Die graphische Darstellung 750 zeigt ein Rasterbild 760, das eine Mehrzahl von inaktiven Rasterpunkten bzw. Bildpunkten 762 sowie eine Mehrzahl von durch Schraffierung gekennzeichneten aktiven Rasterpunkten bzw. Bildpunkten 764 aufweist. Die aktiven Rasterpunkte bzw. Bildpunkte 764 beschreiben bevorzugt einen Kurvenverlauf. Wie bereits oben beschrieben umfasst das Rasterbild 760 hierbei eine Mehrzahl von Rasterzeilen 770 sowie eine Mehrzahl von Rasterspalten 772. Es wird ferner davon ausgegangen, dass Zeitsignale basierend auf einem Bildausschnitt 780, der eine Gruppe von sieben Rasterspalten umfasst, gebildet werden. So ist beispielsweise ein erstes Zeitsignal 782 einer ersten in der Gruppe 780 von Rasterspalten enthaltenen Rasterspalte 784 zugeordnet. Das Zeitsignal 782 entsteht hierbei durch zeilenweißes Abtasten des Rasterbildes 760 entlang der zugeordneten Rasterspalte 784. In ähnlicher Weise entsteht ein zweites Zeitsignal 786 durch zeilenweißes Abtasten der zweiten Rasterspalte 788 aus der Gruppe 780 von Rasterspalten. Es zeigt sich bei Betrachtung der Zeitverläufe deutlich, dass bei der beschriebenen Abtastrichtung aktive Rasterpunkte, die in der gleichen Rasterzeile des Rasterbildes 760 liegen, in gleichzeitigen Aktivitätsimpulsen auf den Zeitsignalen 782, 786, 790 resultieren. Eine waagrechte Linie, das heißt, eine Linie, die innerhalb einer Rasterzeile verläuft, macht sich somit in den Zeitsignalen 782, 786, 790 durch gleichzeitige Impulse auf den Zeitsignalen 782, 786, 790 bemerkbar.

Wird nunmehr davon ausgegangen, dass die Zeitsignale 782, 786, 790 einer Hough-Transformationseinrichtung 600 als Eingangssignale 612, 614, 616 zugeführt werden, und dass die Signale 612, 614, 616 in einzelnen Stufen 610 der Hough-Transformationseinrichtung 600 verschieden stark verzögert werden, so wird klar, dass die verschieden starke Verzögerung der Zeitsignale 782, 786, 790 einer Verzerrung des Rasterbildes 760 entspricht, wodurch ein gebogener Kurvenverlauf zu einer geraden Linie verbogen werden kann. Eine gerade Linie aber, die mit einer gleichzeitigen Aktivität von mehreren der Zeitsignale 782, 786, 790 korrespondiert, kann in der Hough-Transformationseinrichtung 600, wie oben beschrieben, erkannt werden.

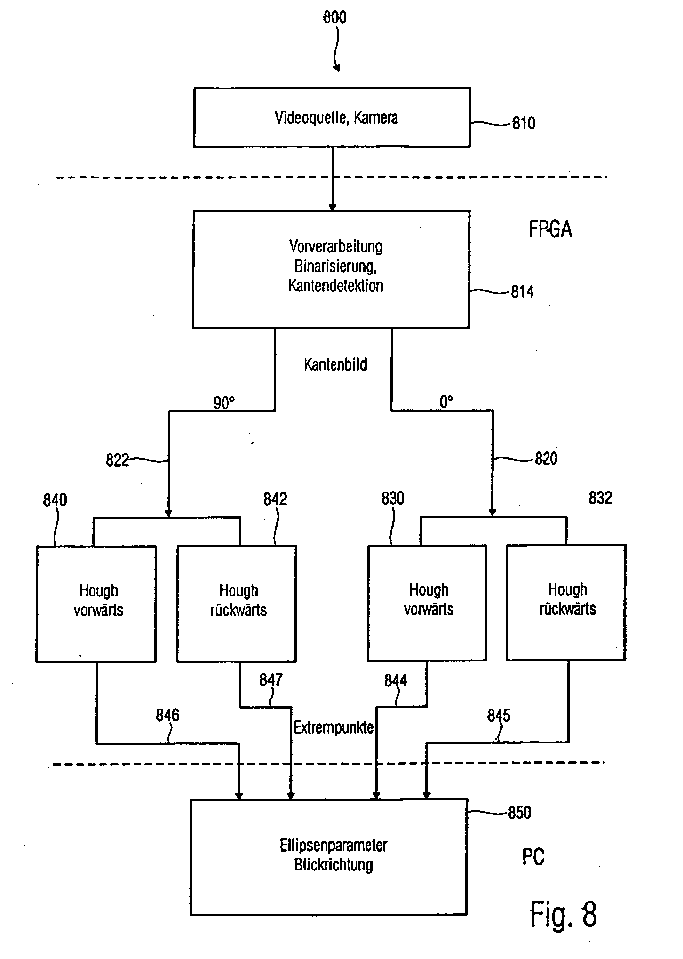

Fig. 8 zeigt ein Blockschaltbild einer erfindungsgemäßen Vorrichtung zum Ermitteln einer Information über eine Form und/oder eine Lage einer Ellipse der im graphischen Bild gemäß einem dritten Ausführungsbeispiel der vorliegenden Erfindung. Die erfindungsgemäße Vorrichtung der Fig. 8 in ihrer Gesamtheit mit 800 bezeichnet, und ist ausgelegt, um basierend auf einem von einer Videoquelle oder einer Kamera 810 gelieferten graphischen Bild 812 eine Blickrichtung eines Menschen oder eines Tieres zu bestimmen. Die Videoquelle 810, die beispielsweise eine Kamera umfasst, liefert dabei Videodaten 812 an eine Vorverarbeitungseinrichtung 814. Die Vorverarbeitungseinrichtung 814 kann in einem eigenen feldprogrammierbaren Gatterfeld (field programmable gate array, FPGA) oder in einer anwendungsspezifischen integrierten Schaltung (application specific integrated circuit, ASIC) integriert werden. Die Vorverarbeitungseinrichtung 814 kann allerdings auch mit den im Folgenden beschriebenen Hough-Transformationseinrichtungen bzw. Hough-Feldern (Hough-Arrays) in einem einzigen FPGA untergebracht sein. Die Vorverarbeitungseinrichtung 814 ist bevorzugt ausgelegt, um die Videodaten 812 über eine Schwellwert-Binarisierung zur Erzeugung von Binärbildern und eine nachfolgende Kantenextraktion aus den bei der Schwellwert-Binarisierung entstehenden Binärbildern in Kantenbilder umzuwandeln. Die Kantenextraktion aus den Binärbildern kann auf Basis von Dilatation (Streckung) und Subtraktion erfolgen, wodurch binäre Kantenbilder entstehen. In anderen Worten, die Vorverarbeitungseinrichtung 814 kann ausgelegt sein, um beispielsweise eine Helligkeit und/oder ein Grauwert der Videodaten mit einem Schwellwert zu vergleichen, und um basierend auf dem Vergleichsergebnis ein binäres Bild, das lediglich helle oder dunkle Bildbereiche unterscheidet, zu erzeugen. Aus dem Binärbild kann dann eine gedehnte oder gestauchte Version des Binärbildes erzeugt werden, woraufhin eine Differenz zwischen dem ursprünglichen Binärbild und dem gedehnten oder gestauchten Binärbild ermittelt wird. Die Differenz kann dann für die Erzeugung des Kantenbildes, das Kanten in den Videodaten 812 beschreibt, verwendet werden.

Nach der Vorverarbeitung in der Vorbearbeitungseinrichtung 814 steht dann das Kantenbild bevorzugt zur Weiterverarbeitung in einer ersten Richtung sowie in einer dazu senkrechten zweiten Richtung zur Verfügung. Das Kantenbild kann allerdings dennoch in einem einzigen Speicher abgelegt sein, der einen Zugriff auf das Kantenbild entlang einer ersten Richtung und entlang einer dazu orthogonalen zweiten Richtung ermöglicht. Die Verarbeitung des Kantenbildes in der ersten Richtung kann beispielsweise eine spaltenweiße Verarbeitung des Kantenbildes bedeuten, während die Verarbeitung in der dazu orthogonalen Richtung eine zeilenweiße Verarbeitung des Kantenbildes bedeuten kann. Das Kantenbild, das zur Verarbeitung in der ersten Richtung vorliegt, ist mit 820 bezeichnet, während das zur Verarbeitung in der dazu orthogonalen Richtung vorliegende Kantenbild mit 822 bezeichnet ist. Das zur Verarbeitung in der ersten Richtung vorliegende Kantenbild 820 wird daraufhin parallel einer ersten Hough-Transformationseinrichtung 830 (auch als Hough-Feld oder Hough-Array bezeichnet) zugeführt, die ausgelegt ist, um einen gebogenen Kurvenverlauf einer ersten Krümmungsrichtung zu erkennen. Das Kantenbild 820 wird ferner einer zweiten Hough-Transformationseinrichtung 832, die ausgelegt ist, um einen gebogenen Kurvenverlauf einer zweiten Krümmungsrichtung, die der ersten Krümmungsrichtung entgegengesetzt ist, zu erkennen.

Die beiden Hough-Transformationseinrichtungen 830, 832 können allerdings auch gleichartig ausgelegt sein, wobei der ersten Hough-Transformationseinrichtung 830 das Kantenbild beginnend an einem ersten Rand zugeführt wird, und wobei der zweiten Hough-Transformationseinrichtung das Kantenbild beginnend an einem zweiten Rand zugeführt wird, wobei der erste Rand dem zweiten Rand gegenüberliegt. Wird beispielsweise der ersten Hough-Transformationseinrichtung 830 das Kantenbild 820 zeilenweise beginnend mit der ersten Rasterzeile zugeführt, so kann der zweiten Hough-Transformationseinrichtung 832 das Kantenbild 820 zeilenweise beginnend mit der letzten Rasterzeile zugeführt werden.

Die beiden Hough-Transformationseinrichtungen 830, 832 sind dabei ausgelegt, um gebogene Liniensegmente in den Kantenbildern 820 zu identifizieren, die eine Ellipse in den Videodaten 812 an dem ersten Ellipsenpunkt, dem zweiten Ellipsenpunkt, dem dritten Ellipsenpunkt oder dem vierten Ellipsenpunkt annähern. Ferner sind die Hough-Transformationseinrichtungen 830, 832 ausgelegt, um basierend auf den identifizierten gebogenen Liniensegmenten die Koordinaten der zugehörigen Ellipsenpunkte zu identifizieren. In ähnlicher Weise wird das zur Verarbeitung in der zweiten Richtung vorliegende Kantenbild 822 einer dritten Hough-Transformationseinrichtung 840 sowie einer vierten Hough-Transformationseinrichtung 842 zugeführt, wobei die dritte Hough-Transformationseinrichtung 840 von ihrer prinzipiellen Funktionsweise her der ersten Hough-Transformationseinrichtung 830 entspricht, und wobei die vierte Hough-Transformationseinrichtung 842 von ihrer prinzipiellen Funktionsweise her der zweiten Hough-Transformationseinrichtung 832 entspricht. Somit liefern die erste Hough-Transformationseinrichtung 830, die zweite Hough-Transformationseinrichtung 832, die dritte Hough-Transformationseinrichtung 840 sowie die vierte Hough-Transformationseinrichtung 842 die Koordinaten 844, 845, 846, 847 des ersten Ellipsenpunktes, des zweiten Ellipsenpunktes, des dritten Ellipsenpunktes und des vierten Ellipsenpunktes.

Es wird hierbei darauf hingewiesen, dass die vier Hough-Transformationseinrichtungen 830, 832, 840, 842 bevorzugt in einem FPGA realisiert sind, wie später noch beschrieben wird. Eine bevorzugt in einem Personalcomputer (PC) realisierte Ellipsenberechnungseinrichtung 850 ist ferner ausgelegt, um basierend auf den Koordinaten 844, 845, 846, 847 des ersten Ellipsenpunktes, des zweiten Ellipsenpunktes, des dritten Ellipsenpunktes und des vierten Ellipsenpunktes die Ellipsenparameter zu berechnen. Aus den Ellipsenparametern kann damit ferner die Blickrichtung des von der Videoquelle 810 beobachteten Menschen oder Tieres berechnet werden.

In anderen Worten, die um 90° gegeneinander gedrehten Binärbilder 820, 822 gelangen in die Hough-Arrays 830, 832, 840, 842, in denen alle vier Extrempunkttypen, also vier ausgezeichnete Ellipsenpunkte, gesucht werden. Aus den Extrempunkten, also dem ersten Ellipsenpunkt, dem zweiten Ellipsenpunkt, dem dritten Ellipsenpunkt und dem vierten Ellipsenpunkt, werden daraufhin beispielsweise in einen Personalcomputer die Ellipsen bzw. deren Parameter berechnet, und es wird daraus dann die Blickrichtung des Menschen oder Tieres bestimmt.

Es wird im Übrigen darauf hingewiesen, dass, wie schon oben erläutert, ggf. die Koordinaten 844 des ersten Ellipsenpunktes und die Koordinaten des 845 des zweiten Ellipsenpunktes ausreichen, um zumindest die Koordinaten des Mittelpunktes der zu bestimmenden Ellipse zu berechnen. Daher kann ggf. auf die Berechnung des um 90° gedrehten Kantenbildes 822 verzichtet werden, wodurch auch die dritte Hough-Transformationseinrichtung 840 und die vierte Hough-Transformationseinrichtung 842 eingespart werden können.

Ferner kann zumindest die vierte Hough-Transformationseinrichtung 842 auch dann eingespart werden, wenn sämtliche Ellipsenparameter zu berechnen sind, da die Koordinaten von drei Extrempunkten der Ellipse für eine solche Berechnung ausreichend sind.

Ferner wird darauf hingewiesen, dass die Vorverarbeitungseinheit beliebig variiert werden kann, solange sichergestellt ist, dass den Hough-Transformationseinrichtungen 830, 832, 840, 842 ein Kantenbild zugeführt werden kann. Ferner kann eine hier als parallel gezeigte Verarbeitung auch sequentiell erfolgen, solange genügend Zeit zur Verfügung steht.

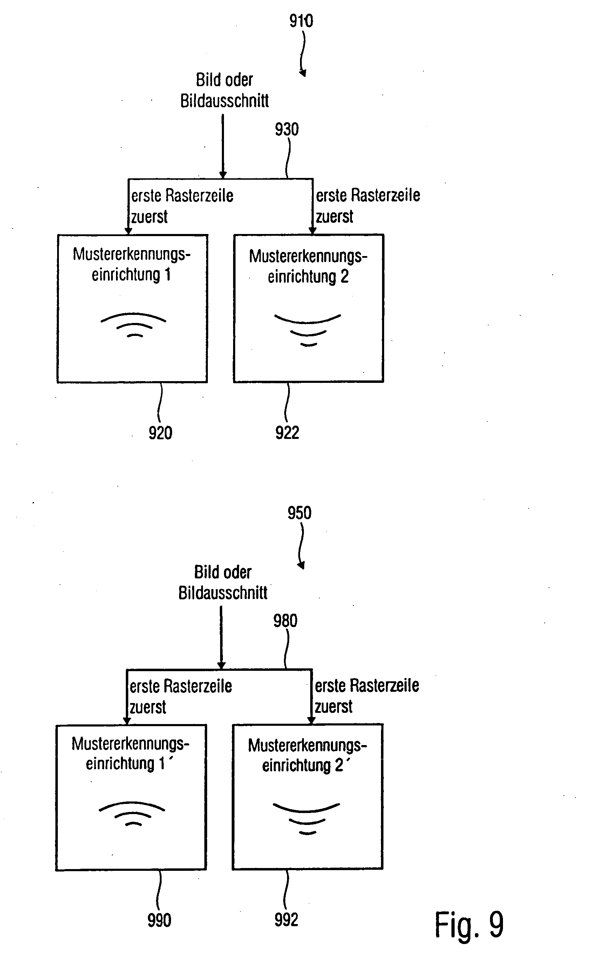

Fig. 9 zeigt einen Ausschnitt aus einem Blockschaltbild einer erfindungsgemäßen Vorrichtung zum Ermitteln einer Information durch eine Form und/oder eine Lage einer Ellipse in einem graphischen Bild gemäß einem vierten Ausführungsbeispiel der vorliegenden Erfindung. Fig. 9 zeigt hierbei in einem Auszug 910 aus einem Blockschaltbild eine Möglichkeit zum Identifizieren von gebogenen Liniensegmenten unterschiedlicher Krümmungsrichtung unter Verwendung zweier verschiedener Mustererkennungseinrichtungen 920, 922. Die erste Mustererkennungseinrichtung 920 ist hierbei ausgelegt, um gebogene Kurvenverläufe einer ersten Krümmungsrichtung zu erkennen, während hingegen die zweite Mustererkennungseinrichtung 922 ausgelegt ist, um gebogene Kurvenverläufe mit einer zweiten Krümmungsrichtung zu erkennen, wobei die zweite Krümmungsrichtung der ersten Krümmungsrichtung entgegengesetzt ist. Ein Bild oder Bildausschnitt 930 kann hierbei beiden Mustererkennungseinrichtungen 920, 922 in gleicher Weise zugeführt werden. In anderen Worten, der ersten Mustererkennungseinrichtung 920 wird als Bild oder Bildausschnitt 930 derart zugeführt, dass die erste Rasterzeile zuerst zugeführt wird. Der zweiten Mustererkennungseinrichtung 922 wird das Bild oder der Bildausschnitt 930 ebenfalls so zugeführt, dass die erste Rasterzeile zuerst zugeführt wird. Die Anwendung der ersten Mustererkennungseinrichtung 920 und der zweiten Mustererkennungseinrichtung 922 kann hierbei gleichzeitig oder nacheinander erfolgen. Ferner wird darauf hingewiesen, dass mit Hinblick auf das Blockschaltbild 910 der Begriff Rasterzeile auch durch den Begriff Rasterspalte ersetzt werden kann.

Ein zweites Blockschaltbild 950 zeigt eine zweite Möglichkeit zur Erkennung gebogener Kurvenverläufe mit unterschiedlicher Krümmungsrichtung in einem Bild oder Bildausschnitt 980. Hierzu kann beispielsweise das Bild oder der Bildausschnitt 980, beginnend mit einer ersten Rasterzeile der ersten Mustererkennungseinrichtung 990 zugeführt werden. Ferner kann das Bild oder der Bildausschnitt 980 einer zweiten Mustererkennungseinrichtung 992 beginnend mit der letzten Rasterzeile zugeführt werden. Die beiden Mustererkennungseinrichtungen 990, 992 sind hierbei beide ausgelegt, um nur gebogene Kurvenverläufe einer ersten Krümmungsrichtung zu erkennen. Durch das Zuführen des Bildes oder Bildausschnitts 980 in unterschiedlichen Richtungen kann also erreicht werden, dass die erste Mustererkennungseinrichtung 990 einen gebogenen Kurvenverlauf in dem Bildausschnitt erkennt, der in dem ursprünglichen Bild die erste Krümmungsricfitung aufweist, während hingegen die zweite Mustererkennungseinrichtung 992 einen gebogenen Kurvenverlauf in dem ursprünglichen Bild oder Bildausschnitt 980 erkennen kann, der in dem ursprünglichen Bild eine zweite, der ersten Krümmungsrichtung entgegengesetzte, Krümmungsrichtung aufweist. Ferner wird darauf hingewiesen, dass zwei separate Mustererkennungseinrichtungen 990, 992 nicht erforderlich sind, wenn das Bild oder der Bildausschnitt 980 beispielsweise der ersten Mustererkennungseinrichtung 990 hintereinander zuerst beginnend mit der ersten Rasterzeile und dann beginnend mit der letzten Rasterzeile zugeführt wird. Die zweite Mustererkennungseinrichtung 992 kann in diesem Fall also entfallen.

Es wird darauf hingewiesen, dass die beschriebenen Ausführungsformen gemäß den Blockschaltbildern 910 und 950 beispielsweise in der Vorrichtung 800 eingesetzt werden können, je nach dem welche Realisierung als vorteilhaft erscheint.

Im Folgenden wird die Bestimmung der Ellipsenparameter aus den Koordinaten des ersten Ellipsenpunktes, des zweiten Ellipsenpunktes und des dritten Ellipsenpunktes näher beschrieben. Es wird hierbei darauf hingewiesen, dass im Folgenden der erste Ellipsenpunkt, der zweite Ellipsenpunkt und der dritte Ellipsenpunkt auch als "Extrempunkte" bezeichnet werden.

In einem ersten Schritt können hierbei die Koordinaten ($x_m$, $y_m$) des Ellipsenmittelpunkts 240 aus den Koordinaten des ersten Ellipsenpunktes und des zweiten Ellipsenpunktes berechnet werden. Es sei hierbei darauf hingewiesen, dass im Folgenden die Definitionen der graphischen Darstellungen 200, 250 der Fig. 2a und 2b verwendet werden, welche bereits früher ausführlich erläutert wurden. Es wird ferner darauf hingewiesen, dass aufgrund der Symmetrie der Ellipse der Mittelpunkt immer genau in der Mitte zwischen zwei gegenüberliegenden Extrempunkten liegt, wie dies auch der graphischen Darstellung 200 der Fig. 2a entnommen werden kann. Somit gilt:

$$x_m = \frac{x_1 + x_3}{2} = \frac{x_0 + x_2}{2}$$

und

$$y_m = \frac{y_1 + y_3}{2} = \frac{y_0 + y_2}{2} \, .$$

Im Folgenden wird weiterhin die Bestimmung der Formparameter der Ellipse, also der Länge a der ersten Halbachse der Ellipse, der Länge b der zweiten Halbachse der Ellipse und des Rotationswinkels $\alpha$ beschrieben.

Die Bestimmung der Formparameter aus den Koordinaten $(x_1,y_1)$, $(x_2,y_2)$, $(x_3,y_3)$, $(x_4,y_4)$ der Extrempunkte ist schwieriger. Mit dem bekannten Mittelpunkt ($x_m$, $y_m$) wird die Ellipse zuerst in den Koordinatenursprung verschoben, wie dies Bezug nehmend auf Fig. 2b bereits beschreiben wurde.

Es wird daher im Folgenden eine rotierte Ellipse 270 im Koordinatenursprung 264 angenommen. Sie hat vier Berührungspunkte mit einem kleinstmöglichen, anliegenden Rechteck. Je zwei Berührungspunkte sind rotationssymmetrisch zum Koordinatensprung. Es werden daher nur die zwei Punkte 276, 280 im ersten Quadranten betrachtet.

Die nachfolgend gezeigten Gleichungen (1.1) beschreiben eine um $\alpha$ rotierte Ellipse im Koordinatenursprung in der Parameterform.

$$x = a \cdot \cos\theta \cdot \cos\alpha - b \cdot \sin\theta \cdot \sin(\alpha)$$
$$y = a \cdot \cos\theta \cdot \sin\alpha + b \cdot \sin\theta \cdot \cos(\alpha) \qquad (1.1)$$

Dabei sind x und y Koordinaten von Ellipsenpunkten in Abhängigkeit von dem Parameter $\theta$.

Das Auflösen des Gleichungssystems (1.1) nach $\tan(\theta)$ ergibt:

$$\tan(\theta) = \frac{a}{b} \cdot \frac{y - x \cdot \tan\alpha}{y \cdot \tan\alpha + x} \qquad (1.2)$$

Aus der Bedingung für den x-Extremwert

$$0 = \frac{\partial x}{\partial \theta_x} = -a \cdot \sin\theta_x \cdot \cos\alpha - b \cdot \cos\theta_x \cdot \sin\alpha \qquad (1.3)$$

kann Gleichung (1.4) abgeleitet werden als

$$\tan\theta_x \;=\; -\frac{b}{a}\;\cdot\;\tan\alpha, \qquad\qquad (1.4)$$

und aus der Bedingung für den y-Extremwert

$$0 = \frac{\partial y}{\partial \theta_y} = -a\;\cdot\;\sin\theta_y\cdot\;\sin\alpha\;-\;b\;\cdot\;\cos\theta_y\cdot\;\cos\alpha \qquad (1.5)$$

kann Gleichung (1.6) als

$$\tan\theta_y \;=\; \frac{b}{a}\cdot\frac{1}{\tan\alpha} \qquad\qquad (1.6)$$

abgeleitet werden. Die Gleichungen beschreiben die Orte der Extrempunkte in Abhängigkeit von $\theta$. In anderen Worten, $\theta_x$ und $\theta_y$ beschreiben Parameterwerte des Parameters $\theta$ für den transformierten ersten Ellipsenpunkt 276 bzw. für den transformierten dritten Ellipsenpunkt 280 im Hinblick auf die Gleichung (1.1).

Gleichsetzen der Gleichungen (1.2) und (1.4), beziehungsweise der Geichungen (1.2) und (1.6) führt nach den Substitutionen

$$\tan(\alpha) \;=\; u, \quad \frac{x_x}{y_x}=k_x \quad \text{und} \quad \frac{y_y}{x_y}=k_y$$

zu:

$$\frac{b^2}{a^2} = \frac{k_x\cdot u - 1}{u^2 + k_x\cdot u} \qquad\qquad (1.7)$$

und

$$\frac{b^2}{a^2} = \frac{k_y\cdot u - u^2}{k_y\cdot u + 1}\;\cdot \qquad\qquad (1.8)$$

Im Folgenden wird die Berechnung des Rotationswinkels $\alpha$ erläutert. Zum Errechnen des Rotationswinkels kann das quadratische Achsenverhältnis $\dfrac{a^2}{b^2}$ der Ellipse durch Gleichsetzen der Gleichungen (1.7) und (1.8) eliminiert werden. Das führt zu einer Gleichung 4. Ordnung:

$$u^4 + u^3 \cdot (k_x - k_y) + u \cdot (k_x - k_y) - 1 = 0 \qquad (1.9)$$

Die Lösungen wurden mit dem Computer-Algebra-Programm Maple gefunden. Zwei der vier Lösungen der Gleichung (1.9) sind imaginär. Die beiden anderen Lösungen $u_1$ und $u_2$ sind:

$$u_{1,2} = -\frac{1}{2} \cdot (k_x - k_y) \pm \frac{1}{2} \cdot \sqrt{(k_x - k_y)^2 + 4} \qquad (1.10)$$

Nach der Rücksubstitution unterscheiden sich die zwei Lösungen für $\alpha$ genau um 90°, weil eine um 90° gedrehte Ellipse gleich einer ungedrehten Ellipse mit reziprokem Achsenverhältnis ist. Durch eine Fallunterscheidung kann die richtige Lösung ermittelt werden:
Haben $x_x$ und $y_y$ gleiche Vorzeichen, so gilt:

$$u = -\frac{1}{2} \cdot (k_x - k_y) + \frac{1}{2} \cdot \sqrt{(k_x - k_y)^2 + 4} \qquad (1.11)$$

Bei unterschiedlichen Vorzeichen hingegen gilt:

$$u = -\frac{1}{2} \cdot (k_x - k_y) - \frac{1}{2} \cdot \sqrt{(k_x - k_y)^2 + 4} \qquad (1.12)$$

Jetzt kann mit dem bekannten Rotationswinkel das Achsenverhältnis $\rho = \dfrac{a^2}{b^2}$ aus Gleichung (1.7) oder Gleichung (1.8) bestimmt werden.
Im Folgenden wird eine Berechnung der Länge der Halbachsen beschrieben.
Bis jetzt ist der Rotationswinkel $\alpha$ und das Achsenverhältnis $\rho$ bestimmt. Zur Berechnung der Längen der Halbachsen muss noch einmal auf die Ellipsengleichung zurückgegriffen werden. Dabei ergibt sich aus den Orten der Extrempunkte $\theta_x$ und $\theta_y$ folgendes Gleichungssystem:

$$\begin{aligned}
x_x &= a \cdot \cos(\theta_x)\cos(\alpha) - b \cdot \sin(\theta_x)\sin(\alpha) \\
x_y &= a \cdot \cos(\theta_y)\cos(\alpha) - b \cdot \sin(\theta_y)\sin(\alpha)
\end{aligned} \qquad (1.13)$$

Daraus kann durch Erweitern und Subtraktion a eliminiert werden:

$$\begin{aligned}
x_x \cdot \cos\theta_y - x_y \cdot \cos\theta_x &= \\
= b \cdot \sin\alpha \cdot (-\cos\theta_y \cdot \sin\theta_x &+ \cos\theta_x \cdot \sin\theta_y)
\end{aligned} \qquad (1.14)$$

Durch Einsetzen von (1.4) und (1.6) in (1.14) können $\theta_x$ und $\theta_y$ eliminiert werden. Übrig bleibt ein von Rotationswinkel $\alpha$, Achsenverhältnis $\rho$ und den x-Koordinaten zweier Extrempunkte abhängiger Ausdruck für die Halbachse b:

$$b = \frac{\rho \cdot \tan\alpha \cdot \left( x_x \cdot \sqrt{\dfrac{\rho^2 + \tan^2\alpha}{\rho^2}} - x_y \cdot \sqrt{\dfrac{\rho^2 \cdot \tan^2\alpha + 1}{\rho^2 \cdot \tan^2\alpha}} \right)}{\sin\alpha \cdot (\tan^2\alpha + 1)} \qquad (1.15)$$

Aus dem Achsenverhältnis $\rho$ und der Halbachse b kann problemlos die fehlende Halbachse $\alpha$ berechnet werden:

$$a = \rho \cdot b \qquad\qquad (1.16)$$

Im Folgenden wird auf das Problem der Überbestimmtheit der Gleichungssysteme bei der Berechnung der Ellipsenparameter eingegangen. Dabei wird zunächst das Problem an sich dargestellt. Weiterhin wird beschrieben, wie die Überbestimmtheit ausgenutzt werden kann, um die Zuverlässigkeit der erfindungsgemäßen Vorrichtung bzw. des erfindungsgemäßen Verfahrens zu erhöhen.

Mit vier gefundenen Extrempunkten ist die Ellipse überbestimmt. Zur Bestimmung der fünf Parameter der Ellipse sind nur 5 Koordinaten aus den 4 möglichen Extrempunkten (8 Koordinaten) notwendig. Es werden daher nur "2,5 Ellipsenpunkte" benötigt.

Zwei gegenüberliegende Extrempunkte werden für die Bestimmung des Mittelpunktes benötigt. Aus Versuchen wurde gefunden, dass für eine Ellipse nach Fig. 2b immer folgende Gleichung gilt:

$$1 = \frac{y_y}{y_x} \cdot \frac{x_y}{x_x} \qquad\qquad (1.17)$$

Das heißt, dass zur Bestimmung aller vier Werte $x_x$, $x_y$, $y_x$ und $y_y$ drei gemessene Werte ausreichen. Davon sind zwei zwangsläufig aus der Bestimmung des Mittelpunktes bekannt. Eine weitere Koordinate eines dritten Punktes muss dann zur Bestimmung der übrigen Ellipsenparameter herangezogen werden.

Beispielsweise werden Punkt 1 und Punkt 3, also der erste Ellipsenpunkt 226 und der zweite Ellipsenpunkt 228, zur Bestimmung des Mittelpunktes 240 herangezogen. Aus $x_3 - x_m$ wird nach Verschiebung in den Koordinatenursprung $x_x$, und aus $y_3 - y_m$ wird $y_x$. $x_x$ und $y_x$ beschreiben somit einen Extremwert in x-Richtung. Aus einer weiteren Koordinate aus dem Extrempunkt in y-Richtung kann durch Gleichung (1.17) der vierte Wert bestimmt werden.

Die Messwerte, also die von der Koordinatenbestimmungseinrichtung gelieferten Koordinaten der Extrempunkte, sind nicht exakt. Sie erfüllen also nicht ohne weiteres Gleichung (1.17). Wird anstelle des errechneten Wertes der gemessene (also der von der Koordinatenbestimmungseinrichtung gelieferte) Wert ohne Rücksicht auf Gleichung (1.17) für die Berechnung der Ellipsenparameter herangezogen, besteht die Gefahr aus leicht fehlerhaften Messpunkten falsche Ergebnisse zu erhalten. Da in der Herleitung der Ellipsenparameter davon ausgegangen wird, dass tatsächlich eine Ellipse vorliegt, müssen die Werte (also die bei den Berechnungen verwendeten Koordinaten) auch von "echten" Ellipsen stammen, das heißt Gleichung (1.17) muss (zumindest näherungsweise) immer durch die von der Koordinatenbestimmungseinrichtung gelieferten Koordinaten erfüllt sein (solange die von der Koordinatenbestimmungseinrichtung gelieferten Koordinaten alle auf zu einer einzigen Ellipse gehörigen Punkten basieren).

Im folgenden wird erläutert wie die oben beschriebene Überbestimmung ausgenutzt werden kann.

Der Abstand zwischen einem (unter Verwendung von Formel (1.17)) errechneten Wert (für eine Koordinate des dritten Ellipsenpunktes 280) und einem gemessenen (d.h. direkt von der Koordinatenbestimmungseinrichtung gelieferten) Wert kann zur Beurteilung einer gefundenen Ellipse benutzt werden. Es kann sichergestellt werden, dass die drei Extrempunkte von einer Ellipse im Eingangsbild stammen.

Stehen vier Punkte zur Verfügung, kann die Berechnung der Ellipsenparameter mit jeweils dreien (oder insgesamt 5 Koordinaten) durchgeführt werden. Aus vier Punkten sind beispielsweise drei unterschiedliche Mengen mit drei Punkten zu bilden. Die Parameter der vier daraus errechneten Ellipsen können gemittelt werden, um die Überbestimmtheit beim Vorhandensein von vier Punkten zu überwinden.

Zusammenfassend lässt sich also festhalten, dass basierend auf den vorher beschriebenen Konzepten eine echtzeitfähige Ellipsenerkennung auf Basis der Hough-Transformation realisiert werden kann. In einem ersten Schritt werden dabei Extremwerte bzw. Extrempunkte der Ellipse (die auch als erster Ellipsenpunkt, zweiter Ellipsenpunkt, dritter Ellipsenpunkt und vierter Ellipsenpunkt bezeichnet werden) bestimmt. Mit Hilfe einer parallelen Hough-Transformation oder anderen Verfahren der Mustererkennung werden also markante Punkte der Ellipse in einem Bild gesucht, aus deren Lage es möglich ist, die Ellipsenparameter (also den durch die Koordinaten $(x_m, y_m)$ beschriebenen Mittelpunkt,

die Halbachsen a und b sowie die Drehung $\alpha$) oder Funktionen der Ellipsenparameter wie z.B. $\dfrac{a}{b}$ genau zu bestimmen.

Markante Punkte der Ellipse sind die x- und y-Koordinaten der Extremwerte bzw. Extrempunkte in positive und negative x-Richtung sowie in positive und negative y-Richtung des Kantenbildes. Die genannten Extrempunkte sind beispielsweise in der graphischen Darstellung 200 der Fig. 2a gezeigt.

Für eine eindeutige Bestimmung der Ellipsenparameter müssen genau zwei Extrempunkte einer Richtung sowie eine weitere Koordinate eines dritten Extrempunktes bekannt sein. Beispielsweise ist es ausreichend, wenn die Koordinaten $(x_0, y_0)$ und $(x_2, y_2)$ und eine der Koordinaten $x_1$ oder $y_1$ oder $x_3$ oder $y_3$ bekannt ist. Ebenso ist es ausreichend, wenn die Koordinaten $(x_1, y_1)$ und $(x_3, y_3)$ sowie eine der Koordinaten $x_0$ oder $y_0$ oder $x_2$ oder $y_2$ bekannt sind. In mathematischer Schreibweise kann man wie folgt formulieren:

$((x_0, y_0)$ und $(x_2, y_2)$ und $(x_1$ oder $y_1$ oder $x_3$ oder $y_3))$ oder $((x_1, y1)$ und $(x3, y3)$ und $(x_0$ oder $y_0$ oder $x_2$ oder $y_2))$ müssen für eine Bestimmung der Ellipsenparameter bekannt sein.

Stehen mehr Informationen (also mehr Koordinaten) zur Verfügung, so kann die Mehrdeutigkeit der Berechnung durch geeignete Verfahren, wie z.B. Minimierung der Fehler beseitigt werden. Sind mehr Punkte als nötig bekannt, so können ferner mit jeweils 2,5 aus den (maximal) vier bekannten Punkten mehrere Ellipsen berechnet werden. Die Parameter dieser Ellipsen werden gemittelt und ergeben die Parameter der Ergebnisellipse. In anderen Worten, es können jeweils 5 Parameter (von "2,5 Punkten") verwendet werden, um mehrere Sätze von Ellipsenparametern zu berechnen. Daraufhin kann eine Mittelung über die mehreren berechneten Sätze von Ellipsenparametern erfolgen.

Die Bestimmung der Extrempunkte kann auch als eine Extremwertsuche aufgefasst werden. Die Extremwertsuche kann durch die Suche nach Kreiskurven mit unterschiedlichen Radien, die die Ellipsen (bzw. die gesuchte Ellipse) um die Extrempunkte in ausreichender Näherung beschreiben, erfolgen. Die Kreiskurven-Suche erfolgt dann beispielsweise in positiver und negativer x- und y-Richtung, also beispielsweise in allen 4 Standard-Richtungen eines gerasteten Bildes. Dabei wird in jeder Richtung das Bild in überlappenden Streifen bzw. Bildausschnitten analysiert.

Eine dazu besonders geeignete Methode ist die oben beschriebene parallele, systolische Hough-Transformation. Die parallele, systolische Hough-Transformation wird für Kreiskurven konfiguriert und für die Extremwertsuche angepasst. Durchschnittlich in jedem Takt werden die Voten von n Kantenpunkten durch ein Feld (array) aus spaltenweise hintereinander geschalteten Verzögerungselementen (Delay-Elementen) A aus den Zeilensummen C gebildet, während die Kantenpunkte (die Punkte des Kantenbildes) durchgeschoben werden. In anderen Worten, es kann in einer n-ten Stufen des Hough-Feldes "Hough-Array" somit eine Zeilensumm gebildet werden, während die Punkte des Kantenbildes durch die n-te Stufe durchgeschoben werden. Jeder Bildpunkt wird taktweise unter Berücksichtigung der geschalteten Bypässe B zum nächsten Verzögerungselement (Delay-Element) geschoben. Jede Spalte erzeugt ein durch die Schaltung der Bypässe B in einer Anzahl von Takten ihr vorher bestimmtes Votum. Die Voten geben dabei an, auf welchen Kreiskurven der durchgeschobene Punkt liegen kann. Die aus den Spalten stammenden Voten ergeben in jedem Takt addiert eine Akkumulatorspalte.

Auf eine Eintragung in den Akkumulator kann verzichtet werden, wenn in jeder Zeile durch einen Komparator unter Verwendung eines Schwellwerts entschieden wird, ob eine Kreiskurve gefunden wurde. Wurde der Schwellwert überschritten, so wird in einer weiteren Verzögerungselement-Spalte ohne Bypässe ein Bit an einer definierten Stelle erzeugt, das taktweise mit den Daten weitergeschoben wird.

Beim Verlassen des Hough-Feldes bzw. Hough-Arrays, also an dem Ausgang E der Hough-Transformationseinrichtung, werden die gebildeten Bits detektiert. Sie geben Aufschluss über eine Koordinate einer detektierten Kreiskurve und somit über eine Koordinate eines Extrempunktes.

Zum besseren Verständnis kann man sich vorstellen, dass durch die unterschiedliche Konfiguration der Bypässe der Verzögerungselemente in jeder Spalte eine Kreiskurve, die zeilenweise bei F in die Hough-Transformationseinrichtung 600 hineingeschoben wird, in einer bestimmten Zeile des Feldes (Arrays) zu einer einzigen geraden Linie wird, die eine (detektierbare) maximale Zeilensumme ergibt.

Um alle Kreiskurven bzw. Extremwerte oder Extrempunkte zu finden, muss jede Bildspalte und jede Bildzeile genau einmal vorwärts und einmal rückwärts durch jede Spalte des Feldes (Arrays) geschoben werden, wobei ihre Bildspalten immer nur zusammen mit ihren Nachbarn durch das Feld (Array) geschoben werden. Die Figur 7a zeigt das spaltenweise Durchschieben eines Bildes durch das Feld (Array) in einer Richtung. Es werden hier beispielsweise immer fünf nebeneinander liegende Bildspalten gleichzeitig durchgeschoben.

Statt ein Feld (Array) zu verwenden und es für alle vier Richtungen zu benutzen, können zwei oder vier Felder (Arrays) verwendet werden. Wenn davon je zwei Felder (Arrays) so konfiguriert werden, dass sie Kreiskurven mit umgekehrter Krümmung transformieren bzw. erkennen als die beiden anderen Felder (Array), so müssen die (Bild)-Daten nur noch vorwärts durch die Felder (Arrays) durchgeschoben werden, und zwar jeweils aus dem Originalbild sowie aus dem um 90 Grad gedrehten Bild. In der oben beschriebenen Weise können dann die Koordinaten der Extrempunkte ermittelt werden. Die typischerweise wenigen in einem Bild vorhandenen Extrempunkte, deren Koordinaten somit nur eine kleine Datenmenge bilden, müssen in einem weiteren Schritt zu einzelnen Ellipsen zugeordnet werden. Dies kann z.B. durch einen Personalcomputer oder Mikrocontroller geschehen. Aufgrund der geringen Datenmenge nach der Extremwerterkennung (also nach der Ermittlung der Koordinaten der Extrempunkte) ergeben sich hierbei keine hohen Anforderungen. Das erfindungsgemäße Konzept weist dabei den Vorteil auf, dass die Bearbeitungszeit unabhängig von einem Bildinhalt ist. Ferner können die Ellipsenparameter aus nur wenigen Extremwerten berechnet werden. Diese Berechnung der Ellipsenparametern aus den Extremwerten ist extrem schnell durchführbar und leicht in Hardware realisierbar, z.B. unter Verwendung eines FPGA oder eines ASIC.

Im Folgenden werden weitere Details bezüglich einer Implementierung des erfindungsgemäßen Konzepts in einer FPGA-Architektur beschrieben. So werden zunächst die Vorteile des FPGA gegenüber einer Personalcomputergestützten Berechnung dargestellt. Bei einer Berechnung des erfindungsgemäßen Algorithmus auf einem Personalcomputer (PC) müssen alle Schritte nacheinander ausgeführt werden.

Bei der Berechnung des Algorithmus auf einem PC, müssen alle Schritte nacheinander ausgeführt werden. Dies führt bei komplexen Algorithmen zu langen Berechnungszeiten. Des Weiteren verarbeitet der entwickelte Algorithmus einzelne Bits, welche die 32-bit Architektur des PC nicht effektiv nutzen können. Hier bietet der FPGA bessere Möglichkeiten. Er ist eine Ansammlung von Logikbauelementen, Flip-Flops, Speicher und Signaltreibern, welche zu einer fast beliebigen Schaltung verschaltet werden können. Dies ermöglicht es, die Hardware an den Algorithmus anzupassen. Ein weiterer und wesentlicher Vorteil ist der Aufbau einer systolischen Architektur. In jeder Periode das Taktes (üblicherweise auch als "Clock" bezeichnet), von steigender zu steigender Flanke, wird eine kombinatorische Logikschaltung durchlaufen und das Ergebnis wird in einem Flip-Flop gespeichert, welches dieses Ergebnis nun als Eingangswert für eine weitere Logikschaltung bereitstellt. Damit können in jeder Periode neue Daten an den Eingang der Schaltung gelegt werden, und es können ferner Ergebnisse von der Schaltung abgegriffen werden.

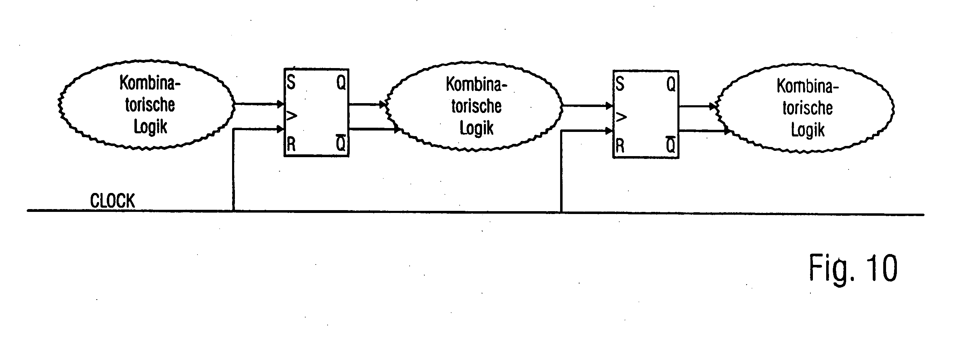

Fig. 10 zeigt ein Blockschaltbild einer einer entsprechenden FPGA-Architektur, bei der Blöcke kombinatorischer Logik zwischen Ausgängen und Eingängen von Flip-Flops angeordnet sind.

Die Pegelsensitiven FlipFlops sorgen dafür, dass nicht die Laufzeit der gesamten Logik in dem FPGA die Periode des Taktes (Clock) bestimmt, sondern die Laufzeit der umfangreichsten kombinatorischen Logik zwischen zwei Flip-Flops der gesamten Schaltung. Durch diese Architektur lassen sich hohe Frequenzen des Taktes (Clock) und kurze Bearbeitungszeiten realisieren. Die verwendete Hardware wird also effektiv genutzt.

Im Weiteren wird die vorgesehene Zielarchitektur in dem FPGA beschrieben. Die angestrebte Zielarchitektur sieht ein Bussystem (OPB = On Peripheral Bus) mit mehreren angeschlossenen IP-Cores (IP-Core = Geistiges-Eigentum-Kern; IP = Intellectual Property=Geistiges Eigentum) vor, welches von einem Mikrocontroller gesteuert wird. Die IP-Cores implementieren dabei die Schnittstellenfunktionalität, eine serielle Schnittstelle (Serial Port), eine PCI-Schnittstelle, etc., sowie die eigentliche Bildverarbeitung.

Zur Steuerung kann ein Softprozessor (d.h. ein Prozessor zur Verarbeitung von Maschinenbefehlen) in den FPGA implementiert werden. Dieser "Xilinx Microblaze"-Softprozessor baut auf einer RISC-Architektur auf (RISC = reduced instruction set computing = Berechnung mit reduziertem Befehlssatz) und ist interruptfähig. Der erstellte IP-Core wird zur Kommunikation an eine Standardschnittstelle, beispielsweise ein OPB-IPIF (On Peripheral Bus Intellectual Property InterFace = Auf Peripherem Bus Geistiges Eigentum Schnittstelle) angeschlossen, um mit dem "Microblaze"-Softprozessor zu kommunizieren.

Im folgenden wird der Aufbau und die Funktion der Hough-Transformationseinrichtung, die auch als "Hough-Core" bzw. "Hough-Kern" bezeichnet wird, beschrieben.

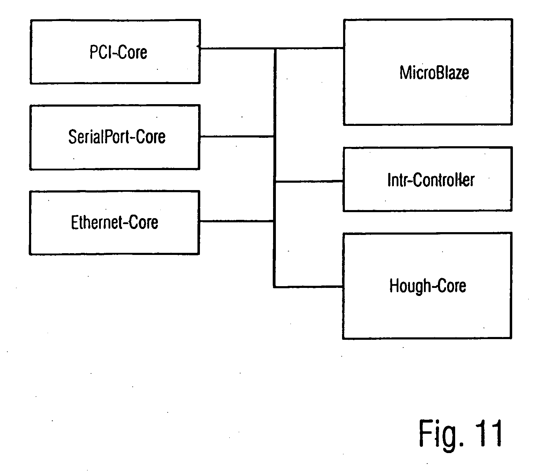

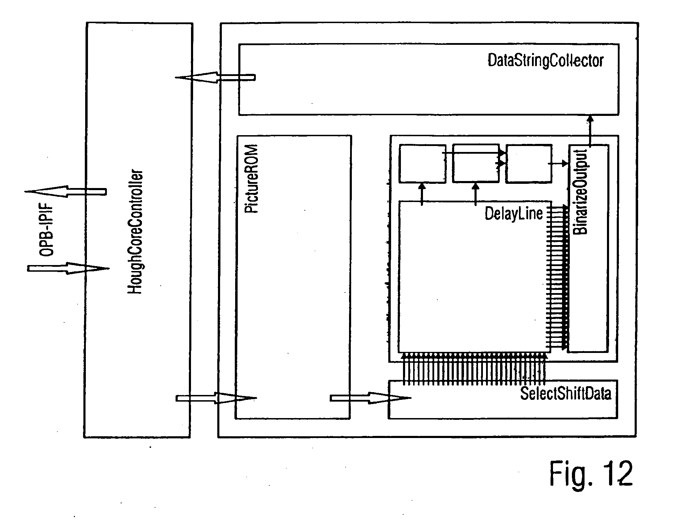

Fig. 11 zeigt dazu ein Blockschaltbild einer erfindungsgemäßen Architektur zur Realisierung in einem FPGA gemäß einem vierten Ausführungsbeispiel der vorliegenden Erfindung, und Fig. 12 zeigt ein Blockschaltbild einer erfindungsgemäßen Hough-Transformationseinrichtung gemäß .einem fünften Ausführungsbeispiel der vorliegenden Erfindung.

Als Einganssignal der Hough-Transformationseinrichtung dient ein binarisiertes Kantenbild, das über den OPB zum OPB-IPIF des Hough-Core übertragen wird. Dort wird es verarbeitet, und Ergebnisse werden über diesen Weg zurückgegeben. Der Hough-Core hat verschiedene Komponenten zur Implementierung der Funktionalität. Ein Hough-CoreController (in Fig. 12 von links in Signalflussrichtung) schafft die Schnittstelle zwischen OPB-IPIF und Hough-Core, zur Steuerung der Hough-Transformationseinrichtung und zum Datenaustausch über das OPB, also zur IP-Steuerung und Datenkommunikation. Im sogenannten "PictureROM" (Bild-Nur-Lese-Speicher) wird das gesamte Kantenbild beispielsweise bis zu einer Größe von 512x512 Pixel gespeichert. Die Speicherung erfolgt in Speicherzellen mit zwei Zugriffstoren (auch als "Dual-Port-Speicherzellen" bezeichnet, die einen Speicherblock mit wahlfreiem (Schreib und/oder Lese-Zugriff), auch als "BlockRAM" bezeichnet, bilden. Jedes der beiden Tore (Ports) kann mit unterschiedlichen Taktraten betrieben werden. Dies ermöglicht es, den Hough-Kern (Hough-Core) mit einer höheren Taktrate (Clock-Rate) zu betreiben, als es für das Softprozessor-Bus-System (Microblaze-OPBSystem) möglich ist.

Die Abspeicherung des Bildes in den Speicherblöcken mit wahlfreiem Zugriff (BRAMs) ist sehr von Vorteil, da auf die Daten des Bildes während der Verarbeitung mehrmals zugegriffen wird. Dadurch wird Zeit der OPB-Schnittstele ("OPB-Zeit") gespart, welche dann z.B. zur Übertragung der Ergebnisse oder eines neuen Bildteils genutzt werden kann. Die Daten-Auswähle-und-Verschiebe-Einrichtung, auch als "SelectShiftData-Komponente" bezeichnet, beginnt dann, ein 64xBildhöhe Pixel großes Fenster (auch als "Window" bezeichnet) des Bildes zeilenweise in die Verzögerungsleitung (DelayLine) zu schieben. Die Daten-Auswähle-und-Verschiebe-Einrichtung kann als riesiger Multiplexer angesehen werden. Ist ein Fenster (Window) bearbeitet, so wird das Fenster um einen Pixel in Richtung der Bildbreite verschoben.

In der Verzögerungsleitung (DelayLine) rücken die einzelnen Bildpunkt pro Spalte unterschiedlich schnell voran. Dies geschieht Außen (also an zwei Rändern des ausgewählten Bildausschnitts) schneller als im Inneren (also in der Mitte des ausgewählten Bildausschnitts), so dass sich eine kreisförmig, nach oben gewölbte Kurve (also allgemein eine Kurve mit einer ersten Krümmungsrichtung) schrittweise in eine Gerade und dann in eine nach unten gewölbte Kurve (also eine kurve mit einer zu der ersten Krümmungsrichtung entgegengesetzten Krümmungsrichtung) umformt.

In Abhängigkeit des Krümmungsradius geschieht dies (also das geradebiegen einer gekrümmten Kurve) an unterschiedlichen Stellen (bzw. in unterschiedlichen Stufen) in der Verzögerungsleitung (DelayLine), wie beispielsweise in dem Europäischen Patent EP 1 032 891 dargestellt. Diese Stellen sollen detektiert und markiert werden. Um die höhere Geschwindigkeit zu realisieren werden an diesen Stellen weniger FlipFlops miteinander verschaltet. In anderen Worten, an Orten in der Verzögerungsleitung, wo eine geringere Verzögerung eines Signals gewünscht ist, werden weniger Flip-Flops in den Signalpfad eines Signals eingeschaltet als an Orten in der Verzögerungsleitung, an denen eine höhere Verzögerung gewünscht ist.

Weitere Komponenten berechnen laufend die in die Verzögerungsleitung (DelayLine) hinein- und hinausgehendeAnzahl von Kantenpunkten. Diese werden zur Berechnung eines dynamischen Schwellwertes verwendet, welcher der Komponente Binarisiere-Ausgang (BinarizeOutput) zugeführt wird, wobei die Komponente Binarisiere-Ausgang Schwellwert-Komparatoren 634 umfasst. In anderen Worten, der Schwellwert für die Komparatoren 634 wird abhängig davon bestimmt, wie viele Signale 612, 614, 616 mit einem Bildinhalt der Hough-Transformationseinrichtung zugeführt werden. Dies ist insofern relevant, als gerade bei der Verarbeitung von Bildrändern gegebenenfalls weniger Signale mit Bildinformationen zur Verfügung stehen als bei einer Verarbeitung eines Bildausschnitts in der Mitte des Bildes. So umfassen die in der Fig. 7a mit "0", "1","2" und "3" gekennzeichneten Gruppen von Rasterspalten beispielsweise weniger Rasterspalten mit Bildinformation als die mit "4", "5", "6", "7", "8", "9" und "10" gekennzeichneten Gruppen von Rasterspalten.

Kommt es nun dazu, das eine der Zeilensummen der Verzögerungsleitungen (DelayLine) den Schwellwert übersteigt so wird an dem Ausgang (beispielsweise der entsprechenden Stufe der Verzögerungsleitung) eine (logische) "1" erzeugt, die diesen Punkt definiert. Diese (logische) "1" wird mit den Daten in der Verzögerungsleitung (DelayLine) mitgeführt. In Koordinaten des Bildes hat er seinen zugehörigen Platz in der Mitte des Fensters (Windows) und der jeweiligen Zeile. In anderen Worten, die erzeugte logische "1" ist von der zeitlichen Lage her einem etwa in der Mitte des Bildes gelegenen Punkt zugeordnet, und wird somit parallel zu dem zugeordneten Punkt durch die Verzögerungsleitung weitergeleitet. Die Komponente Daten-Zeichenfolgen-Sammler (DatenDataStringCollector) sammelt nun jeweils 32-bit dieser Ausgangs Bits zu einer Zeichenfolge (String) und stellt sie dem HoughCoreController zum Versenden zur Verfügung. Dieser überprüft ständig den Status des Hough-Kern (Hough-Core). Der Status des Hough-Kern kann über den Hough-Kern-Controller (HoughCoreController) auch von dem Softprozessor (Microblaze) abgefragt werden.

Da der (oben genannte) zugehörige Punkt (auch als zentraler Punkt bezeichnet) im Bild stets in der Mitte des zuvor angesprochenen Fensters (Windows) liegt, können in dem Ausgangsbild nur Punkte erzeugt werden die mindestens 32 Pixel (oder etwa die halbe breite des Fensters) in horizontaler Richtung von dem Bildrand entfernt liegen. Um alle 4 begrenzenden Punkte (also alle vier Extrempunkte der Ellipse) zu finden, muss jedoch aus allen 4 Richtungen das Bild berechnet werden, was den Totraum wieder aufhebt. In anderen Worten, die oben beschriebene Analyse des Bildes in vier Richtungen sorgt dafür, dass kein Totraum entsteht, in dem Kurven nicht erkannt werden können.

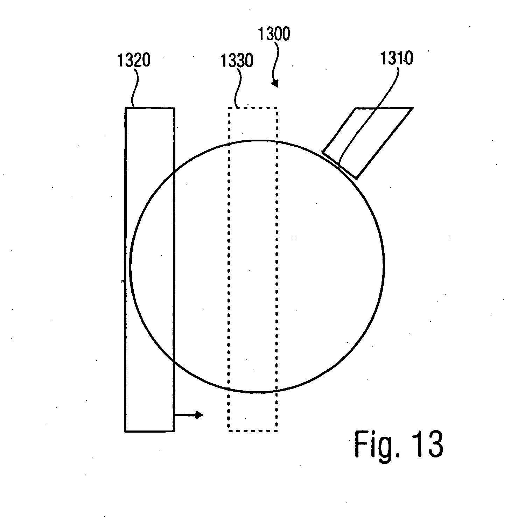

Fig. 13 zeigt eine grafische Darstellung eines durch eine erfindungsgemäße Hough-Transformationseinrichtung zu verarbeitenden Bildes. Das Bild ist in seiner Gesamtheit mit 1300 bezeichnet. Das Bild umfasst im wesentlichen einen Kreis, der als zweite Linie 1310 ersichtlich ist. In dem Bild 1300 sind ferner ein erster Bildausschnitt 1320 sowie ein zweiter Bildausschnitt 1330 ersichtlich, die von der erfindungsgemäßen Hough-Transformationseinrichtung getrennt verarbeitet werden können. Der erste Bildausschnitt 1320 umfasst in dem Bereich der verwendeten Rasterspalten sämtliche Rasterzeilen des Bildes. Der zweite Bildausschnitt 1330 umfasst genau so viele Rasterspalten wie der erste Bildausschnitt 1320, ist aber gegenüber dem ersten Bildausschnitt 1320 derart verschoben, dass der zweite Bildausschnitt 1330 andere Rasterspalten erfasst als der erste Bildausschnitt 1320. Es wird hierbei darauf hingewiesen, dass in der grafische Darstellung 1300 der Fig. 13 definitionsgemäß Rasterzeilen waagerecht verlaufen, während hingegen Rasterspalten senkrecht verlaufen. Die Darstellung ist daher konform mit der grafischen Darstellung 300 der Fig. 3.

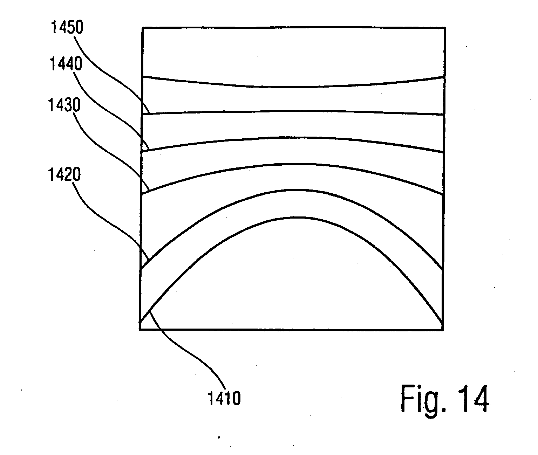

Die Fig. 14 stellt noch einmal schematisch dar, wie ein gebogener Kurvenverlauf in einer erfindungsgemäßen Hough-Transformationseinrichtung schrittweise gerade gebogen wird. Ein Kurvenverlauf 1410 stellt dabei einen Kurvenverlauf einer der Hough-Transformationseinrichtung eingegebenen Kurve dar. Ein zweiter Kurvenverlauf 1420 beschreibt einen Kurvenverlauf, der sich ergibt, wenn der erste Kurvenverlauf 1410 eine erste Stufe der Hough-Transformationseinrichtung durchlaufen hat. Ein dritter Kurvenverlauf 1430 beschreibt einen Kurvenverlauf, der sich ergibt, wenn der erste Kurvenverlauf 1414 zwei Stufen der Hough-Transformationseinrichtung durchlaufen hat. Ein vierter Kurvenverlauf 1440 beschreibt einen Kurvenverlauf, der sich ergibt, wenn der erste Kurvenverlauf 1410 drei Stufen der Hough-Transformationseinrichtung durchlaufen hat. Ein fünfter Kurvenverlauf 1450 beschreibt einen Kurvenverlauf, der sich ergibt, wenn der erste Kurvenverlauf 1410 vier Stufen der Hough-Transformationseinrichtung durchlaufen hat. Es zeigt sich, dass der fünfte Kurvenverlauf 1450 näherungsweise eine gerade Linie darstellt. Somit ist ersichtlich, dass der ursprünglich in die Hough-Transformationseinrichtung eingegebene erste Kurvenverlauf 1410 beim Durchlaufen mehrerer Stufen der Hough-Transformationseinrichtung schrittweise gerade gebogen wird. Die Hough-Transformationseinrichtung kann nunmehr erkennen, wenn ein Kurvenverlauf näherungsweise gerade gebogen ist, da sich dann eine große Zeilensumme ergibt, die durch einen Komparator erkannt werden kann, wie dies bereits oben beschrieben wurde.

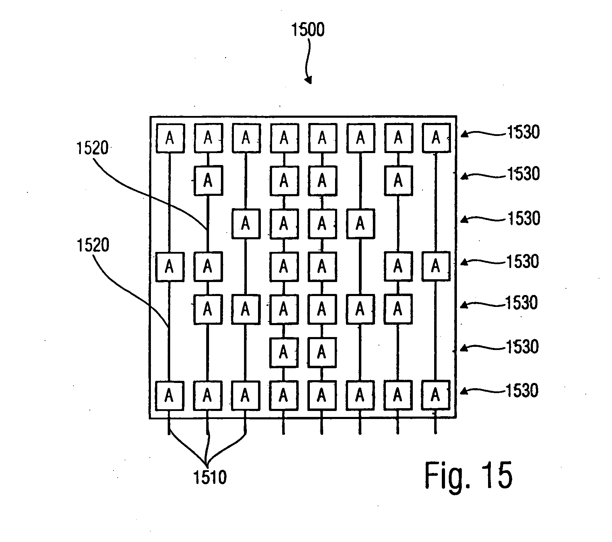

Fig. 15 zeigt ferner eine schematische Darstellung einer beispielhaften Struktur einer erfindungsgemäßen Hough-Transformationseinrichtung. Die schematische Darstellung der Figur 15 ist in ihrer Gesamtheit mit 1500 bezeichnet. Die Hough-Transformationseinrichtung 1500 ist ausgelegt, um mehrere Zeitsignale 1510 parallel zu empfangen und dann in parallelen Signalpfaden 1520 weiterzuleiten. Bei der Weiterleitung in den Signalpfaden 1520 durchlaufen die Zeitsignale 1510 Verzögerungseinrichtungen, die hier, in übereinstimmung mit dem Blockschaltbild 600 der Fig. 6, mit A bezeichnet sind. Verschiedene Zeitsignale 1510, die in verschiedenen Signalpfaden verlaufen, durchlaufen hierbei unterschiedlich angeordnete Verzögerungseinrichtungen, wobei auch die Anzahl der insgesamt durchlaufenen Verzögerungseinrichtungen für die verschiedenen Signalpfade variieren kann. Es wird ferner darauf hingewiesen, dass die Verzögerungseinrichtungen in Stufen 1530 angeordnet sind, die den Stufen 610 gemäß Fig. 6 entsprechen. Ist in einem bestimmten Signalpfad in einer Stufe 1530 ein Verzögerungselement enthalten, so kann dies als Bypass angesehen werden, der in Fig. 6 mit B bezeichnet ist.

Es wird ferner darauf hingewiesen, dass die in der Fig. 15 gezeigten Struktur 1500 im Wesentlichen der in der Fig. 6 gezeigten Struktur 600 entspricht. Bei der Struktur 1500 der Fig. 15 sind deaktivierte Verzögerungselemente als durchgezogene Linie gezeigt, während in der Struktur 600 für jede Stufe und für jeden Signalpfad eine Parallelschaltung aus einem Verzögerungselement und einem Bypass gezeigt ist, die entsprechend konfiguriert werden kann. Es wird ferner darauf hingewiesen, dass in der Fig. 15 die in Fig. 6 gezeigten Summierstufen 630 (auch mit C bezeichnet), die Komparatoren 634 (auch mit D bezeichnet) sowie die Kette von Verzögerungselementen 636 aus Gründen der Übersichtlichkeit nicht gezeigt ist. Die genannten Strukturen sind allerdings bevorzugt auch in der Schaltungsanordnung 1500 der Fig. 15 vorhanden.

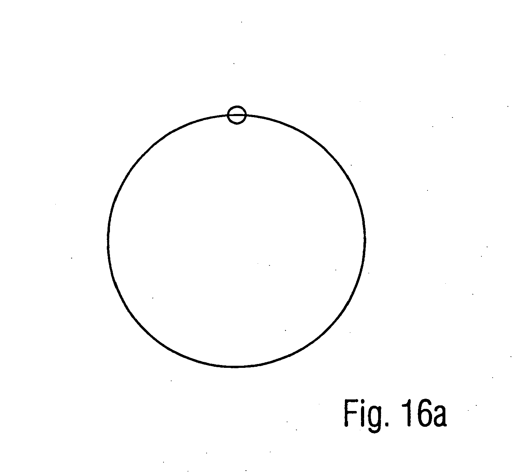

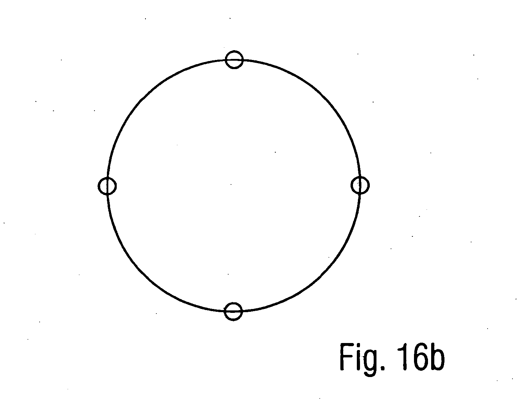

Die Fig. 16a zeigt ferner eine grafische Darstellung eines Kreises mit einem erkannten Extrempunkt. Die Fig. 16b hingegen zeigt eine grafische Darstellung eines Kreises mit vier erkannten Extrempunkten.

Es wird ferner darauf hingewiesen, dass das erfindungsgemäße Konzept sowohl als Vorrichtung als auch als Verfahren implementiert werden kann. Ferner kann das erfindungsgemäße Konzept durch ein Computerprogramm ausgeführt werden.

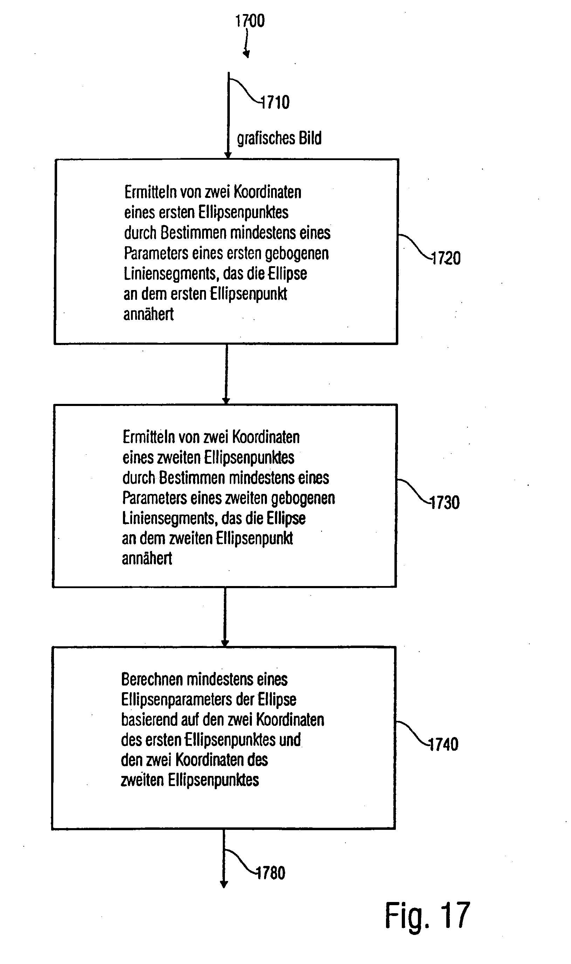

Fig. 17 zeigt ein Flussdiagramm eines erfindungsgemäßen Verfahrens zum Ermitteln einer Information über eine Form und/oder eine Lage einer Ellipse in einem graphischen Bild. Das Flussdiagramm der Fig. 17 ist in seiner Gesamtheit mit 1700 bezeichnet. Das Verfahren empfängt ein graphisches Bild 1710, und ermittelt daraus in einem ersten Schritt 1720 zwei Koordinaten eines ersten Ellipsenpunktes, der einen am weitesten in der ersten Richtung gelegenen Punkt der Ellipse darstellt. Dazu wird mindestens ein Parameter eines ersten gebogenen Liniensegments, das die Ellipse an dem ersten Ellipsenpunkt oder in einer Umgebung des ersten Ellipsenpunktes annähert, bestimmt. Basierend auf dem mindestens einen Parameter des ersten gebogenen Liniensegments werden sodann die zwei Koordinaten das ersten Ellipsenpunktes bestimmt.

In einem zweiten Schritt 1730 werden zwei Koordinaten eines zweiten Ellipsenpunktes, der einen am weitesten in einer der ersten Richtung entgegengesetzten Richtung gelegenen Punkt der Ellipse darstellt, ermittelt. Dazu wird mindestens ein Parameter eines zweiten gebogenen Liniensegments, das die Ellipse an dem zweiten Ellipsenpunkt oder in einer Umgebung des zweiten Ellipsenpunktes annähert, bestimmt. Basierend auf dem mindestens einen Parameter des zweiten gebogenen Liniensegments werden sodann die zwei Koordinaten das zweiten Ellipsenpunktes bestimmt.

In einem abschließenden dritten Schritt 1740 wird dann mindestens ein Ellipsenparameter der Ellipse basierend auf den zwei Koordinaten des ersten Ellipsenpunktes und des zweiten Ellipsenpunktes berechnet.

Es wird darauf hingewiesen, dass das beschriebene Verfahren die Funktion der oben beschriebenen Vorrichtung implementiert. Das beschriebenen erfindungsgemäße Verfahren kann somit um die im Hinblick auf die erfindungsgemäßen Vorrichtungen beschriebenen Funktionalitäten erweitert werden.

Ferner sei darauf hingewiesen, dass mehrere Schritte des beschriebenen Verfahrens auch parallel oder in einer anderen Reihenfolge ausgeführt werden können.

Das erfindungsgemäße Konzept oder Verfahren kann, abhängig von den Gegebenheiten, in Hardware oder in Software implementiert werden. Die Implementation kann auf einem digitalen Speichermedium, beispielsweise einer

**EP 1 789 925 B1**

Diskette, CD, DVD, oder einem Flash-Speichermedium, mit elektronisch auslesbaren Steuersignalen erfolgen, die so mit einem programmierbaren Computersystem zusammenwirken können, dass das entsprechende Verfahren ausgeführt wird. Allgemein besteht die Erfindung also auch in einem Computer-Programm-Produkt mit auf einem maschinenlesbaren Träger gespeicherten Programm-Code zur Durchführung des erfindungsgemäßen Verfahrens, wenn das Computer-Programm-Produkt auf einem Rechner abläuft. In anderen Worten ausgedrückt, kann die Erfindung somit als ein Computer-Programm mit einem Programm-Code zur Durchführung des Verfahrens realisiert werden, wenn das Computer-Programm auf einem Computer abläuft.

Die vorliegende Erfindung schafft somit insgesamt ein Konzept, dass es in einer besonders effizienten und damit echtzeit-tauglichen Weise ermöglicht, Parameter einer Ellipse in einem grafischen Bild zu erkennen. Die Erkennung einer Ellipse kann hierbei in Verbindung mit einer Vielzahl von technischen Verfahren vorteilhaft eingesetzt werden. Beispielsweise kann die Blickrichtung eines Menschen oder Tieres ermittelt werden, indem eine Videoaufnahme des menschlichen Auges, aus der eine Position der Pupille ermittelt werden kann, mittels des erfindungsgemäßen Konzepts ausgewertet werden.

Weiterhin ist ein Einsatz des erfindungsgemäßen Konzepts in Verbindung mit verschiedenen Positioniereinrichtungen bzw. Positionieraufgaben möglich. Ellipsenparameter, die über eine Schnittstelle von der erfindungsgemäßen Vorrichtung geliefert werden, können verwendet werden, um einen oder mehrere Aktuatoren anzusteuern, um in einem technischen System, beispielsweise in einer Materialbearbeitungseinrichtung, bei einer Betankung von Fahrzeugen oder bei einer Sortierung von Werkstücken Bewegungsabläufe zu steuern.

Ein besonderer Vorteil des erfindungsgemäßen Konzepts liegt in der Tatsache, dass hierbei ein Mustererkennungsverfahren zur Bestimmung von Extrempunkten einer Ellipse mit einem analytischen Verfahren zur Berechnung der Ellipsenparameter kombiniert wurde, wodurch gegenüber herkömmlichen Verfahren wesentliche Effizienz-Vorteile erzielt werden können.

**Patentansprüche**

1. Vorrichtung (100; 800) zum Ermitteln einer Information (122) über eine Form und/oder Lage einer Ellipse in einem graphischen Bild (112; 812), wobei das graphische Bild (112; 812) eine erste Richtung (130; x) und eine zweiten Richtung (132; y) aufweist, mit folgenden Merkmalen:

   einer Koordinatenbestimmungseinrichtung (110; 400; 830,832,840,842) zum Ermitteln von zwei Koordinaten $(x_1', y_1', x_3, y_3)$ eines ersten Ellipsenpunktes (136;226), der einen am weitesten in der ersten Richtung (130; x) gelegenen Punkt der Ellipse (134;220) darstellt, und zum Ermitteln von zwei Koordinaten $(x_3', y_3', x_1, y_1)$ eines zweiten Ellipsenpunktes (138;228), der einen am weitesten in einer der ersten Richtung (130; x) entgegengesetzten Richtung gelegenen Punkt der Ellipse (134; 220) darstellt,

   wobei die Koordinatenbestimmungseinrichtung (110;420;430;814,830,832,840,842) ausgelegt ist, um mindestens einen Parameter eines ersten gebogenen Liniensegments (146), das die Ellipse (134;220) an dem ersten Ellipsenpunkt (136;226) oder in einer Umgebung des ersten Ellipsenpunktes (136;226) annähert, zu bestimmen, und um basierend auf dem mindestens einen Parameter des ersten gebogenen Liniensegments (146) die Koordinaten $(x_1', y_1'; x_3, y_3)$ des ersten Ellipsenpunktes (136;226) zu bestimmen, und um mindestens einen Parameter eines zweiten gebogenen Liniensegments (148), das die Ellipse (134;220) an dem zweiten Ellipsenpunkt (138;228) oder in einer Umgebung des zweiten Ellipsenpunktes (138;228) annähert, zu bestimmen, und um basierend auf dem mindestens einen Parameter des zweiten gebogenen Liniensegments (148) die Koordinaten $(x_3', y_3'; x_1, y_1)$ des zweiten Ellipsenpunktes (138;228) zu bestimmen; und einer Ellipsenberechnungseinrichtung (120;850) zum Berechnen mindestens eines Ellipsenparameters $(x_m', x_m', a', b', \alpha'; x_m, y_m, a, b, \alpha)$ basierend auf den zwei Koordinaten $(x_1', y_1'; x_3, y_3)$ des ersten Ellipsenpunktes (136;226) und den zwei Koordinaten $(x_3', y_3'; x_1, y_1)$ des zweiten Ellipsenpunktes (138;228), wobei der mindestens eine Ellipsenparameter $(x_m', y_m', a', b', \alpha'; x_m, y_m, a, b, \alpha)$ die Information (122) über die Form und/oder die Lage der Ellipse (134;220) darstellt.

2. Vorrichtung (100;800) gemäß Anspruch 1, wobei die Koordinatenbestimmungseinrichtung (110;400;814,830,832,840,842) ferner ausgelegt ist, um mindestens eine Koordinate $(x_4', y_4'; x_2, y_2)$ eines dritten Ellipsenpunktes (140;230), der einen am weitesten in der zweiten Richtung (132; y) gelegenen Punkt der Ellipse (134;220) darstellt, zu ermitteln, wobei die Koordinatenbestimmungseinrichtung (110;400;814,830,832,840,842) ausgelegt ist, um mindestens einen Parameter eines dritten gebogenen Liniensegments (150), das die Ellipse (134;220) an dem dritten Ellipsenpunkt

33

(140;230) oder in einer Umgebung des dritten Ellipsenpunktes (140;230) annähert, zu bestimmen, und um basierend auf dem mindestens einen Parameter des dritten gebogenen Liniensegments (150) mindestens eine Koordinate ($x_4$', $y_4$'; $x_2$, $y_2$)des dritten Ellipsenpunktes (140;230) zu bestimmen, wobei die Ellipsenberechnungseinrechnung (110) ausgelegt ist, um mindestens einen Ellipsenparameter ($x_m$', $y_m$', a', b', $\alpha$'; $x_m$, $y_m$, a, b, $\alpha$), basierend auf den zwei Koordinaten ($x_1$', $y_1$'; $x_3$, $y_3$) des ersten Ellipsenpunktes (136;226), den zwei Koordinaten ($x_3$', $y_3$'; $x_1$, $y_1$) des zweiten Ellipsenpunktes (138;228) und der mindestens einen Koordinate ($x_4$', $y_4$'; $x_2$, $y_2$) des dritten Ellipsenpunktes (140;230) zu berechnen.

3. Vorrichtung (100;800) gemäß Anspruch 1 oder 2, wobei das graphische Bild (112;812) ein Rasterbild (310) ist, das eine Mehrzahl von Bildpunkten (312,314) umfasst, die in einer Mehrzahl von Rasterzeilen (320,330,332,334,368,372) und/oder in einer Mehrzahl von Rasterspalten (322,336,338,340,362,366) angeordnet sind, wobei die Ellipse (134;220;350) durch eine Mehrzahl von Bildpunkten, die Ellipsenpunkte bilden, beschrieben ist, und/oder wobei das erste gebogene Liniensegment (146) durch eine Mehrzahl benachbarter Bildpunkte beschreibbar ist und/oder wobei das zweite gebogene Liniensegment (148) durch eine Mehrzahl benachbarter Bildpunkte beschreibbar ist und/oder wobei das dritte gebogene Liniensegment (150) durch eine Mehrzahl benachbarter Bildpunkte beschreibbar ist.

4. Vorrichtung (100;800) gemäß Anspruch 3, wobei die Koordinatenbestimmungseinrichtung (110;400; 814,830,832,840,842) ausgelegt ist, um unter Verwendung der Rasterzeilen (320,330,332,334,368,372) und/oder der Rasterspalten (322,336,338,340,362,366) eine Mustererkennung durchzuführen, um in einem durch eine Mehrzahl (360;364;370;374;380) von Rasterzeilen und/oder Rasterspalten gebildeten zu analysierenden Bildausschnitt (360,364,370,374,380;740;1320,1330) des Bildes einen Kurvenverlauf (510,520,560,570) zu identifizieren, der das erste gebogene Liniensegment (146) bildet, und um als Parameter des ersten gebogenen Liniensegments (146) mindestens einen Parameter des identifizierten Kurvenverlaufs (510, 520, 560, 570) zu bestimmen.

5. Vorrichtung (100;800) gemäß Anspruch 4, wobei die Koordinatenbestimmungseinrichtung (100;400; 814,830,832,840,842) ausgelegt ist, um unter Verwendung der Rasterzeilen (320,330,332,334,368,372) und/oder Rasterspalten (322,336,338,340,362,366) eine Mustererkennung durchzuführen, um in dem durch die Mehrzahl (360,364,370,374,380) von Rasterzeilen und/oder Rasterspalten gebildeten zu analysierenden Bildausschnitt (1320,1330) des Bildes (112; 310; 812; 1300) einen Kurvenverlauf zu identifizieren, der das erste gebogene Liniensegment (146) bildet, indem überprüft wird, ob der zu analysierende Bildausschnitt (1320, 1330) einen Kurvenverlauf enthält, die er zu einem Referenzkurvenverlauf aus einer ersten Menge von möglichen Referenzkurvenverläufen (452,454,456) bezüglich eines vorgegebenen Ähnlichkeitsmaßes hinreichend ähnlich ist, wobei die erste Menge von möglichen Referenzkurvenverläufen (452,454,456) zulässige Verläufe des ersten gebogenen Liniensegments (146) für verschiedene Parameter des ersten gebogenen Liniensegments (146) beschreibt,
und/oder um in dem durch die Mehrzahl (360,364,370,374,380) von Rasterzeilen (320,330,332,334,368,372) und/oder Rasterspalten (322,336,338,340,362,366) gebildeten zu analysierenden Bildausschnitt (1320,1330) des Bildes (112; 310; 812; 1300) einen Kurvenverlauf zu identifizieren, der das zweite gebogene Liniensegment (148) bildet, indem überprüft wird, ob der zu analysierende Bildausschnitt (1320, 1330) einen Kurvenverlauf enthält, der zu einem Referenzkurvenverlauf aus einer zweiten Menge von möglichen Referenzkurvenverläufen (452,454,456) bezüglich eines vorgegebenen Ähnlichkeitsmaßes hinreichend ähnlich ist, wobei die zweite Menge von möglichen Referenzkurvenverläufen (452,454,456) zulässige Verläufe des zweiten gebogenen Liniensegments (148) für verschiedene Parameter des zweiten gebogenen Liniensegments (148) beschreibt, und/oder um in dem durch die Mehrzahl (360, 364, 370, 374, 380) von Rasterzeilen (320,330,332,334,368,372) und/oder Rasterspalten (322, 336, 338, 340, 362, 366) gebildeten zu analysierenden Bildausschnitt des Bildes (112; 310; 812; 1300) einen Kurvenverlauf zu identifizieren, der das dritte gebogene Liniensegment (150) bildet, indem überprüft wird, ob der zu analysierende Bildausschnitt (1320, 1330) einen Kurvenverlauf enthält, der zu einem Referenzkurvenverlauf aus einer dritten Menge von möglichen Referenzkurvenverläufen bezüglich eines vorgegebenen Ähnlichkeitsmaßes hinreichend ähnlich ist, wobei die dritte Menge von Referenzkurvenverläufen zulässige Verläufe des dritten gebogenen Liniensegments (150) für verschiedene Parameter des dritten gebogenen Liniensegments (150) beschreibt.

6. Vorrichtung (100;800) gemäß Anspruch 5, wobei die Menge von möglichen Referenzkurvenverläufen (452,454,456) Kurvenverläufe beschreibt, die sich bezüglich ihrer Lage und/oder Form unterscheiden, wobei einem Kurvenverlauf aus der Mehrzahl von möglichen Referenzkurvenverläufen (452,454,456) mindestens ein Parameter, der die Lage und/oder Form kennzeichnet, zugeordnet ist, und wobei die Koordinatenbestimmungseinrichtung (100;400; 814,830,832,840,842) ausgelegt ist, um den Parameter des ersten gebogenen Liniensegments (146), das die Ellipse (134) an den ersten Ellipsenpunkt (136) annähert, den Parameter des zweiten gebogenen Liniensegments (148), das die Ellipse (134) an den zweiten Ellipsenpunkt (138) annähert, oder den Parameter des dritten gebogenen Liniensegments (150), das die Ellipse (134) an den dritten Ellipsenpunkt (140) annährt, davon abzuleiten, welcher der Kurvenverläufe aus der Mehrzahl von möglichen Referenzkurvenverläufen (452,454,456) zu einem Kurvenverlauf in dem Bildausschnitt (1320,1330) bezüglich des vorgegebenen Ähnlichkeitsmaßes hinreichend ähnlich ist.

7. Vorrichtung (100;800) gemäß Anspruch 5 oder 6, wobei die Kurvenverläufe aus der Mehrzahl von möglichen Referenzkurvenverläufen (452,454,456) so gewählt sind, dass sie Ellipsen unterschiedlicher Form und/oder Lage an dem ersten Ellipsenpunkt oder an dem zweiten Ellipsenpunkt oder an dem dritten Ellipsenpunkt annähern.

8. Vorrichtung (100;800) gemäß einem der Ansprüche 5 bis 7, wobei die Kurvenverläufe aus der Mehrzahl von möglichen Referenzkurvenverläufen (452,454,456) so gewählt sind, dass sie Ausschnitte aus kreisförmigen Kurven unterschiedlicher Lage und/oder unterschiedlichen Radius beschreiben.

9. Vorrichtung (100;800) gemäß einem der Ansprüche 1 bis 8, wobei die Koordinatenbestimmungseinrichtung (110; 400;814,830,832,840,842) ausgelegt ist, um eine Mustererkennung (420;830,832,840,842) auf eine Mehrzahl von zu analysierenden Bildausschnitten (360,364,370,374,380;1320,1330) des Bildes (112; 310; 812; 1300) anzuwenden, um in der Mehrzahl von zu analysierenden Bildausschnitten (360,364,370,374,380;1320,1330) einen Kurvenverlauf zu identifizieren, der das erste gebogene Liniensegment (136) bildet, und um basierend darauf, in welchem der Mehrzahl von Bildausschnitten (360,364,370,374,380;1320,1330) des Bildes (112;310;812;1300) das erste gebogene Liniensegment (136) identifiziert wird, einen Lage-Parameter des ersten gebogenen Liniensegments (136) zu ermitteln.

10. Vorrichtung (100;800) gemäß Anspruch 9, wobei die Koordinatenbestimmungseinrichtung (110;400; 814,830,833,840,842) ausgelegt ist, um die Mustererkennung (400;830,832,840,842) auf die Mehrzahl von zu analysierenden Bildausschnitten (360,364,370,374,380;1320,1330) des Bildes (112;310;812;1300) anzuwenden, wobei die zu analysierenden Bildausschnitte so gewählt sind, dass sich mindestens zwei Bildausschnitte der Mehrzahl von zu analysierenden Bildausschnitten (360,364,370,374,380;1320,1330) überlappen.

11. Vorrichtung (100;800) gemäß einem der Ansprüche 1 bis 10, wobei die Koordinatenbestimmungseinrichtung (110; 400;814,830,832,840,842) ausgelegt ist, um als zusätzliche Koordinate zumindest eine weitere Koordinate $(x_4', y_4'; x_2,y_2)$ des dritten Ellipsenpunktes (140;230) oder mindestens eine Koordinate $(x_2', y_2'; x_0, y_0)$ eines vierten Ellipsenpunktes (142;232), der einen am weitesten in einer der zweiten Richtung (132;y) entgegengesetzten Richtung gelegenen Punkt der Ellipse (134;220) darstellt, zu ermitteln, wobei die Ellipsenberechnungseinrichtung (120;850) ausgelegt ist, um einen ersten Satz von Ellipsenparametern, der zumindest einen Ellipsenparameter umfasst, basierend auf den zwei Koordinaten $(x_1',y_1'; x_3,y_3)$ des ersten Ellipsenpunktes (136;226), den zwei Koordinaten $(x_3', y_3'; x_1,y_1)$ des zweiten Ellipsenpunktes (138;228) und der ersten Koordinate $(x_4',y_4';x_2,y_2)$ des dritten Ellipsenpunktes (140;230) zu berechnen, sowie einen zweiten Satz von Ellipsenparametern, der zumindest einen Ellipsenparameter umfasst, basierend auf den zwei Koordinaten $(x_1',y_1'; x_3,y_3)$ des ersten Ellipsenpunktes (136;226), den zwei Koordinaten $(x_3',y_3'; x_1,y_1)$ des zweiten Ellipsenpunktes (138;228) und der zusätzlichen Koordinate $(x_4',y_4',x_2,y_2'; x_0,y_0, x_2,y_2)$ zu berechnen, und um einen Ergebnis-Satz von Ellipsenparametern $(x_m', y_m', a', b', \alpha'; x_m, y_m, a, b, \alpha)$ durch Mittelwertbildung unter Verwendung des ersten Satzes von Ellipsenparametern und des zweiten Satzes von Ellipsenparametern zu berechnen.

12. Vorrichtung (100;800) gemäß einem der Ansprüche 1 bis 11, wobei die Koordinatenberechnungseinrichtung (110; 400;814,830,832,840,842) ausgelegt ist, um zwei Koordinaten $(x_4',y_4'; x_2,y_2)$ des dritten Ellipsenpunktes (140;230), der einen am weitesten in der zweiten Richtung (132;y) gelegenen Punkt der Ellipse (134;320) darstellt, und zwei Koordinaten $(x_2', y_2'; x_0,y_0)$ eines vierten Ellipsenpunktes (142;232), der einem am weitesten in einer der zweiten Richtung (132;y) entgegengesetzten Richtung gelegenen Punkt der Ellipse darstellt, zu bestimmen, und um ferner eine Mehrzahl von verschiedenen Sätzen von drei Ellipsenpunkten aus dem ersten Ellipsenpunkt (136;226), dem zweiten Ellipsenpunkt (138;228), dem dritten Ellipsenpunkt (140;230) und dem vierten Ellipsenpunkt (142;232) auszuwählen, um für die Sätze von Ellipsenpunkten (136,138,140,142;226,228,230,232) zugehörige Sätze von Ellipsenparametern $(x_m', y_m', a', b', \alpha'; x_m, y_m, a, b, \alpha)$ zu bestimmen, und um als Information über die Form und/ oder die Lage der Ellipse (134;220) einen gemittelten Satz von Ellipsenparametern durch Mittelung der zu den Sätzen von Ellipsenpunkten gehörigen Sätze von Ellipsenparametern zu berechnen.

13. Vorrichtung gemäß einem der Ansprüche 1 bis 12, wobei die Koordinatenbestimmungseinrichtung (110;400; 814,830,832,840,842) ausgelegt ist, um zwei Koordinaten $(x_4', y_4'; x_2, y_2)$ des dritten Ellipsenpunktes (140;230), der einem am weitesten in der zweiten Richtung (132;y) gelegenen Punkt der Ellipse (134;220) darstellt, zu ermitteln, und

wobei die Ellipsenberechnungseinrichtung (120;850) ferner ausgelegt ist, um aus den zwei Koordinaten $(x_1',y_1'; x_3, y_3)$ des ersten Ellipsenpunktes (136;226) und den zwei Koordinaten $(x_3',y_3'; x_1,y_1)$ des zweiten Ellipsenpunktes (138;228) Mittelpunktkoordinaten $(x_m, y_m)$ der Ellipse (134;220) zu berechnen,

um eine Koordinatentransformation der Koordinaten $(x_1',y_1', x_4',y_4'; x_3,y_3, x_2,y_2)$ des ersten Ellipsenpunktes (136;226) und des dritten Ellipsenpunktes (140; 230) durchzuführen, um transformierte Koordinaten $(x_x, y_x, x_y, y_y)$, des ersten Ellipsenpunktes (136;226) und des dritten Ellipsenpunktes (138;228) zu erhalten, wobei die Koordinatentransformation ausgelegt ist, um einen durch die Mittelpunktkoordinaten $(x_m, y_m)$ beschriebenen Mittelpunkt (240) der Ellipse (134;220) in einen Koordinatenursprung (264) zu verschieben,

um eine geschätzte transformierte zweite Koordinate $y_{y,calc}$ des dritten Ellipsenpunktes unter Verwendung der Bestimmungsgleichung

$$1 = \frac{y_{y,calc} \cdot x_y}{y_x \cdot x_x}$$

zu berechnen, wobei $x_x$ die transformierte erste Koordinate des ersten Ellipsenpunktes (136:226) ist, wobei $y_x$ die transformierte zweite Koordinate des ersten Ellipsenpunktes (136;226) ist, und wobei $x_y$ die transformierte erste Koordinate des dritten Ellipsenpunktes (140;230) ist,

und um basierend auf einer Abweichung zwischen der geschätzten transformierten zweiten Koordinate $y_{y,calc}$ des dritten Ellipsenpunktes (140;230) und der durch die Koordinatentransformation ermittelten transformierten zweiten Koordinate $y_y$ des dritten Ellipsenpunktes (140;230) zu entscheiden, ob der dritte Ellipsenpunkt (140;230) zu der durch den ersten Ellipsenpunkt (136;226) und den zweiten Ellipsenpunkt (138;228) beschriebenen Ellipse (134; 220) gehört.

14. Vorrichtung (100;800) gemäß einem der Ansprüche 1 bis 13,
bei der die Ellipsenberechnungseinrichtung (120;850) ausgelegt ist, um eine erste Mittelpunktkoordinate $x_m$ der Ellipse (134;220) basierend auf der ersten Koordinate $x_3$ des ersten Ellipsenpunktes (226) und der ersten Koordinate $x_1$ des zweiten Ellipsenpunktes (228) unter Verwendung der Berechnungsvorschrift

$$x_m = \frac{x_3 + x_1}{2}$$

zu berechnen,
und/oder um eine zweite Mittelpunktkoordinate $y_m$ der Ellipse (134;220) basierend auf der zweiten Koordinate $y_3$ des ersten Ellipsenpunktes (226) und der zweiten Koordinate $y_1$ des zweiten Ellipsenpunktes (228) unter Verwendung der Berechnungsvorschrift

$$y_m = \frac{y_3 + y_1}{2}$$

zu berechnen.

15. Vorrichtung (100;800) gemäß Anspruch 14, wobei die Ellipsenberechnungseinrichtung (120;850) ferner ausgelegt ist, um einen Rotationswinkel $\alpha$ der Ellipse (134;220), eine Länge a einer ersten Halbachse der Ellipse (134;220) und/oder eine Länge b einer zweiten Halbachse der Ellipse (134;220) unter der Verwendung der folgenden Bestimmungsgleichungen zu berechnen:

$$k_x = \frac{x_x}{y_x} \; ; \qquad k_y = \frac{y_y}{x_y} \; ;$$

$$u = -\frac{1}{2} \cdot (k_x - k_y) \pm \frac{1}{2} \cdot \sqrt{(k_x - k_y)^2 + 4} \; ;$$

$\tan(\alpha) = u;$

$$\frac{1}{\rho^2} = \frac{b^2}{a^2} = \frac{k_x \cdot u - 1}{u^2 + k_x \cdot u} \quad \text{oder} \quad \frac{1}{\rho^2} = \frac{b^2}{a^2} = \frac{k_y \cdot u - u^2}{k_y \cdot u + 1} \; ;$$

$$b = \frac{\rho \cdot \tan\alpha \cdot \left( x_x \cdot \sqrt{\frac{\rho^2 + \tan^2\alpha}{\rho^2}} - x_y \cdot \sqrt{\frac{\rho^2 \cdot \tan^2\alpha + 1}{\rho^2 \cdot \tan^2\alpha}} \right)}{\sin\alpha \cdot \left( \tan^2\alpha + 1 \right)} \; ;$$

$$a = \rho \cdot b \, ,$$

wobei u, $k_x$ und $k_y$ Hilfsgrößen sind;

wobei $\rho$ ein Verhältnis zwischen einer Länge a der ersten Halbachse und einer Länge b der zweiten Halbachse beschreibt;

wobei ein Vorzeichen in der Bestimmungsgleichung für u basierend auf den Hilfsgrößen $k_x$ und $k_y$ in Abhängigkeit von einer Lage des ersten transformierten Ellipsenpunktes und/oder des zweiten transformierten Ellipsenpunktes festgelegt wird; und

wobei mindestens eine der zwei Bestimmungsgleichungen für $\rho$ in Abhängigkeit von $k_x$, $k_y$ und u verwendet wird.

16. Vorrichtung (100;800) gemäß einem der Ansprüche 1 bis 15, bei der die Koordinatenbestimmungseinrichtung (110; 400;814,830,832,840,842) eine Mustererkennungseinrichtung (420;600;830,832,840,842) aufweist, die ausgelegt ist, um eine Mehrzahl von zu analysierenden Rasterzeilen (320,330,332,334,368,372) oder von zu analysierenden Rasterspalten (322,336,338,340,362,366) in Form einer Mehrzahl von parallelen Zeitsignalen (612,614,616) zu empfangen, und um die Zeitsignale (612,614,616) unterschiedlich schnell parallel durch eine Mehrzahl von hintereinander geschalteten Stufen (610) weiterzuleiten,

wobei mindestens eine vorbestimmte Stufe (610) eine Summiereinrichtung (630) umfasst, die ausgelegt ist, um aus der vorbestimmten Stufe (610) auslaufende Signale zu summieren, um eine Spaltensumme (632) zu bilden,

und wobei die Mustererkennungseinrichtung (600) ferner ausgelegt ist, um die Spaltensumme (632) auszuwerten, um eine Information über ein in den von der Mustererkennungseinrichtung (600) empfangenen Rasterzeilen (320,330,332,334,368,372) oder Rasterspalten (322,336,338,340,362,366) enthaltenes gebogenes Liniensegment (145,148,150,152) zu bestimmen,

wobei die Information mindestens einen Parameter des in den empfangenen Rasterzeilen (320,330,332,334,368,372) oder Rasterspalten (322,336,338,340,362,366) enthaltenen gebogenen Liniensegments (146,148,150,152) umfasst.

17. Vorrichtung (100;800) gemäß Anspruch 16, wobei die vorbestimmte Stufe (610) ferner einer Schwellwerterkennungseinrichtung (634) aufweist, die ausgelegt ist, um die Spaltensumme (632) zu empfangen und zu erkennen, wenn mindestens eine vorgegebene Anzahl von Signalen (612,614,616) an dem Ausgang der vorbestimmten Stufe (610) gleichzeitig aktiv sind,
wobei die Mustererkennungseinrichtung (420;600;830,832,840,842) ferner ausgelegt ist, um ein Ausgangssignal der Schwellwerterkennungseinrichtung (634) auszuwerten, um mindestens einen Parameter eines in den empfangenen Rasterzeilen (320,330,332,334,368,372) oder Rasterspalten (322,336,338,340,362,366) enthaltenen gebogenen Liniensegments zu ermitteln (146,148,150,152).

18. Vorrichtung (100;800) gemäß Anspruch 16 oder 17,
wobei die Mustererkennungseinrichtung (420;600;830,832,840,842) ausgelegt ist, um einen gekrümmten Kurvenverlauf, (1410) der durch die von der Mustererkennungseinrichtung (420;600;830,832,840,842) empfangenen Signale (612,614,616;1510) beschrieben wird, beim Durchlaufen der hintereinander geschalteten Stufen (610; 1530) aufgrund einer unterschiedlich schnellen Ausbreitung der Signale (612,614,616;1510) schrittweise zu verzerren, um eine verzerrte Beschreibung (1420,1430,1440) des gekrümmten Kurvenverlaufs zu erhalten, und um zu erkennen, wenn durch die verzerrte Beschreibung eine näherungsweise gerade Linie (1450) beschrieben wird, die durch eine Mehrzahl von gleichzeitig aktiven Signalen (612,614,616;1510) in einer bestimmten Stufe (610; 1530) dargestellt wird.

19. Vorrichtung (100;800) gemäß einem der Ansprüche 16 bis 18, bei der die mindestens eine Stufe (610;1530) der Mustererkennungseinrichtung (420;600;830,832,840,842) ausgelegt ist, um mehrere Signale (612,619,616;1510) bei der Weiterleitung durch die Stufe (610;1530) unterschiedlich stark zu verzögern.

20. Vorrichtung (100;800) gemäß einem der Ansprüche 16 bis 19, bei der die Mustererkennungseinrichtung (420;600; 830,832,840,842) durch Festlegen von unterschiedlichen Verzögerungen (620,624) bei der Weiterleitung der Signale (612,614,616) durch die Stufen (610) so ausgelegt ist, dass ein kreisförmig gebogenes Liniensegment, das in den von der Mustererkennungseinrichtung empfangenen Rasterzeilen (320,330,332,334,368,372) oder Rasterspalten (322,336,338,340,362,366) enthalten ist, nach Durchlaufen einer Anzahl von Stufen (610;1530) näherungsweise zu einer geraden Linie deformiert wird,
wobei die Mustererkennungseinrichtung (420;600;830,832,840,842) ausgelegt ist, um ein Vorliegen einer näherungsweise geraden Linie zu erkennen, und um festzustellen, nach Durchlaufen von wie vielen Stufen die gerade Linie vorliegt, und
wobei die Mustererkennungseinrichtung (420;600;830,832,840,842) ferner ausgelegt ist, um aus der Anzahl der bis zum Vorliegen einer näherungsweise geraden Linie durchlaufenen Stufen mindestens einen Parameter des von der Mustererkennungseinrichtung empfangenen kreisförmig gebogenen Liniensegments abzuleiten.

21. Vorrichtung (100;800) gemäß einem der Ansprüche 10 bis 20, bei der die Mustererkennungseinrichtung (420;600; 830,832,840,842) durch Festlegen von unterschiedlichen Verzögerungen (620,624) bei der Weiterleitung der Signale (612,614,616) durch die Stufen (610) so ausgelegt ist, dass ein kreisförmig gebogenes Liniensegment, das in den von der Mustererkennungseinrichtung (420;600;830,832,840,842) empfangenen Rasterzeilen (320,330,332,334,368,372) oder Rasterspalten (322,336,338,340,362,366) enthalten ist, nach Durchlaufen einer Anzahl von Stufen näherungsweise zu einer geraden Linie deformiert wird, wobei die Mustererkennungseinrichtung ausgelegt ist, um ein Vorhandensein einer näherungsweise geraden Linie zu erkennen, und um basierend auf dem Zeitpunkt, zu dem die näherungsweise gerade Linie vorhanden ist, mindestens einen Parameter des von der Mustererkennungseinrichtung empfangenen kreisförmig gebogenen Liniensegments abzuleiten.

22. Vorrichtung (100;800) gemäß einem der Ansprüche 10 bis 21, bei der die Koordinatenbestimmungseinrichtung (110;412,420,430;840,820,822,830,832) ausgelegt ist, um der Mustererkennungseinrichtung (420;600; 820,822,830,832) das Bild (112;310;812) in Form von nacheinander übertragenen zu analysierenden Rasterzeilen (320,330,332,334,368,372) zweimal zuzuführen,
wobei die Koordinatenbestimmungseinrichtung ferner ausgelegt ist, um der Mustererkennungseinrichtung das Bild für eine Ermittlung der zwei Koordinaten $(x_3, y_3)$ des ersten Ellipsenpunktes (226), beginnend mit einer an einem ersten Rand des Bildes gelegenen Rasterzeile (320) des Bildes zuzuführen, und um der Mustererkennungseinrichtung das Bild für eine Ermittlung der zwei Koordinaten $(x_1,y_1)$ des zweiten Ellipsenpunktes (228) beginnend mit einer an einem zweiten Rand des Bildes gelegenen Rasterzeile (334) des Bildes zuzuführen, wobei der erste Rand des Bildes dem zweiten Rand des Bildes gegenüberliegt, und wobei die Mustererkennungseinrichtung ausgelegt, um gebogene Liniensegmente mit einer vorgegebenen Krümmungsrichtung zu erkennen.

23. Vorrichtung (100;800) gemäß einem der Ansprüche 10 bis 22, bei der die Koordinatenbestimmungseinrichtung (110;420;814,820,822,830,832) eine erste Mustererkennungseinrichtung (830) und eine zweite Mustererkennungs-

EP 1 789 925 B1

einrichtung (832) umfasst, wobei die erste Mustererkennungseinrichtung (830) ausgelegt ist, um gebogene Liniensegmente mit einer ersten vorgegebenen Krümmungsrichtung zu erkennen, wobei die zweite Mustererkennungseinrichtung (832) ausgelegt ist, um gebogene Liniensegmente mit einer der vorgegebenen ersten Krümmungsrichtungen entgegengesetzten zweiten Krümmungsrichtung zu erkennen, und wobei die Koordinatenbestimmungseinrichtung ausgelegt ist, um der ersten Mustererkennungseinrichtung (830) das Bild für eine Ermittlung der zwei Koordinaten ($x_3,y_3$) des ersten Ellipsenpunktes (226) beginnend mit einer an einem ersten Rand des Bildes gelegenen Rasterzeile (320) zuzuführen, und um der zweiten Mustererkennungseinrichtung (832) das Bild für eine Ermittlung der zwei Koordinaten ($x_1,y_1$) des zweiten Ellipsenpunktes (228) beginnend mit einer an dem ersten Rand des Bildes gelegenen Rasterzeile (320) zuzuführen.

24. Vorrichtung (100;800) gemäß einem der Ansprüche 10 bis 23, wobei die Mustererkennungseinrichtung (412,420; 600) ausgelegt ist, um eine erste Mehrzahl (370) von zu analysierenden Rasterzeilen sowie eine zweite Mehrzahl (374) von zu analysierenden Rasterzeilen zu verarbeiten, wobei sich die erste Mehrzahl von zu analysierenden Rasterzeilen und die zweite Mehrzahl von zu analysierenden Rasterzeilen überlappen, und
wobei die Mustererkennungseinrichtung (420) ferner ausgelegt ist, um basierend darauf, ob der zu identifizierende Kurvenverlauf (146,148,150,152) bei einer Analyse der ersten Mehrzahl von zu analysierenden Rasterzeilen oder bei einer Analyse der zweiten Mehrzahl von zu analysierenden Rasterzeilen identifiziert wird, einen Lage-Parameter des zu identifizierenden Kurvenverlaufs zu bestimmen.

25. Vorrichtung (100;800) gemäß einem der Ansprüche 1 bis 24, bei der die erste Richtung (130;x) orthogonal zu der zweiten Richtung (132;y) ist.

26. Vorrichtung (100;800) gemäß einem der Ansprüche 1 bis 25, wobei die Vorrichtung zum Ermitteln einer Information über die Form und/oder die Lage der Ellipse ausgelegt ist, um als graphisches Bild (112;812) ein binäres Kantenabbild (310)zu empfangen,
wobei das binäre Kantenabbild mindestens eine Kante durch mindestens eine Linie (350)in Form von aktiven Bildpunkten (312) beschreibt, während orte in dem Kantenbild, an dem keine Kante vorhanden ist, durch nicht-aktive Bildpunkte (314) beschrieben sind.

27. Vorrichtung (100;800) gemäß einem der Ansprüche 1 bis 26, wobei die Vorrichtung ferner ausgelegt ist, um das grafische Bild (112;812) von Videodaten von einer Videodatenquelle abzuleiten.

28. Vorrichtung (100;800) gemäß einem der Ansprüche 1 bis 27, die ferner einer Datenschnittstelle oder einer Anzeigenvorrichtung umfasst, die ausgelegt ist, um die Information über die Form und/oder die Lage der Ellipse gegenüber einer elektrischen Verarbeitungseinrichtung oder einem menschlichen Benutzer auszugeben.

29. Vorrichtung (100;800) gemäß einem der Ansprüche 1 bis 28, wobei die Vorrichtung zum Ermitteln einer Information über die Form und/oder die Lage einer Ellipse ausgelegt ist, um das graphische Bild (112;812) durch eine Schwellwert-Binarisierung, bei der jedem Bildpunkt des graphischen Bildes in Abhängigkeit von einem Ergebnis eines Vergleichs eines Farbwerts und/oder eines Helligkeitswerts mit einem Schwellwert ein Hellwert oder ein Dunkelwert zugeordnet wird, vorzuverarbeiten, um ein binarisiertes Bild zu erhalten,
und um ferner eine Kantendetektion auf das binarisierte Bild anzuwenden, wobei die Kantendetektion ausgelegt ist, um aus dem binarisierten Bild ein Kantenbild zu erzeugen, in dem kantenförmige übergänge von dem Hellwert zu dem Dunkelwert in dem binarisierten Bild als eine linienförmige Kante **gekennzeichnet** sind,
wobei die Koordinatenbestimmungseinrichtung ferner ausgelegt ist, um das Kantenbild zu verarbeiten.

30. Vorrichtung (100;800) gemäß einem der Ansprüche 1 bis 29, wobei die Vorrichtung ferner ausgelegt ist, um das graphische Bild von einer Videokamera zu erhalten, die angeordnet ist, um eine Pupille eines menschlichen Auges zu erfassen,
und wobei die Vorrichtung ferner eine Datenschnittstelle umfasst, die ausgelegt ist, um die Information über die Form und/oder die Lage der Ellipse an eine Vorrichtung zur Berechnung einer Blickrichtung des menschlichen Auges zu übertragen.

31. Vorrichtung (100;800) gemäß einem der Ansprüche 1 bis 30, wobei die Vorrichtung ferner eine Schnittstelle umfast, die ausgelegt ist, um die Information über die Form und/oder die Lage der Ellipse an eine mechanische Positioniereinrichtung auszugeben, die ausgelegt ist, um abhängig von der Information über die Form und/oder die Lage der Ellipse eine mechanische Bewegung herbeizuführen.

**EP 1 789 925 B1**

**32.** Vorrichtung (100;800) gemäß einem der Ansprüche 1 bis 31, bei der die Koordinatenbestimmungseinrichtung ausgelegt ist, um ein erstes gebogenes Liniensegment, das die Ellipse (134;220) an dem ersten Ellipsenpunkt (136; 226) oder in einer Umgebung des ersten Ellipsenpunktes (136;226) annähert, zu identifizieren, um mindestens einen Parameter des identifizierten ersten gebogenen Liniensegments (146)zu bestimmen, und um basierend auf dem mindestens einen Parameter des identifizierten ersten gebogenen Liniensegments (146) die Koordinaten ($x_1$', $y_1$'; $x_3$, $y_3$) des ersten Ellipsenpunktes (136;226) zu bestimmen, und
um mindestens ein zweites gebogenes Liniensegment, das die Ellipse (134;220) an dem zweiten Ellipsenpunkt (138;228) oder in einer Umgebung des zweiten Ellipsenpunktes (138;228) annähert, zu identifizieren, um mindestens einen Parameter des identifizierten zweiten gebogenen Liniensegments (148) zu bestimmen, und um basierend auf dem mindestens einen Parameter des identifizierten zweiten gebogenen Liniensegments (148) die Koordinaten ($x_3$', $y_3$'; $x_1$, $y_1$) des zweiten Ellipsenpunktes (138;228) zu bestimmen.

**33.** Verfahren (1700) zum Ermitteln einer Information (122; 1780) über eine Form und/oder eine Lage einer Ellipse (134; 220) in einem graphischen Bild (112;812;1710), wobei das Bild (112;812;1710) eine erste Richtung (130;x) und eine zweite Richtung (132;y) aufweist, mit folgenden Schritten:

Ermitteln (1720) von zwei Koordinaten ($x_1$',$y_1$';$x_3$,$y_3$) eines ersten Ellipsenpunktes (136;226), der einen am weitesten in der ersten Richtung (130;x) gelegenen Punkt der Ellipse (134;220) darstellt;
Ermitteln (1730) von zwei Koordinaten ($x_3$',$y_3$';$x_1$,$y_1$) eines zweiten Ellipsenpunktes (138;228), der einen am weitesten in einer der ersten Richtung (130;x) entgegengesetzten Richtung gelegenen Punkt der Ellipse (134; 220) darstellt,

wobei das Ermitteln (1720) der zwei Koordinaten ($x_1$',$y_1$';$x_3$,$y_3$) des ersten Ellipsenpunktes (136;226) ein Bestimmen mindestens eines Parameters eines ersten gebogenen Liniensegments (146), das die Ellipse an dem ersten Ellipsenpunkt oder in einer Umgebung des ersten Ellipsenpunktes annähert, sowie ein Bestimmen der Koordinaten ($x_1$', $y_1$';$x_3$, $y_3$) des ersten Ellipsenpunktes (136;226) basierend auf dem mindestens einen Parameter des ersten gebogenen Liniensegments (146) umfasst, und
wobei das Ermitteln (1730) der zwei Koordinaten ($x_3$',$y_3$';$x_1$,$y_1$) des zweiten Ellipsenpunktes (138;228) ein Bestimmen mindestens eines Parameters eines zweiten gebogenen Liniensegments (148), das die Ellipse an dem zweiten Ellipsenpunkt (138;228) oder in einer Umgebung des zweiten Ellipsenpunktes (138;228) annähert, sowie ein Bestimmen der Koordinaten ($x_3$',$y_3$';$x_1$,$y_1$) des zweiten Ellipsenpunktes (138;228) basierend auf dem mindestens einen Parameter des zweiten gebogenen Liniensegments (148) umfasst; und
Berechnen (1740) mindestens eines Ellipsenparameters ($x_m$,$y_m$) der Ellipse, basierend auf den zwei Koordinaten ($x_1$',$y_1$';$x_3$,$y_3$) des ersten Ellipsenpunktes und den zwei Koordinaten ($x_3$',$y_3$';$x_1$,$y_1$) des zweiten Ellipsenpunktes, wobei der mindestens eine Ellipsenparameter ($x_m$,$y_m$) die Information über die Form und/oder die Lage der Ellipse darstellt.

**34.** Verfahren gemäß Anspruch 33, bei dem das Ermitteln (1720) der zwei Koordinaten ($x_1$',$y_1$';$x_3$,$y_3$) des ersten Ellipsenpunktes (136;226) ein Identifizieren eines ersten gebogenen Liniensegments, das die Ellipse an dem ersten Ellipsenpunkt oder in einer Umgebung des ersten Ellipsenpunktes annähert, ein Bestimmen mindestens eines Parameters des identifizierten ersten gebogenen Liniensegments (146) sowie ein Bestimmen der Koordinaten ($x_1$', $y_1$';$x_3$,$y_3$) des ersten Ellipsenpunktes (136;226) basierend auf dem mindestens einen Parameter des identifizierten ersten gebogenen Liniensegments (146) umfasst, und
bei dem das Ermitteln (1730) der zwei Koordinaten ($x_3$',$y_3$';$x_1$,$y_1$) des zweiten Ellipsenpunktes (138; 228) ein Identifizieren eines zweiten gebogenen Liniensegments, das die Ellipse an dem zweiten Ellipsenpunkt (138;228) oder in einer Umgebung des zweiten Ellipsenpunktes (138;228) annähert, ein Bestimmen mindestens eines Parameters des identifizierten zweiten gebogenen Liniensegments (148) sowie ein Bestimmen der Koordinaten ($x_3$',$y_3$';$x_1$,$y_1$) des zweiten Ellipsenpunktes (138;228) basierend auf dem mindestens einen Parameter des identifizierten zweiten gebogenen Liniensegments (148) umfasst.

**35.** Computerprogramm zum Durchführen des Verfahrens gemäß Anspruch 33 oder 34, wenn das Computerprogramm auf einem Computer abläuft.

**Claims**

**1.** Apparatus (100; 800) for determining information (122) about shape and/or location of an ellipse in a graphical image (112; 812), the graphical image (112; 812) comprising a first direction (130; x) and a second direction (132; y), comprising:

a coordinate determination means (110; 400; 830, 832, 840, 842) for determining two coordinates ($x_1$', $y_1$'; $x_3$, $y_3$) of a first ellipse point (136; 226) representing a point of the ellipse (134; 220) located furthest in the first direction (130; x), and
for determining two coordinates ($x_3$', $y_3$'; $x_1$, $y_1$) of a second ellipse point (138; 228) representing a point of the ellipse (134; 220) located furthest in a direction opposite to the first direction (130; x),

wherein the coordinate determination means (110; 420; 430; 814, 830, 832, 840, 842) is formed to determine at least one parameter of a first bent line segment (146) approximating the ellipse (134; 220) at the first ellipse point (136; 226) or in a surrounding of the first ellipse point (136; 226), and to determine the coordinates ($x_1$', $y_1$'; $x_3$, $y_3$) of the first ellipse point (136; 226) based on the at least one parameter of the first bent line segment (146), and
to determine at least one parameter of a second bent line segment (148) approximating the ellipse (134; 220) at the second ellipse point (138; 228) or in a surrounding of the second ellipse point (138; 228), and to determine the coordinates ($x_3$', $y_3$'; $x_1$, $y_1$) of the second ellipse point (138; 228) based on the at least one parameter of the second bent line segment (148); and
an ellipse calculation means (120; 850) for calculating at least one ellipse parameter ($x_m$', $x_m$', a', b', $\alpha$' ; $x_m$, $y_m$, a, b, $\alpha$) based on the two coordinates ($x_1$', $y_1$'; $x_3$, $y_3$) of the first ellipse point (136; 226) and the two coordinates ($x_3$', $y_3$' ; $x_1$, $y_1$) of the second ellipse point (138; 228),
wherein the at least one ellipse parameter ($x_m$', $y_m$', a', b', $\alpha$'; $x_m$, $y_m$, a, b, $\alpha$) represents the information (122) about the shape and/or the location of the ellipse (134; 220).

2. Apparatus (100; 800) according to claim 1,
wherein the coordinate determination means (110; 400; 814, 830, 832, 840, 842) further is formed to determine at least one coordinate ($x_4$', $y_4$'; $x_2$, $y_2$) of a third ellipse point (140; 230) representing a point of the ellipse (134; 220) located furthest in the second direction (132; y),
wherein the coordinate determination means (110; 400; 814, 830, 832, 840, 842) is formed to determine at least one parameter of a third bent line segment (150) approximating the ellipse (134; 220) at the third ellipse point (140; 230) or in a surrounding of the third ellipse point (140; 230), and
to determine at least one coordinate ($x_4$', $y_4$'; $x_2$, $y_2$) of the third ellipse point (140; 230) based on the at least one parameter of the third bent line segment (150),
wherein the ellipse calculation means (110) is formed to calculate at least one ellipse parameter ($x_m$', $y_m$', a', b', $\alpha$'; $x_m$, $y_m$, a, b, $\alpha$) based on the two coordinates ($x_1$', $y_1$' ; $x_3$, $Y_3$) of the first ellipse point (136; 226), the two coordinates ($x_3$', $y_3$' ; $x_1$, $y_1$) of the second ellipse point (138; 228) and the at least one coordinate ($x_4$', $y_4$'; $x_2$, $y_2$) of the third ellipse point (140; 230).

3. Apparatus (100; 800)- according to claim 1 or 2, wherein the graphical image (112; 812) is a raster image (310) including a plurality of image points (312, 314) arranged in a plurality of raster rows (320, 330, 332, 334, 368, 372) and/or in a plurality of raster columns (322, 336, 338, 340, 362, 366), wherein the ellipse (134, 220; 350) is described by a plurality of image points forming ellipse points, and/or wherein the first bent line segment (146) can be described by a plurality of adjacent image points, and/or wherein the second bent line segment (148) can be described by a plurality of adjacent image points, and/or wherein the third bent line segment (150) can be described by a plurality of adjacent image points.

4. Apparatus (100; 800) according to claim 3, wherein the coordinate determination means (110; 400; 814, 830, 832, 840, 842) is formed to perform a pattern recognition, using the raster rows (320, 330, 332, 334, 368, 372) and/or the raster columns (322, 336, 338, 340, 362, 366), in order to identify, in an image excerpt (360, 364, 370, 374, 380; 740; 1320, 1330) of the image to be analyzed, which is formed by a plurality (360; 364; 370; 374; 380) of raster rows and/or raster columns, a curve course (510, 520, 560, 570) forming the first bent line segment (146), and to determine at least one parameter of the identified curve course (510, 520, 560, 570) as a parameter of the first bent line segment (146).

5. Apparatus (100; 800) according to claim 4, wherein the coordinate determination means (100; 400; 814, 830, 832, 840, 842) is formed to perform a pattern recognition, using the raster rows (320, 330, 332, 334, 368, 372) and/or raster columns (322, 336, 338, 340, 362, 366), in order to identify, in the image excerpt (1320, 1330) of the image (112; 310; 812; 1300) to be analyzed, which is formed by the plurality (360, 364, 370, 374, 380) of raster rows and/or raster columns, a curve course forming the first bent line segment (146), by checking if the image excerpt (1320, 1330) to be analyzed includes a curve course that is sufficiently similar to a reference curve course from a first set of possible reference curve courses (452, 454, 456) with respect to a given similarity measure, wherein the first set of possible reference curve courses (452, 454, 456) describes admissible courses of the first bent line segment (146) for various parameters of the first bent line segment (146),

and/or to identify, in the image excerpt (1320, 1330) of the image (112; 310; 812; 1300) to be analyzed, which is formed by the plurality (360, 364, 370, 374, 380) of raster rows (320, 330, 332, 334, 368, 372) and/or raster columns (322, 336, 338, 340, 362, 366), a curve course forming the second bent line segment (148), by checking if the image excerpt (1320, 1330) to be analyzed includes a curve course sufficiently similar to a reference curve course from a second set of possible reference curve courses (452, 454, 456) with respect to a given similarity measure, wherein the second set of possible reference curve courses (452, 454, 456) describes admissible courses of the second bent line segment (148) for various parameters of the second bent line segment (148),

and/or to identify, in the image excerpt of the image (112; 310; 812; 1300) to be analyzed, which is formed by the plurality (360, 364, 370, 374, 380) of raster rows (320, 330, 332, 334, 368, 372) and/or raster columns (322, 336, 338, 340, 362, 366), a curve course forming the third bent line segment (150), by checking if the image excerpt (1320, 1330) to be analyzed includes a curve course sufficiently similar to a reference curve course from a third set of possible reference curve courses with respect to a given similarity measure, wherein the third set of possible reference curve courses describes admissible courses of the third bent line segment (150) for various parameters of the third bent line segment (150).

6. Apparatus (100; 800) according to claim 5, wherein the set of possible reference curve courses (452, 454, 456) describes curve courses differing with respect to their location and/or shape, wherein at least one parameter characterizing the location and/or shape is associated with a curve course from the plurality of possible reference curve courses (452, 454, 456), and wherein the coordinate determination means (100; 400; 814, 830, 832, 840, 842) is formed to derive the parameter of the first bent line segment (146) approximating the ellipse (134) at the first ellipse point (136), the parameter of the second bent line segment (148) approximating the ellipse (134) at the second ellipse point (138), or the parameter of the third bent line segment (150) approximating the ellipse (134) at the third ellipse point (140), from the fact as to which one of the curve courses from the plurality of possible reference curve courses (452, 454, 456) is sufficiently similar to a curve course in the image excerpt (1320, 1330) with respect to the given similarity measure.

7. Apparatus (100; 800) according to claim 5 or 6, wherein the curve courses from the plurality of possible reference curve courses (452, 454, 456) are chosen so that they approximate ellipses of different shape and/or location at the first ellipse point or at the second ellipse point or at the third ellipse point.

8. Apparatus (100; 800) according to one of claims 5 to 7, wherein the curve courses from the plurality of possible reference curve courses (452, 454, 456) are selected so that they describe excerpts from circular curves of different location and/or different radius.

9. Apparatus (100; 800) according to one of claims 1 to 8, wherein the coordinate determination means (110; 400; 814, 830, 832, 840, 842) is formed to apply a pattern recognition (420; 830, 832, 840, 842) to a plurality of image excerpts (360, 364, 370, 374, 380; 1320, 1330) of the image (112; 310; 812; 1300) to be analyzed, in order to identify, in the plurality of image excerpts (360, 364, 370, 374, 380; 1320, 1330) to be analyzed, a curve course forming the first bent line segment (136), and to determine a location parameter of the first bent line segment (136), based on in which one of the plurality of image excerpts (360, 364, 370, 374, 380; 1320, 1330) of the image (112; 310; 812; 1300) the first bent line segment (136) is identified.

10. Apparatus (100; 800) according to claim 9, wherein the coordinate determination means (110; 400; 814, 830, 833, 840, 842) is formed to apply the pattern recognition (400; 830; 832; 840; 842) to the plurality of image excerpts (360, 364, 370, 374, 380; 1320, 1330) of the image (112; 310; 812; 1300) to be analyzed, wherein the image excerpts to be analyzed are chosen so that at least two image excerpts of the plurality of image excerpts (360, 364, 370, 374, 380; 1320, 1330) to be analyzed overlap.

11. Apparatus (100; 800) according to one of claims 1 to 10, wherein the coordinate determination means (110; 400; 814, 830, 832, 840, 842) is formed to determine at least one further coordinate ($x_4'$, $y_4'$; $x_2$, $y_2$) of the third ellipse point (140; 230) as an additional coordinate, or at least one coordinate ($x_2'$, $y_2'$; $x_0$, $y_0$) of a fourth ellipse point (142; 232) representing a point of the ellipse (134; 220) located furthest in a direction opposite to the second direction (132; y),

wherein the ellipse calculation means (120; 850) is formed to calculate a first set of ellipse parameters including at least one ellipse parameter, based on the two coordinates ($x_1'$, $y_1'$; $x_3$, $y_3$) of the first ellipse point (136; 226), the

two coordinates $(x_3', y_3'; x_1, y_1)$ of the second ellipse point (138; 228) and the first coordinate $(x_4', y_4'; x_2, y_2)$ of the third ellipse point (140; 230), as well as to calculate a second set of ellipse parameters including at least one ellipse parameter, based on the two coordinates $(x_1', y_1'; x_3, y_3)$ of the first ellipse point (136; 226), the two coordinates $(x_3', y_3'; x_1, y_1)$ of the second ellipse point (138; 228) and the additional coordinate $(x_4', y_4', x_2, y_2'; x_0, y_0, x_2, y_2)$, and to calculate a result set of ellipse parameters $(x_m', y_m', a', b', \alpha'; x_m, y_m, a, b, \alpha)$ by averaging, using the first set of ellipse parameters and the second set of ellipse parameters.

12. Apparatus (100; 800) according to one of claims 1 to 11, wherein the coordinate calculation means (110; 400; 814, 830, 832, 840, 842) is formed to determine two coordinates $(x_4', y_4'; x_2, y_2)$ of the third ellipse point (140; 230) representing a point of the ellipse (134; 320) located furthest in the second direction (132; y), and two coordinates $(x_2', y_2'; x_0, y_0)$ of a fourth ellipse point (142; 232) representing a point of the ellipse located furthest in a direction opposite to the second direction (132; y), and further to select a plurality of different sets of three ellipse points from the first ellipse point (136; 226), the second ellipse point (138; 228), the third ellipse point (140; 230) and the fourth ellipse point (142; 232), in order to determine associated sets of ellipse parameters $(x_m', y_m', a', b', \alpha'; x_m, y_m, a, b, \alpha)$ for the sets of ellipse points (136, 138, 140, 142; 226, 228 230, 232), and to calculate an averaged set of ellipse parameters as information about the shape and/or the location of the ellipse (134; 220) by averaging the sets of ellipse parameters belonging to the sets of ellipse points.

13. Apparatus according to one of claims 1 to 12, wherein the coordinate determination means (110; 400; 814, 830, 832, 840, 842) is formed to determine two coordinates $(x_4', y_4'; x_2, y_2)$ of the third ellipse point (140; 230) representing a point of the ellipse (134; 220) located furthest in the second direction (132; y), and
wherein the ellipse calculation means (120; 850) is further formed to calculate center coordinates $(x_m, y_m)$ of the ellipse (134; 220) from the two coordinates $(x_1', y_1'; x_3, y_3)$ of the first ellipse point (136; 226) and the two coordinates $(x_3', y_3'; x_1, y_1)$ of the second ellipse point (138; 228),
to perform a coordinate transform of the coordinates $(x_1', y_1', x_4', y_4'; x_3, y_3, x_2, y_2)$ of the first ellipse point (136; 226) and of the third ellipse point (140; 230), in order to obtain transformed coordinates $(x_x, y_x, x_y, y_y)$ of the first ellipse point (136; 226) and the third ellipse point (138; 228), wherein the coordinate transform is formed to shift a center (240) of the ellipse (134; 220) described by the center coordinates $(x_m, y_m)$ into a coordinate origin (264),
to calculate an estimated transformed second coordinate $y_{y,calc}$ of the third ellipse point, using the determination equation

$$ 1 = \frac{y_{y,calc} \cdot x_y}{y_x \cdot x_x} $$

wherein $x_x$ is the transformed first coordinate of the first ellipse point (136; 226), wherein $y_x$ is the transformed second coordinate of the first ellipse point (136; 226), and wherein $x_y$ is the transformed first coordinate of the third ellipse point (140; 230),
and to decide if the third ellipse point (140; 230) belongs to the ellipse (134; 220) described by the first ellipse point (136; 226) and the second ellipse point (138; 228), based on a deviation between the estimated transformed second coordinate $y_{y,calc}$ of the third ellipse point (140; 230) and the transformed second coordinate $y_y$ of the third ellipse point (140; 230) determined by the coordinate transform.

14. Apparatus (100; 800) according to one of claims 1 to 13,
wherein the ellipse calculation means (120; 850) is formed to calculate a first center coordinate $x_m$ of the ellipse (134; 220), based on the first coordinate $x_3$ of the first ellipse point (226) and the first coordinate $x_1$ of the second ellipse point (228), using the calculation rule

$$ x_m = \frac{x_3 + x_1}{2} \quad , $$

and/or to calculate a second center coordinate $y_m$ of the ellipse (134; 220), based on the second coordinate $y_3$ of the first ellipse point (226) and the second coordinate $y_1$ of the second ellipse point (228), using the calculation rule

$$Y_m = \frac{Y_3 + Y_1}{2} \quad .$$

**15.** Apparatus (100; 800) according to claim 14, wherein the ellipse calculation means (120; 850) is further formed to calculate a rotational angle $\alpha$ of the ellipse (134; 220), a length a of a first semiaxis of the ellipse (134; 220) and/or a length b of a second semiaxis of the ellipse (134; 220), using the following determination equations:

$$k_x = \frac{x_x}{y_x} ; \qquad k_y = \frac{y_y}{x_y} ;$$

$$u = -\frac{1}{2} \cdot (k_x - k_y) \pm \frac{1}{2} \cdot \sqrt{(k_x - k_y)^2 + 4} ;$$

$$\tan(\alpha) = u ;$$

$$\frac{1}{\rho^2} = \frac{b^2}{a^2} = \frac{k_x \cdot u - 1}{u^2 + k_x \cdot u} \text{ or } \frac{1}{\rho^2} = \frac{b^2}{a^2} = \frac{k_y \cdot u - u^2}{k_y \cdot u + 1} ;$$

$$b = \frac{\rho \cdot \tan \alpha \cdot \left( x_x \cdot \sqrt{\frac{\rho^2 + \tan^2 \alpha}{\rho^2}} - x_y \cdot \sqrt{\frac{\rho^2 \cdot \tan^2 \alpha + 1}{\rho^2 \cdot \tan^2 \alpha}} \right)}{\sin \alpha \cdot \left( \tan^2 \alpha + 1 \right)} ;$$

$$a = \rho \cdot b$$

wherein u, $k_x$ and $k_y$ are auxiliary quantities;
wherein $\rho$ describes a ratio between a length a of the first semiaxis and a length b of the second semiaxis;
wherein a sign in the determination equation for u is established based on the auxiliary quantities $k_x$ and $k_y$, depending on a location of the first transformed ellipse point and/or the second transformed ellipse point; and
wherein at least one of the two determination equations for $\rho$ is used depending on $k_x$, $k_y$ and u.

**16.** Apparatus (100; 800) according to one of claims 1 to 15, wherein the coordinate determination means (110; 400; 814, 830, 832, 840, 842) comprises a pattern recognition means (420; 600; 830, 832, 840, 842), which is formed to receive a plurality of raster rows (320, 330, 332, 334, 368, 372) to be analyzed or of raster columns (322, 336, 338, 340, 362, 366) to be analyzed in the form of a plurality of parallel time signals (612, 614, 616), and to forward the time signals (612, 614, 616) in parallel at different speeds through a plurality of stages (610) connected one behind the other,
wherein at least one predetermined stage (610) includes a summing means (630), which is formed to sum signals coming out of the predetermined stage (610), in order to form a column sum (632),
and wherein the pattern recognition means (600) is further formed to evaluate the column sum (632), in order to determine information about a bent line segment (146, 148, 150, 152) included in the raster rows (320, 330, 332, 334, 368, 372) or raster columns (322, 336, 338, 340, 362, 366) received from the pattern recognition means (600), wherein the information includes at least one parameter of the bent line segment (146, 148, 150, 152) included in the received raster rows (320, 330, 332, 334, 368, 372) or raster columns (322, 336, 338, 340, 362, 366).

17. Apparatus (100; 800) according to claim 16, wherein the predetermined stage (610) further comprises a threshold value recognition means (634), which is formed to receive and recognize the column sum (632) if at least one given number of signals (612, 614, 616) at the output of the predetermined stage (610) are active at the same time, wherein the pattern recognition means (420; 600; 830, 832, 840, 842) is further formed to evaluate an output signal of the threshold value recognition means (634), in order to determine at least one parameter of a bent line segment (146, 148, 150, 152) included in the received raster rows (320, 330, 332, 334, 368, 372) or raster columns (322, 336, 338, 340, 362, 366).

18. Apparatus (100; 800) according to claim 16 or 17, wherein the pattern recognition means (420; 600; 830, 832, 840, 842) is formed to distort a curved curve course (1410), which is described by the signals (612, 614, 616; 1510) received by the pattern recognition means (420; 600; 830, 832, 840, 842), step by step when passing through the stages (610; 1530) connected one behind the other, due to a differently fast propagation of the signals (612, 614, 616; 1510), in order to obtain a distorted description (1420, 1430, 1440) of the curved curve course, and to recognize if an approximately straight line (1450) represented by a plurality of concurrently active signals (612, 614, 616; 1510) in a particular stage (610; 1530) is described by the distorted description.

19. Apparatus (100; 800) according to one of claims 16 to 18, wherein the at least one stage (610; 1530) of the pattern recognition means (420; 600; 830, 832, 840, 842) is formed to delay several signals (612, 614, 616; 1510) in differently strong manner when forwarding same through the stage (610; 1530).

20. Apparatus (100; 800) according to one of claims 16 to 19, wherein the pattern recognition means (420; 600; 830, 832, 840, 842), by establishing different delays (620, 624) when forwarding the signals (612, 614, 616) through the stages (610), is formed so that a circularly bent line segment included in the raster rows (320, 330, 332, 334, 368, 372) or raster columns (322, 336, 338, 340, 362, 366) received by the pattern recognition means is deformed approximately to a straight line after passing through a number of stages (610; 1530),
wherein the pattern recognition means (420; 600; 830, 832, 840, 842) is formed to recognize presence of an approximately straight line and to determine after passing through how many stages the straight line is present, and wherein the pattern recognition means (420; 600; 830, 832, 840, 842) is further formed to derive, from the number of stages passed through until the presence of an approximately straight line, at least one parameter of the circularly bent line segment received by the pattern recognition means.

21. Apparatus (100; 800) according to one of claims 10 to 20, wherein the pattern recognition means (420; 600; 830, 832, 840, 842), by establishing different delays (620, 624) when forwarding the signals (612, 614, 616) through the stages (610), is formed so that a circularly bent line segment included in the raster rows (320, 330, 332, 334, 368, 372) or raster columns (322, 336, 338, 340, 362, 366) received by the pattern recognition means (420; 600; 830, 832, 840, 842) is deformed approximately to a straight line after passing through a number of stages, wherein the pattern recognition means is formed to recognize presence of an approximately straight line and to derive at least one parameter of the circularly bent line segment received by the pattern recognition means, based on the time instant at which the approximately straight line is present.

22. Apparatus (100; 800) according to one of claims 10 to 21, wherein the coordinate determination means (110; 412, 420, 430; 840, 820, 822, 830, 832) is formed to supply the image (112; 310; 812) to the pattern recognition means (420; 600; 820, 822, 830, 832) twice in form of successively transmitted raster rows (320, 330, 332, 334, 368, 372) to be analyzed,
wherein the coordinate determination means is further formed to supply the image to the pattern recognition means for a determination of the two coordinates $(x_3, y_3)$ of the first ellipse point (226), beginning with a raster row (320) of the image located at a first edge of the image, and to supply the image to the pattern recognition means for a determination of the two coordinates $(x_1, y_1)$ of the second ellipse point (228), beginning with a raster row (334) of the image located at a second edge of the image, wherein the first edge of the image is opposite to the second edge of the image, and wherein the pattern recognition means is formed to recognize bent line segments with a given direction of curvature.

23. Apparatus (100; 800) according to one of claims 10 to 22, wherein the coordinate determination means (110; 420;

814, 820, 822, 830, 832) includes a first pattern recognition means (830) and a second pattern recognition means (832), wherein the first pattern recognition means (830) is formed to recognize bent line segments with a first given direction of curvature, wherein the second pattern recognition means (832) is formed to recognize bent line segments with a second direction of curvature opposite to the given first direction of curvature, and wherein the coordinate determination means is formed to supply the image to the first pattern recognition means (830) for a determination of the two coordinates $(x_3, y_3)$ of the first ellipse point (226), beginning with a raster row (320) located at a first edge of the image, and to supply the image to the second pattern recognition means (832) for a determination of the two coordinates $(x_1, y_1)$ of the second ellipse point (228), beginning with a raster row (320) located at the first edge of the image.

24. Apparatus (100; 800) according to one of claims 10 to 23, wherein the pattern recognition means (412, 420; 600) is formed to process a first plurality (370) of raster rows to be analyzed as well as a second plurality (374) of raster rows to be analyzed, wherein the first plurality of raster rows to be analyzed and the second plurality of raster rows to be analyzed overlap, and
wherein the pattern recognition means (420) is further formed to determine a location parameter of the curve course to be identified, based on whether the curve course (146, 148, 150, 152) to be identified is identified in an analysis of the first plurality of raster rows to be analyzed or in an analysis of the second plurality of raster rows to be analyzed.

25. Apparatus (100; 800) according to one of claims 1 to 24, wherein the first direction (130; x) is orthogonal to the second direction (132; y).

26. Apparatus (100; 800) according to one of claims 1 to 25, wherein the apparatus for determining information about the shape and/or the location of an ellipse is formed to receive a binary edge image (310) as graphical image (112; 812), wherein the binary edge image describes at least one edge by at least one line (350) in form of active image points (312), whereas locations in the edge image at which no edge is present are described by non-active image points (314).

27. Apparatus (100; 800) according to one of claims 1 to 26, wherein the apparatus is further formed to derive the graphical image (112; 812) from video data from a video data source.

28. Apparatus (100; 800) according to one of claims 1 to 27, further comprising a data interface or a display device, which is formed to output the information about the shape and/or the location of the ellipse to an electrical processing means or a human user.

29. Apparatus (100; 800) according to one of claims 1 to 28, wherein the apparatus for determining information about the shape and/or the location of an ellipse is formed to preprocess the graphical image (112; 812) by a threshold value binarization, in which a light value or a dark value is associated with each image point of the graphical image, depending on the result of a comparison of a color value and/or a brightness value with a threshold value, in order to obtain a binarized image,
and further to apply edge detection to the binarized image, wherein the edge detection is formed to generate, from the binarized image, an edge image, in which edge-shaped transitions from the light value to the dark value in the binarized image are **characterized** as a line-shaped edge,
wherein the coordinate determination means is further formed to process the edge image.

30. Apparatus (100; 800) according to one of claims 1 to 29, wherein the apparatus is further formed to obtain the graphical image from a video camera arranged to capture a pupil of a human eye,
and wherein the apparatus further includes a data interface formed to transmit the information about the shape and/or the location of the ellipse to an apparatus for calculating a viewing direction of the human eye.

31. Apparatus (100; 800) according to one of claims 1 to 30, wherein the apparatus further includes an interface formed to output the information about the shape and/or the location of the ellipse to a mechanical positioning means formed to cause mechanical motion, depending on the information about the shape and/or the location of the ellipse.

32. Apparatus (100; 800) according to one of claims 1 to 31, wherein the coordinate determination means is formed to identify a first bent line segment approximating the ellipse (134; 220) at the first ellipse point (136; 226) or in a surrounding of the first ellipse point (136; 226), to determine at least one parameter of the identified first bent line segment (146), and to determine the coordinates $(x_1', y_1'; x_3, y_3)$ of the first ellipse point (136; 226), based on the at least one parameter of the identified first bent line segment (146), and

to identify at least one second bent line segment approximating the ellipse (134; 220) at the second ellipse point (138; 228) or in a surrounding of the second ellipse point (138; 228), to determine at least one parameter of the identified second bent line segment (148), and to determine the coordinates $(x_3', y_3'; x_1, y_1)$ of the second ellipse point (138; 228), based on the at least one parameter of the identified second bent line segment (148).

33. Method (1700) for determining information (122; 1780) about shape and/or location of an ellipse (134; 220) in a graphical image (112; 812; 1710), the image (112; 812; 1710) comprising a first direction (130; x) and a second direction (132; y), comprising the following steps:

   determining (1720) two coordinates $(x_1', y_1'; x_3, y_3)$ of a first ellipse point (136; 226) representing a point of the ellipse (134; 220) located furthest in the first direction (130; x);
   determining (1730) two coordinates $(x_3', y_3'; x_1, y_1)$ of a second ellipse point (138; 228) representing a point of the ellipse (134; 220) located furthest in a direction opposite to the first direction (130; x),

   wherein determining (1720) the two coordinates $(x_1', y_1'; x_3, y_3)$ of the first ellipse point (136; 226) includes determining at least one parameter of a first bent line segment (146) approximating the ellipse at the first ellipse point or in a surrounding of the first ellipse point, as well as determining the coordinates $(x_1', y_1'; x_3, y_3)$ of the first ellipse point (136; 226), based on the at least one parameter of the first bent line segment (146), and
   wherein determining (1730) the two coordinates $(x_3', y_3'; x_1, y_1)$ of the second ellipse point (138; 228) includes determining at least one parameter of a second bent line segment (148) approximating the ellipse at the second ellipse point (138; 228) or in a surrounding of the second ellipse point (138; 228), as well as determining the coordinates $(x_3', y_3'; x_1, y_1)$ of the second ellipse point (138; 228), based on the at least one parameter of the second bent line segment (148); and
   calculating (1740) at least one ellipse parameter $(x_m, y_m)$ of the ellipse, based on the two coordinates $(x_1', y_1'; x_3, y_3)$ of the first ellipse point and the two coordinates $(x_3', y_3'; x_1, y_1)$ of the second ellipse point,
   wherein the at least one ellipse parameter $(x_m, y_m)$ represents information about the shape and/or the location of the ellipse.

34. Method according to claim 33, wherein determining (1720) the two coordinates $(x_1', y_1'; x_3, y_3)$ of the first ellipse point (136; 226) includes identifying a first bent line segment approximating the ellipse at the first ellipse point or in a surrounding of the first ellipse point, determining at least one parameter of the identified first bent line segment (146), as well as determining the coordinates $(x_1', y_1'; x_3, y_3)$ of the first ellipse point (136; 226), based on the at least one parameter of the identified first bent line segment (146), and
   wherein determining (1730) the two coordinates $(x_3', y_3'; x_1, y_1)$ of the second ellipse point (138; 228) includes identifying a second bent line segment approximating the ellipse at the second ellipse point (138; 228) or in a surrounding of the second ellipse point (138; 228), determining at least one parameter of the identified second bent line segment (148), as well as determining the coordinates $(x_3', y_3'; x_1, y_1)$ of the second ellipse point (138; 228), based on the at least one parameter of the identified second bent line segment (148).

35. Computer program for performing the method according to claim 33 or 34, when the computer program runs on a computer.

**Revendications**

1. Dispositif (100; 800) pour déterminer une information (122) relative à une forme et/ou une position d'une ellipse dans une image graphique (112; 812), l'image graphique (112; 812) présentant une première direction (130; x) et une deuxième direction (132; y), aux caractéristiques suivantes:

   un moyen de détermination de coordonnées (110; 400; 830, 832, 840, 842) destiné à déterminer deux coordonnées $(x_1', y_1'; x_3, y_3)$ d'un premier point d'ellipse (136; 226) représentant un point de l'ellipse (134; 220) situé le plus éloigné dans la première direction (130; x), et
   destiné à déterminer deux coordonnées $(x_3', y_3'; x_1, y_1)$ d'un deuxième point d'ellipse (138; 228) représentant un point de l'ellipse (134; 220) situé le plus éloigné dans une direction opposée à la première direction (130; x),
   le moyen de détermination de coordonnées (110; 420; 430; 814, 830, 832, 840, 842) étant conçu de manière à déterminer au moins un paramètre d'un premier segment de ligne courbe (146) qui se rapproche de l'ellipse (134; 220) au premier point d'ellipse (136; 226) ou des environs du premier point d'ellipse (136; 226), et à déterminer, sur base de l'au moins un paramètre du premier segment de ligne courbe (146), les coordonnées

($x_1$', $y_1$' / $x_3$, $y_3$) du premier point d'ellipse (136; 226), et
à déterminer au moins un paramètre d'un deuxième segment de ligne courbe (148) se rapprochant de l'ellipse (134; 220) au deuxième point d'ellipse (138; 228) ou aux environs du deuxième point d'ellipse (138; 228), et à déterminer, sur base de l'au moins un paramètre du deuxième segment de ligne courbe (148), les coordonnées ($x_3$', $y_3$'; $x_1$, $y_1$) du deuxième point d'ellipse (138; 228); et
un moyen de calcul d'ellipse (120; 850) destiné à calculer au moins un paramètre d'ellipse ($x_m$', $x_m$', a', b', $\alpha$'; $x_m$, $y_m$, a, b, $\alpha$) sur base des deux coordonnées ($x_1$', $y_1$'; $x_3$, $y_3$) du premier point d'ellipse (136; 226) et des deux coordonnées ($x_3$', $y_3$'; $x_1$, $y_1$) du deuxième point d'ellipse (138; 228),
l'au moins un paramètre d'ellipse ($x_m$', $y_m$', a', b', $\alpha$'; $x_m$, $y_m$, a, b, $\alpha$) représentant l'information (122) relative à la forme et/ou à la position de l'ellipse (134; 220).

2. Dispositif (100; 800) selon la revendication 1,
dans lequel le moyen de détermination de coordonnées (110; 400; 814, 830, 832, 840, 842) est par ailleurs conçu de manière à déterminer au moins une coordonnée ($x_4$', $y_4$'; $x_2$, $y_2$) d'un troisième point d'ellipse (140; 230) représentant un point de l'ellipse (134; 220) situé le plus loin dans la deuxième direction (132; y),
dans lequel le moyen de détermination de coordonnées (110; 400; 814, 830, 832, 840, 842) est conçu de manière à déterminer au moins un paramètre d'un troisième segment de ligne courbe (150) qui se rapproche de l'ellipse (134; 220) au troisième point d'ellipse (140; 230) ou aux environs du troisième point d'ellipse (140; 230), et à déterminer, sur base de l'au moins un paramètre du troisième segment de ligne courbe (150), au moins une coordonnée ($x_4$', $y_4$'; $x_2$, $y_2$) du troisième point d'ellipse (140; 230),
dans lequel le moyen de calcul d'ellipse (110) est conçu de manière à calculer au moins un paramètre d'ellipse ($x_m$', $y_m$', a', b', $\alpha$'; $x_m$, $y_m$, a, b, $\alpha$), sur base des deux coordonnées ($x_1$', $y_1$'; $x_2$, $y_2$) du premier point d'ellipse (136; 226), des deux coordonnées ($x_3$', $y_3$'; $x_1$, $y_1$) du deuxième point d'ellipse (138; 228) et de l'au moins une coordonnée ($x_4$', $y_4$'; $x_2$, $y_2$) du troisième point d'ellipse (140; 230).

3. Dispositif (100; 800) selon la revendication 1 ou 2, dans lequel l'image graphique (112; 812) est une image de trame (310) comprenant une pluralité de pixels (312, 314) disposés en une pluralité de lignes de trame (320, 330, 332, 334, 368, 372) et/ou en une pluralité de colonnes de trame (322, 336, 338, 340, 362, 366), l'ellipse (134; 220; 350) étant décrite par une pluralité de pixels formant des points d'ellipse, et/ou le premier segment de ligne courbe (146) pouvant être décrit par une pluralité de pixels adjacents et/ou le deuxième segment de ligne courbe (148) pouvant être décrit par une pluralité de pixels adjacents et/ou le troisième segment de ligne courbe (150) pouvant être décrit par une pluralité de pixels adjacents.

4. Dispositif (100; 800) selon la revendication 3, dans lequel le moyen de détermination de coordonnées (110; 400; 814, 830, 832, 840, 842) est conçu de manière à effectuer, à l'aide des lignes de trame (320, 330, 332, 334, 368, 372) et/ou des colonnes de trame (322, 336, 338, 340, 362, 366), une identification de modèle, pour identifier, dans un segment (360, 364, 370, 374, 380; 740; 1320, 1330) de l'image à analyser formé par une pluralité (360; 364; 370; 374; 380) de lignes de trame et/ou de colonnes de trame, une évolution de courbe (510, 520, 560, 570) formant le premier segment de ligne courbe (146), et à déterminer, comme paramètre du premier segment de ligne courbe (146), au moins un paramètre de l'évolution de courbe (510, 520, 560, 570) identifiée.

5. Dispositif (100; 800) selon la revendication 4, dans lequel le moyen de détermination de coordonnées (100; 400; 814, 830, 832, 840, 842) est conçu de manière à effectuer, à l'aide des lignes de trame (320, 330, 332, 334, 368, 372) et/ou des colonnes de trame (322, 336, 338, 340, 362, 366), une identification de modèle, pour identifier, dans le segment (1320, 1330) de l'image (112; 310; 812; 1300) à analyser formé par la pluralité (360, 364, 370, 374, 380) de lignes de trame et/ou de colonnes de trame, une évolution de courbe formant le premier segment de ligne courbe (146) en vérifiant si le segment d'image à analyser (1320, 1330) contient une évolution de courbe qui est suffisamment similaire à une évolution de courbe de référence parmi une première quantité de possibles évolutions de courbe de référence (452, 454, 456) par rapport à une mesure de similitude prédéterminée, la première quantité de possibles évolutions de courbe de référence (452, 454, 456) décrivant des évolutions admissibles du premier segment de ligne courbe (146) pour différents paramètres du premier segment de ligne courbe (146),
et/ou à identifier dans le segment (1320, 1330) de l'image (112; 310; 812; 1300) à analyser formé par la pluralité (360, 364, 370, 374, 380) de lignes de trame (320, 330, 332, 334, 368, 372) et/ou de colonnes de trame (322, 336, 338, 340, 362, 366), une évolution de courbe formant le deuxième segment de ligne courbe (148) en vérifiant si le segment d'image (1320, 1330) à analyser contient une évolution de courbe qui est suffisamment similaire à une évolution de courbe de référence parmi une deuxième quantité de possibles évolutions de courbe de référence (452, 454, 456) par rapport à une mesure de similitude prédéterminée, la deuxième quantité de possibles évolutions de courbe de référence (452, 454, 456) décrivant des évolutions admissibles du deuxième segment de ligne courbe (148) pour différents paramètres du deuxième segment de ligne courbe (148),
et/ou à identifier, dans le segment de l'image (112; 310; 812; 1300) à analyser formé par la pluralité (360, 364, 370, 374, 380) de lignes de trame (320, 330, 332, 334, 368, 372) et/ou de colonnes de trame (322, 336, 338, 340, 362, 366), une évolution de courbe formant le troisième segment de ligne courbe (150) en vérifiant si le segment d'image (1320, 1330) à analyser contient une évolution de courbe qui est suffisamment similaire à une évolution de courbe de référence parmi une troisième quantité de possibles évolutions de courbe de référence par rapport à une mesure de similitude prédéterminée, la troisième quantité d'évolutions de courbe de référence décrivant des évolutions admissibles du troisième segment de ligne courbe (150) pour différents paramètres du troisième segment de ligne courbe (150).

6. Dispositif (100; 800) selon la revendication 5, dans lequel la quantité de possibles évolutions de courbe de référence (452, 454, 456) décrivant des évolutions de courbe qui se différencient quant à leur position et/ou leur forme, à une évolution de courbe parmi la pluralité de possibles évolutions de courbe de référence (452, 454, 456) étant associé au moins un paramètre caractérisant la position et/ou la forme, et le moyen de détermination de coordonnées (100; 400; 814, 830, 832, 840, 842) étant conçu de manière à dériver le paramètre du premier segment de ligne courbe (146) qui se rapproche de l'ellipse (134) au premier point d'ellipse (136), le paramètre du deuxième segment de ligne courbe (148) qui se rapproche de l'ellipse (134) au deuxième point d'ellipse (138), ou le paramètre du troisième segment de ligne courbe (150) qui se rapproche de l'ellipse (134) au troisième point d'ellipse (140) de celle des évolutions de courbe parmi la pluralité de possibles évolutions de référence (452, 454, 456) qui est suffisamment similaire à une évolution de courbe dans le segment d'image (1320, 1330) par rapport à une mesure de similitude prédéterminée.

7. Dispositif (100; 800) selon la revendication 5 ou 6, dans lequel les évolutions de courbe sont choisies parmi la pluralité de possibles évolutions de courbe référence (452, 454, 456) de sorte qu'elles se rapprochent d'ellipses de forme et/ou de position différente au premier point d'ellipse ou au deuxième point d'ellipse ou au troisième point d'ellipse.

8. Dispositif (100; 800) selon l'une des revendications 5 à 7, dans lequel les évolutions de courbe sont choisies parmi la pluralité de possibles évolutions de courbe de référence (452, 454, 456) de sorte qu'elles décrivent des segments de courbes circulaires de position différente et/ou de rayon différent.

9. Dispositif (100; 800) selon l'une des revendications 1 à 8, dans lequel le moyen de détermination de coordonnées (110; 400; 814, 830, 832, 840, 842) est conçu de manière à appliquer une identification de modèle (420; 830, 832, 840, 842) à une pluralité de segments à analyser (360, 364, 370, 374, 380; 1320, 1330) de l'image (112; 310; 812; 1300), pour identifier dans la pluralité de segments d'image à analyser (360, 364, 370, 374, 380; 1320, 1330) une évolution de courbe formant le premier segment de ligne courbe (136), et à déterminer, sur base de celui parmi la pluralité de segments (360, 364, 370, 374, 380; 1320, 1330) de l'image (112; 310; 812; 1300) dans lequel a été identifié le premier segment de ligne courbe (136), un paramètre de position du premier segment de ligne courbe (136).

10. Dispositif (100; 800) selon la revendication 9, dans lequel le moyen de détermination de coordonnées (110; 400; 814, 830, 833, 840, 842) est conçu de manière à appliquer l'identification de modèle (400; 830, 832, 840, 842) à la pluralité de segments à analyser (360, 364, 370, 374, 380; 1320, 1330) de l'image (112; 310; 812; 1300), les segments à analyser étant choisis de sorte qu'au moins deux segments d'image parmi la pluralité de segments à analyser (360, 364, 370, 374, 380; 1320, 1330) se recouvrent.

11. Dispositif (100; 800) selon l'une des revendications 1 à 10, dans lequel le moyen de détermination de coordonnées (110; 400; 814, 830, 832, 840, 842) est conçu de manière à déterminer, comme coordonnée additionnelle, au moins une autre coordonnées ($x_4$', $y_4$'; $x_2$, $y_2$) du troisième point d'ellipse (140; 230) ou au moins une coordonnée ($x_2$', $y_2$'; $x_0$, $y_0$) d'un quatrième point d'ellipse (142; 232) représentant un point de l'ellipse (134; 220) situé le plus éloigné dans une direction opposée à la deuxième direction (132; y),
dans lequel le dispositif de calcul d'ellipse (120; 850) est conçu de manière à calculer un premier ensemble de paramètres d'ellipse comprenant au moins un paramètre d'ellipse, sur base des deux coordonnées ($x_1$', $y_1$'; $x_3$, $y_3$) du premier point d'ellipse (136; 226), des deux coordonnées ($x_3$', $y_3$'; $x_1$, $y_1$) du deuxième point d'ellipse (138; 228) et de la première coordonnée ($x_4$', $y_4$'; $x_2$, $y_2$) du troisième point d'ellipse (140; 230), ainsi qu'à calculer un deuxième ensemble de paramètres d'ellipse comprenant au moins un paramètre d'ellipse, sur base des deux coordonnées ($x_1$', $y_1$'; $x_3$, $y_3$) du premier point d'ellipse (136; 226), des deux coordonnées ($x_3$', $y_3$'; $x_1$, $y_1$) du deuxième point d'ellipse (138; 228) et de la coordonnée additionnelle ($x_4$', $y_4$', $x_2$, $y_2$'; $x_0$, $y_0$, $x_2$, $y_2$), et à calculer un ensemble résultat de paramètres d'ellipse ($x_m$', $y_m$', a', b', $\alpha$'; $x_m$, $y_m$, a, b, $\alpha$) par formation de valeur moyenne à l'aide du premier ensemble de paramètres d'ellipse et du deuxième ensemble de paramètres d'ellipse.

**12.** Dispositif (100; 800) selon l'une des revendications 1 à 11, dans lequel le moyen de calcul de coordonnées (110; 400; 814, 830, 832, 840, 842) est conçu de manière à déterminer deux coordonnées ($x_4$', $y_4$'; $x_2$, $y_2$) du troisième point d'ellipse (140; 230) représentant un point de l'ellipse (134; 320) situé le plus éloigné dans la deuxième direction (132; y), et deux coordonnées ($x_2$', $y_2$'; $x_0$, $y_0$) d'un quatrième point d'ellipse (142; 232) représentant un point de l'ellipse situé le plus éloigné dans une direction opposée à la deuxième direction (132; y), et à sélectionner par ailleurs une pluralité d'ensembles différents de trois points d'ellipse parmi le premier point d'ellipse (136; 226), le deuxième point d'ellipse (138; 228), le troisième point d'ellipse (140; 230) et le quatrième point d'ellipse (142; 232), à déterminer pour les ensembles de points d'ellipse (136, 138, 140, 142; 226, 228, 230, 232) des ensembles de paramètres d'ellipse ($x_m$', $y_m$', a', b', $\alpha$'; $x_m$, $y_m$, a, b, $\alpha$) associés, et à calculer comme information relative à la forme et/ou à la position de l'ellipse (134; 220) un ensemble de paramètres d'ellipse moyen par établissement de la moyenne des ensembles de paramètres d'ellipse associés aux ensembles de points d'ellipse.

**13.** Dispositif selon l'une des revendications 1 à 12, dans lequel le moyen de détermination de coordonnées (110; 400; 814, 830, 832, 840, 842) est conçu de manière à déterminer deux coordonnées ($x_4$', $y_4$'; $x_2$, $y_2$) du troisième point d'ellipse (140; 230) représentant un point de l'ellipse (134; 220) situé le plus éloigné dans la deuxième direction (132; y), et

dans lequel le moyen de calcul d'ellipse (120; 850) est par ailleurs conçu de manière à calculer, à partir des deux coordonnées ($x_1$', $y_1$'; $x_3$, $y_3$) du premier point d'ellipse (136; 226) et des deux coordonnées ($x_3$', $y_3$'; $x_1$, $y_1$) du deuxième point d'ellipse (138; 228), des coordonnées de point central ($x_m$, $y_m$) de l'ellipse (134; 220), à effectuer une transformation de coordonnées ($x_1$', $y_1$', $x_4$', $y_4$'; $x_3$, $y_3$, $x_2$, $y_2$) du premier point d'ellipse (136; 226) et du troisième point d'ellipse (140; 230), pour obtenir des coordonnées transformées ($x_x$, $y_x$, $x_y$, $y_y$) du premier point d'ellipse (136; 226) et du troisième point d'ellipse (138; 228), la transformation de coordonnées étant conçue de manière à décaler un point central (240) de l'ellipse (134; 220) décrit par les coordonnées de point central ($x_m$, $y_m$) dans une origine de coordonnées (264), à calculer une deuxième coordonnées transformée estimée $y_{y,calc}$ du troisième point d'ellipse à l'aide de l'équation de détermination

$$1 = \frac{y_{y,calc} \cdot x_y}{y_x \cdot x_x} \ ,$$

$x_x$ étant la première coordonnée transformée du premier point d'ellipse (136; 226), $y_x$ étant la deuxième coordonnée transformée du premier point d'ellipse (136; 226), et $x_y$ étant la première coordonnée transformée du troisième point d'ellipse (140; 230), et à décider, sur base d'un écart entre la deuxième coordonnée transformée estimée $y_{y,calc}$ du troisième point d'ellipse (140; 230) et la deuxième coordonnée transformée $y_y$ du troisième point d'ellipse (140; 230) déterminée par la transformation de coordonnées, si le troisième point d'ellipse (140; 230) appartient à l'ellipse (134; 220) décrite par le premier point d'ellipse (136; 226) et le deuxième point d'ellipse (138; 228).

**14.** Dispositif (100; 800) selon l'une des revendications 1 à 13, dans lequel le moyen de calcul d'ellipse (120; 850) est conçu de manière à calculer une première coordonnée de point central $x_m$ de l'ellipse (134; 220) sur base de la première coordonnée $x_3$ du premier point d'ellipse (226) et de la première coordonnée $x_1$ du deuxième point d'ellipse (228) à l'aide de la règle de calcul

$$x_m = \frac{x_3 + x_1}{2} \, ,$$

et/ou à calculer une deuxième coordonnée de point central $y_m$ de l'ellipse (134; 220) sur base de la deuxième coordonnée $y_3$ du premier point d'ellipse (226) et de la deuxième coordonnée $y_1$ du deuxième point d'ellipse (228) à l'aide de la règle de calcul

$$y_m = \frac{y_3 + y_1}{2} .$$

**15.** Dispositif (100; 800) selon la revendication 14, dans lequel le moyen de calcul d'ellipse (120; 850) est par ailleurs conçu de manière à calculer un angle de rotation a de l'ellipse (134; 220), une longueur a d'un premier demi-axe de l'ellipse (134; 220) et/ou une longueur b d'un deuxième demi-axe de l'ellipse (134; 220) à l'aide des équations de détermination suivantes:

$$k_x = \frac{x_x}{y_x} ; \qquad k_y = \frac{y_y}{x_y} ;$$

$$u = -\frac{1}{2} \cdot (k_x - k_y) \pm \frac{1}{2} \cdot \sqrt{(k_x - k_y)^2 + 4} ;$$

$$\tan(\alpha) = u ;$$

$$\frac{1}{\rho^2} = \frac{b^2}{a^2} = \frac{k_x \cdot u - 1}{u_2 + k_x \cdot u} \quad \text{ou} \quad \frac{1}{\rho^2} = \frac{b^2}{a^2} = \frac{k_y \cdot u - u^2}{k_y \cdot u + 1} ;$$

$$b = \frac{\rho \cdot \tan\alpha \cdot \left( x_x \cdot \sqrt{\dfrac{\rho^2 + \tan^2\alpha}{\rho^2}} - x_y \cdot \sqrt{\dfrac{\rho^2 \cdot \tan^2\alpha + 1}{\rho^2 \cdot \tan^2\alpha}} \right)}{\sin\alpha \cdot (\tan^2\alpha + 1)} ;$$

$$a = \rho \cdot b,$$

où $u$, $k_x$ und $k_y$ sont des grandeurs auxiliaires;
où $\rho$ décrit un rapport entre une longueur a du premier demi-axe et une longueur b du deuxième demi-axe;
où un signe dans l'équation de détermination pour u est fixé sur base des grandeurs auxiliaires $k_x$ et $k_y$ en fonction d'une position du premier point d'ellipse transformé et/ou du deuxième point d'ellipse transformé; et
où au moins l'une des deux équations de détermination de $\rho$ est utilisée en fonction de $k_x$, $k_y$ et u.

**16.** Dispositif (100; 800) selon l'une des revendications 1 à 15, dans lequel le moyen de détermination de coordonnées (110; 400; 814, 830, 832, 840, 842) présente un moyen d'identification de modèle (420; 600; 830, 832, 840, 842) qui est conçu de manière à recevoir une pluralité de lignes de trame à analyser (320, 330, 332, 334, 368, 372) ou de colonnes de trame à analyser (322, 336, 338, 340, 362, 366) sous forme d'une pluralité de signaux dans le temps parallèles (612, 614, 616), et à transmettre les signaux dans le temps (612, 614, 616) à une vitesse différente en parallèle à travers une pluralité d'étages (610) connectés l'un derrière l'autre,
dans lequel au moins un étage prédéterminé (610) comporte un moyen d'addition (630) qui est conçu de manière à additionner les signaux sortant de l'étage prédéterminé (610), pour former une somme de colonne (632),

et dans lequel le moyen d'identification de modèle (600) est par ailleurs conçu de manière à évaluer la somme de colonne (632), pour déterminer une information relative à un segment de ligne courbe (146, 148, 150, 152) contenu dans les lignes de trame (320, 330, 332, 334, 368, 372) ou colonnes de trame (322, 336, 338, 340, 362, 366) reçues par le moyen d'identification de modèle (600),

dans lequel l'information comprend au moins un paramètre du segment de ligne courbe (146, 148, 150, 152) contenu dans les lignes de trame (320, 330, 332, 334, 368, 372) ou colonnes de trame (322, 336, 338, 340, 362, 366) reçues.

17. Dispositif (100; 800) selon la revendication 16, dans lequel l'étage prédéterminé (610) présente par ailleurs un moyen d'identification de valeur de seuil (634) qui est conçu de manière à recevoir et identifier la somme de colonne (632) lorsqu'au moins un nombre prédéterminé de signaux (612, 614, 616) à la sortie de l'étage prédéterminé (610) sont actifs simultanément,

dans lequel le moyen d'identification de modèle (420; 600; 830, 832, 840, 842) est par ailleurs conçu de manière à évaluer un signal de sortie du moyen d'identification de valeur de seuil (634), pour déterminer au moins un paramètre d'un segment de ligne courbe (146, 148, 150, 152) contenu dans les lignes de trame (320, 330, 332, 334, 368, 372) ou colonnes de trame (322, 336, 338, 340, 362, 366) reçues.

18. Dispositif (100; 800) selon la revendication 16 ou 17, dans lequel le moyen d'identification de modèle (420; 600; 830, 832, 840, 842) est conçu de manière à distorsionner pas à pas une évolution de courbe recourbée (1410) décrite par les signaux (612, 614, 616; 1510) reçus par le moyen d'identification de modèle (420; 600; 830, 832, 840, 842), lors du passage à travers les étages connectés l'un derrière l'autre (610; 1530), sur base d'une propagation à vitesse différente des signaux (612, 614, 616; 1510), pour obtenir une description distorsionnée (1420, 1430, 1440) de l'évolution de courbe recourbée, et pour identifier le moment où il est décrit par la description distorsionnée une ligne approximativement droite (1450) qui est représentée par une pluralité de signaux (612, 614, 616; 1510) simultanément actifs dans un étage déterminé (610; 1530).

19. Dispositif (100; 800) selon l'une des revendications 16 à 18, dans lequel l'au moins un étage (310; 1530) du moyen d'identification de modèle (420; 600; 830, 832, 840, 842) est conçu de manière à retarder avec une temporisation différente plusieurs signaux (612, 614, 616; 1510) lors de la transmission à travers l'étage (610; 1530).

20. Dispositif (100; 800) selon l'une des revendications 16 à 19, dans lequel le moyen d'identification de modèle (420; 600; 830, 832, 840, 842) est conçu par la fixation de temporisations différentes (620, 624) lors de la transmission des signaux (612, 614, 616) à travers les étages (610) de sorte qu'un segment de ligne courbe circulaire contenu dans les lignes de trame (320, 330, 332, 334, 368, 372) ou colonnes de trame (322, 336, 338, 340, 362, 366) reçues par le moyen d'identification de modèle soit, après le passage dans un nombre d'étages (610; 1530), déformé pour obtenir une ligne droite,

dans lequel le moyen d'identification de modèle (420; 600; 830, 832, 840, 842) est conçu de manière à identifier une présence d'une ligne approximativement droite et à constater le nombre d'étages après le passage desquels la ligne droite est présente, et

dans lequel le moyen d'identification de modèle (420; 600; 830, 832, 840, 842) est par ailleurs conçu de manière à dériver du nombre d'étages parcourus jusqu'à la présence d'une ligne approximativement droite au moins un paramètre du segment de ligne courbe circulaire reçu par le moyen d'identification de modèle.

21. Dispositif (100; 800) selon l'une des revendications 10 à 20, dans lequel le moyen d'identification de modèle (420; 600; 830, 832, 840, 842) est conçu, par la fixation de temporisations différentes (620, 624) lors de la transmission des signaux (612, 614,616) à travers les étages (610), de sorte qu'un segment de ligne courbe circulaire contenu dans les lignes de trame (320, 330, 332, 334, 368, 372) ou colonnes de trame (322, 336, 338, 340, 362, 366) reçues par le moyen d'identification de modèle (420; 600; 830, 832, 840, 842) soit, après le passage d'un nombre d'étages, approximativement déformé pour obtenir une ligne droite,

dans lequel le moyen d'identification de modèle est conçu de manière à identifier une présence d'une ligne approximativement droite, et à dériver, sur base du moment où est présente la ligne approximativement droite, au moins un paramètre du segment de ligne courbe circulaire reçu par le moyen d'identification de modèle.

22. Dispositif (100; 800) selon l'une des revendications 10 à 21, dans lequel le moyen de détermination de coordonnées (110; 412, 420, 430; 840, 820, 822, 830, 832) est conçu de manière à alimenter deux fois l'image (112; 310; 812) vers le moyen d'identification de modèle (420; 600; 820, 822, 830, 832) sous forme de lignes de trame à analyser (320, 330, 332, 334, 368, 372) transmis successivement,

dans lequel le moyen de détermination de coordonnées est par ailleurs conçu de manière à alimenter l'image vers le moyen d'identification de modèle en vue d'une détermination des deux coordonnées $(x_3, y_3)$ du premier point

d'ellipse (226) en commençant par une ligne de trame (320) de l'image située au premier bord de l'image, et à alimenter l'image vers le moyen d'identification de modèle en vue d'une détermination des deux coordonnées ($x_1$, $y_1$) du deuxième point d'ellipse (228) en commençant par une ligne de trame (334) de l'image située à un deuxième bord de l'image, le premier bord de l'image étant opposé au deuxième bord de l'image, et dans lequel le moyen d'identification de modèle est conçu de manière à identifier des segments de ligne courbes à direction de courbure prédéterminée.

23. Dispositif (100; 800) selon l'une des revendications 10 à 22, dans lequel le moyen de détermination de coordonnées (110; 420; 814, 820, 822, 830, 832) comprend un premier moyen d'identification de modèle (830) et un deuxième moyen d'identification de modèle (832), dans lequel le premier moyen d'identification de modèle (830) est conçu de manière à identifier des segments de ligne courbe avec une première direction de courbure prédéterminée, dans lequel le deuxième moyen d'identification de modèle (832) est conçu de manière à identifier des segments de ligne courbe avec une deuxième direction de courbure opposée à la première direction de courbure prédéterminée, et dans lequel le moyen de détermination de coordonnées est conçu de manière à alimenter l'image vers le premier moyen d'identification de modèle (830) en vue d'une détermination des deux coordonnées ($x_3$, $y_3$) du premier point d'ellipse (226) en commençant par une ligne de trame (320) située à un premier bord de l'image, et à alimenter l'image vers le deuxième moyen d'identification de modèle (832) en vue d'une détermination des deux coordonnées ($x_1$, $y_1$) du deuxième point d'ellipse (228) en commençant par une ligne de trame (320) située au premier bord de l'image.

24. Dispositif (100; 800) selon l'une des revendications 10 à 23, dans lequel le moyen d'identification de modèle (412, 420; 600) est conçu de manière à traiter une première pluralité (370) de lignes de trame à analyser ainsi qu'une deuxième pluralité (374) de lignes de trame à analyser, la première pluralité de lignes de trame à analyser et la deuxième pluralité de lignes de trame à analyser se recouvrant, et
dans lequel le moyen d'identification de modèle (420) est par ailleurs conçu de manière à déterminer, sur base de si l'évolution de courbe à identifier (146, 148, 150, 152) est identifiée lors d'une analyse de la première pluralité de lignes de trame à analyser ou lors d'une analyse de la deuxième pluralité de lignes de trame à analyser, un paramètre de position de l'évolution de courbe à identifier.

25. Dispositif (100; 800) selon l'une des revendications 1 à 24, dans lequel la première direction (130; x) est orthogonale à la deuxième direction (132; y).

26. Dispositif (100; 800) selon l'une des revendications 1 à 25, dans lequel le dispositif pour déterminer une information sur la forme et/ou la position de l'ellipse est conçu de manière à recevoir, comme image graphique (112; 812), une reproduction de côté binaire (310), la reproduction de côté binaire décrivant au moins un côté par au moins une ligne (350) sous forme de pixels actifs (312), tandis que les endroits dans l'image de côté auxquels n'est pas présent de côté sont décrits par des pixels non actifs (314).

27. Dispositif (100; 800) selon l'une des revendications 1 à 26, dans lequel le dispositif est par ailleurs conçu de manière à dériver l'image graphique (112; 812) de données vidéo d'une source de données vidéo.

28. Dispositif (100; 800) selon l'une des revendications 1 à 27, comprenant par ailleurs une interface de données ou un dispositif d'affichage qui est conçu de manière à sortir l'information relative à la forme et/ ou la position de l'ellipse par rapport à un moyen de traitement électrique ou un utilisateur humain.

29. Dispositif (100; 800) selon l'une des revendications 1 à 28, dans lequel le dispositif pour déterminer une information relative à la forme et/ou la position d'une ellipse est conçu de manière à prétraiter l'image graphique (112; 812) par une binarisation de valeur de seuil, dans laquelle est associée à chaque pixel de l'image graphique, en fonction d'un résultat de comparaison d'une valeur de couleur et/ou d'une valeur de luminosité avec une valeur de seuil, une valeur de clair ou une valeur de sombre, pour obtenir une image binarisée,
et par ailleurs à appliquer une détection de côté à l'image binarisée, dans lequel la détection de côté est conçue de manière à générer, à partir de l'image binarisée, une image de côté dans laquelle les transitions en forme de côté de la valeur de clair à la valeur de sombre dans l'image binarisée sont **caractérisées** comme côté en forme de ligne, dans lequel le moyen de détermination de coordonnées est par ailleurs conçu de manière à traiter l'image de côté.

30. Dispositif (100; 800) selon l'une des revendications 1 à 29, dans lequel le dispositif est par ailleurs conçu de manière à obtenir l'image graphique d'une caméra vidéo qui est disposée de manière à capter une pupille d'un oeil humain, et dans lequel le dispositif comprend par ailleurs une interface de données qui est conçue de manière à transmettre l'information relative à la forme et/ou la position de l'ellipse à un dispositif pour calculer une direction de regard de l'oeil humain.

**31.** Dispositif (100; 800) selon l'une des revendications 1 à 30, dans lequel le dispositif comprend par ailleurs une interface qui est conçue de manière à sortir l'information relative à la forme et/ou la position de l'ellipse vers un moyen de positionnement mécanique qui est conçu de manière à provoquer un mouvement mécanique en fonction de l'information relative à la forme et/ ou la position de l'ellipse.

**32.** Dispositif (100; 800) selon l'une des revendications 1 à 31, dans lequel le moyen de détermination de coordonnées est conçu de manière à identifier un premier segment de ligne courbe qui se rapproche de l'ellipse (134, 220) au premier point d'ellipse (136; 226) ou aux environs du premier point d'ellipse (136; 226), pour déterminer au moins un paramètre du premier segment de ligne courbe identifié (146), et à déterminer, sur base de l'au moins un paramètre du premier segment de ligne courbe identifié (146), les coordonnées $(x_1', y_1' ; x_3, y_3)$ du premier point d'ellipse (136; 226), et

à identifier au moins un deuxième segment de ligne courbe qui se rapproche de l'ellipse (134;220) au deuxième point d'ellipse (138; 228) ou aux environs du deuxième point d'ellipse (138; 228), pour déterminer au moins un paramètre du deuxième segment de ligne courbe identifié (148), et à déterminer, sur base de l'au moins un paramètre du deuxième segment de ligne courbe identifié (148), les coordonnées $(x_3', y_3'; x_1, y_1)$ du deuxième point d'ellipse (138; 228).

**33.** Procédé (1700) pour déterminer une information (122; 1780) relative à une forme et/ou une position d'une ellipse (134; 220) dans une image graphique (112; 812; 1710), l'image (112; 812; 1710) présentant une première direction (130; x) et une deuxième direction (132; y), aux étapes suivantes consistant à:

déterminer (1720) deux coordonnées $(x_1', y_1'; x_3, y_3)$ d'un premier point d'ellipse (136; 226) représentant un point de l'ellipse (134; 220) situé le plus éloigné dans la première direction (130; x);
déterminer (1730) deux coordonnées $(x_3', y_3'; x_1, y_1)$ d'un deuxième point d'ellipse (138; 228) représentant un point de l'ellipse (134; 220) situé le plus éloigné dans une direction opposée à la première direction (130; x),

dans lequel la détermination (1720) des deux coordonnées $(x_1', y_1'; x_3, y_3)$ du premier point d'ellipse (136; 226) comprend une détermination d'au moins un paramètre d'un premier segment de ligne courbe (146) qui se rapproche de l'ellipse au premier point d'ellipse ou aux environs du premier point d'ellipse, ainsi qu'une détermination des coordonnées $(x_1', y_1'; x_3, y_3)$ du premier point d'ellipse (136; 226) sur base de l'au moins un paramètre du premier segment de ligne courbe (146), et

dans lequel la détermination (1730) des deux coordonnées $(x_3', y_3'; x_1, y_1)$ du deuxième point d'ellipse (138; 228) comprend une détermination d'au moins un paramètre d'un deuxième segment de ligne courbe (148) qui se rapproche de l'ellipse au deuxième point d'ellipse (138; 228) ou aux environs du deuxième point d'ellipse (138/228), ainsi qu'une détermination des coordonnées $(x_3', y_3'; x_1, y_1)$ du deuxième point d'ellipse (138; 228) sur base de l'au moins un paramètre du deuxième segment de ligne courbe (148); et

calculer (1740) au moins un paramètre $(x_m, y_m)$ de l'ellipse sur base des deux coordonnées $(x_1', y_1'; x_3, y_3)$ du premier point d'ellipse et des deux coordonnées $(x_3', y_3'; x_1, y_1)$ du deuxième point d'ellipse,
l'au moins un paramètre d'ellipse $(x_m, y_m)$ représentant l'information relative à la forme et/ou la position de l'ellipse.

**34.** Procédé selon la revendication 33, dans lequel la détermination (1720) des deux coordonnées $(x_1', y_1'; x_3, y_3)$ du premier point d'ellipse (136; 226) comprend une identification d'un premier segment de ligne courbe qui se rapproche de l'ellipse au premier point d'ellipse ou aux environs du premier point d'ellipse, une détermination d'au moins un paramètre du premier segment de ligne courbe identifié (146) ainsi qu'une détermination des coordonnées $(x_1', y_1'; x_3, y_3)$ du premier point d'ellipse (136; 226) sur base de l'au moins un paramètre du premier segment de ligne courbe identifié (146), et

dans lequel la détermination (1730) des deux coordonnées $(x_3', y_3'; x_1, y_1)$ du deuxième point d'ellipse (138; 228) comprend une identification d'un deuxième segment de ligne courbe qui se rapproche de l'ellipse au deuxième point d'ellipse (138; 228) ou aux environs du deuxième point d'ellipse (138; 228), une détermination d'au moins un paramètre du deuxième segment de ligne courbe identifié (148) qu'une détermination des coordonnées $(x_3', y_3'; x_1, y_1)$ du deuxième point d'ellipse (138; 228) sur base de l'au moins un paramètre du deuxième segment de ligne courbe identifié (148).

**35.** Programme d'ordinateur pour réaliser le procédé selon la revendication 33 ou 34 lorsque le programme d'ordinateur est exécuté sur un ordinateur.

Fig. 1

Fig. 2a

$$X_y = X_2 - X_m$$
$$y_y = y_2 - y_m$$

$$X_x = X_3 - X_m$$
$$y_x = y_3 - y_m$$

Fig. 2b

Fig. 3

400

gerastertes Bild

410

| Bildausschnitt-Auswahleinrichtung |
optional

412

Bild oder Bildausschnitt

414

| Mustererkennungseinrichtung |
| Ähnlichkeit |

420

Menge von Referenz-Kurven-Verläufen

Parameter eines identifizierten gebogenen Liniensegments

| Koordinatenberechnungseinrichtung |
optional:

430

Koordinaten eines Ellipsenpunktes

440

Fig. 4a

Fig. 4b

Fig. 5a

Fig. 5b

Fig. 6

Fig. 7a

Fig. 7b

Fig. 8

910

Bild oder
Bildausschnitt

930

erste Rasterzeile
zuerst

erste Rasterzeile
zuerst

Mustererkennungseinrichtung 1

Mustererkennungseinrichtung 2

920

922

950

Bild oder
Bildausschnitt

980

erste Rasterzeile
zuerst

erste Rasterzeile
zuerst

Mustererkennungseinrichtung 1´

Mustererkennungseinrichtung 2´

990

992

Fig. 9

Fig. 10

Fig. 11

Fig. 12

Fig. 13

Fig. 14

Fig. 15

Fig. 16a

Fig. 16b

1700

1710

grafisches Bild

Ermitteln von zwei Koordinaten
eines ersten Ellipsenpunktes
durch Bestimmen mindestens eines
Parameters eines ersten gebogenen
Liniensegments, das die Ellipse
an dem ersten Ellipsenpunkt
annähert

1720

Ermitteln von zwei Koordinaten
eines zweiten Ellipsenpunktes
durch Bestimmen mindestens eines
Parameters eines zweiten gebogenen
Liniensegments, das die Ellipse
an dem zweiten Ellipsenpunkt
annähert

1730

Berechnen mindestens eines
Ellipsenparameters der Ellipse
basierend auf den zwei Koordinaten
des ersten Ellipsenpunktes und
den zwei Koordinaten des
zweiten Ellipsenpunktes

1740

1780

Fig. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3069654 A
- EP 1032891 B1
- EP 1032891 A

**In der Beschreibung aufgeführte Nicht-Patentliteratur**

- Machine Analysis of Bubble Chamber Pictures. **PAUL V.C. HOUGH.** Proceedings of the International Conference on high-energy accelerators and instrumentation. 14. September 1959

- **A. GONEID ; S. EL-GINDI ; A. SEWISY.** A method for a Hough-transform detection of circles and ellipses using a one-dimensional array. *International Conference on Computational Cybernetics and Simulation,* 12. Oktober 1997
- **C. T. HO ; L. H. CHEN.** A fast ellipse/circle detector using geometric symmetry. *Veröffentlicht: Pattern Recognition,* Januar 1995, vol. 28